# EUROPÄISCHE PATENTSCHRIFT

(11) **EP 0 847 885 B1**
(45) Veröffentlichungstag und Bekanntmachung des Hinweises auf die Patenterteilung: **02.11.2000**
(21) Anmeldenummer: 97118422.1
(22) Anmeldetag: 23.10.1997
(51) Int. Cl.: B60G 17/056

(54) **Mit Druckmittel arbeitende Federeinrichtung für ein Fahrzeug**
Pressure fluid suspension for a vehicle
Suspension à fluide sous pression pour un véhicule

(30) Priorität: 12.12.1996 DE 19651673
(43) Veröffentlichungstag der Anmeldung: 17.06.1998
(73) Patentinhaber: WABCO GmbH & Co. OHG, 30453 Hannover (DE)
(72) Erfinder: Bergemann, Klaus-Dieter, 30627 Hannover (DE); Meier, Jörg, 31840 Hess. Oldendorf (DE); Geiger, Hartmut, 30823 Garbsen (DE); Becher, Hans-Otto, Dr., 30177 Hannover (DE)
(74) Vertreter: Schrödter, Manfred, Dipl.-Ing.

(56) Entgegenhaltungen:
- EP-A- 0 343 391
- DE-A- 4 238 790
- FR-A- 2 578 617

## Beschreibung

Die Erfindung betrifft eine mit Druckmittel arbeitende Federeinrichtung für ein Fahrzeug gemäß dem Oberbegriff des Patentanspruchs 1.

Eine derartige Federeinrichtung ist aus der DE 42 38 790 A1 bekannt.

Diese Federeinrichtung ist als Luftfederaggregat ausgebildet und besitzt eine bei Federhüben ihr Volumen verändernde, z. B. als Luftfederbalg ausgebildete Hauptkammer, sowie eine Zusatzkammer, die ein im wesentlichen konstantes Volumen aufweist. Die Hauptkammer ist zur Veränderung der Progressivität der Federkräfte der Federeinrichtung über eine Ventileinrichtung mit der Zusatzkammer verbindbar bzw. gegen diese absperrrbar.

Da bei geschlossener Ventileinrichtung zwischen der Hauptkammer und der Zusatzkammer, je nach Federungshub oder Beladung, relativ große Druckdifferenzen auftreten können, die bei schnellem in die Offenstellung bringen der Ventileinrichtung stoßartige Kräfte oder Niveauänderungen verursachen können, ist die Ventileinrichtung so ausgebildet, daß sie schnell von ihrer ihren größten Durchlaßquerschnitt aufweisenden, die Hauptkammer mit der Zusatzkammer verbindenden Offenstellung in ihre die Hauptkammer gegen die Zusatzkammer absperrende Schließstellung, jedoch verlangsamt von ihrer Schließstellung in ihre Offenstellung bringbar ist.

Beim Öffnen durchläuft die Ventileinrichtung zuerst eine Voröffnungsphase, in der nur geringe Strömungen ermöglicht werden, so daß eine Angleichung der Drücke in Hauptkammer und Zusatzkammer erst verlangsamt erfolgt, bevor die beiden Kammern über den vollständig freigegebenen Durchlaßquerschnitt der Ventileinrichtung wieder miteinander verbunden sind.

Die bekannte Ventileinrichtung ist so ausgebildet, daß beim Öffnungsvorgang ihr Durchlaßquerschnitt zeitabhängig vergrößert wird. Der Druckausgleich zwischen der Hauptkammer und der Zusatzkammer muß also innerhalb einer vorbestimmten Zeit, in der die Ventileinrichtung von ihrer Schließstellung in ihre ihren größten Durchlaßquerschnitt aufweisende Offenstellung gebracht wird, abgeschlossen sein. Das bedeutet, daß die Ventileinrichtung, bzw. der Steuermechanismus zum Öffnen der Ventileinrichtung, genau auf die Volumina von Hauptkammer und Zusatzkammer abgestimmt werden muß, damit die Ventileinrichtung beim Öffnungsvorgang nicht schon dann ihren größten Durchlaßquerschnitt erreicht hat, wenn der Druckausgleichsvorgang noch nicht abgeschlossen ist.

Der Erfindung liegt die Aufgabe zugrunde, eine mit Druckmittel arbeitende Federeinrichtung der eingangs erwähnten Art zu schaffen, die so ausgebildet ist, daß die Ventileinrichtung erst dann ihren größten Durchlaßquerschnitt freigibt, wenn der Druckausgleich zwischen dem Druck in der Hauptkammer und dem Druck in der Zusatzkammer im wesentlichen abgeschlossen ist.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, daß durch die druckabhängige Steuerung der Mittel zum Verändern des Durchlaßquerschnittes der Ventileinrichtung beim Öffnungsvorgang sichergestellt ist, daß die Ventileinrichtung erst dann ihren größten Durchlaßquerschnitt freigibt, wenn der Druckausgleich zwischen Hauptkammer und Zusatzkammer der Federeinrichtung im wesentlichen abgeschlossen ist.

Gemäß den in den Unteransprüchen angegebenen Ausführungen der Erfindung weist die Ventileinrichtung direkt vom Druckmittel in der Hauptkammer und der Zusatzkammer gesteuerte Mittel zum verlangsamten Verändern des Durchlaßquerschnittes der Ventileinrichtung in Öffnungsrichtung der Ventileinrichtung auf. Der besondere Vorteil der so ausgebildeten Ventileinrichtung ist darin zu sehen, daß elektrische Mittel zum Messen des Druckes und zum Steuern der das verlangsamte Öffnen der Ventileinrichtung bewirkenden Mittel nicht mehr erforderlich sind.

Anhand der Zeichnung werden nachfolgend 4 Ausführungsbeispiele der Erfindung näher erläutert.

Es zeigen:
- Fig. 1: schematisch eine mit Druckmittel arbeitende Federeinrichtung mit Hauptkammer, Zusatzkammer und Ventileinrichtung;
- Fig. 2: die Federeinrichtung gemäß Fig. 1, wobei die Ventileinrichtung von einer Auswerte- und Steuereinrichtung in Abhängigkeit von den Ausgangssignalen von Drucksensoren, die den Druck in der Hauptkammer und in der Zusatzkammer messen, gesteuert wird;
- Fig. 3: eine vom Druckmittel der Hauptkammer und vom Druckmittel der Zusatzkammer direkt gesteuerte Ventileinrichtung;
- Fig. 4: die Ventileinrichtung gemäß Fig. 3 in zwei Schaltstellungen, wobei ein Ventil der Ventileinrichtung von einem lösbar in der Ventileinrichtung angeordneten ringförmigen Körper und einem Kolben gebildet wird;
- Fig. 5: einen Ausschnitt der Ventileinrichtung gemäß Fig. 4;
- Fig. 6: eine vom Druckmittel der Hauptkammer und vom Druckmittel der Zusatzkammer direkt gesteuerte Ventileinrichtung mit einem Ventil und zwei Drosseln; wobei die Drosseln von dem einen der beiden Ventilkörper des Ventils und zwei Drosselgliedern gebildet werden;
- Fig. 7: das in Fig. 6 gezeigte Ventil in einer von Fig. 6 abweichenden Betriebsstellung und
- Fig. 8: eine vom Druckmittel der Hauptkammer und vom Druckmittel der Zusatzkammer direkt gesteuerte Ventileinrichtung, bei welcher das Ventil zum Verbinden von Hauptkammer und Zusatzkammer von den Drosseln räumlich getrennt außen an der Ventileinrichtung angeordnet ist.

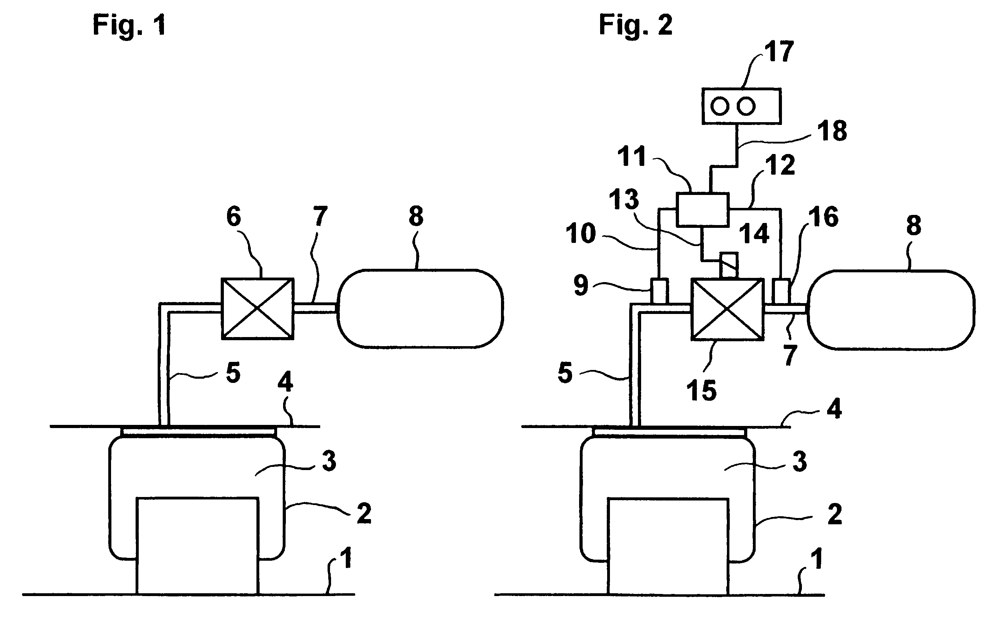

Die in Fig. 1 dargestellte mit Druckmittel arbeitende Federeinrichtung ist Teil der Luftfederanlage eines mehrachsigen Fahrzeugs. Der besseren Übersicht halber ist nur eine Federeinrichtung der Luftfederanlage des Fahrzeugs dargestellt.

Die Federeinrichtung weist eine Luftfeder (2, 3) auf, die im wesentlichen aus einem Luftfederbalg (2) mit einer als Hauptkammer (3) dienenden Druckmittelkammer besteht. Der Luftfederbalg (2) stützt sich mit seinem einen Ende auf einer Achse (1) des Fahrzeugs ab und ist mit seinem anderen Ende mit einem Aufbau (4) des Fahrzeugs verbunden. D. h., der Aufbau (4) des Fahrzeugs ist über die Luftfeder (2, 3) an der Achse (1) abgestützt. Über eine Druckmittelleitung (5) ist die Hauptkammer (3) der Luftfeder (2, 3) mit einem ersten Druckmittelanschluß einer Ventileinrichtung (6) verbunden. Ein zweiter Druckmittelanschluß der Ventileinrichtung ist über eine Druckmittelleitung (7) mit einem als Zusatzkammer (8) für die Luftfeder (2, 3) dienenden Tank verbunden. Die Ventileinrichtung (6) ist so ausgebildet, daß sie beim Öffnungsvorgang erst dann ihren größtmöglichen Durchlaßquerschnitt freigibt, wenn nach einer Voröffnungsphase (kleiner Durchlaßquerschnitt), in der sich die Drücke in der Hauptkammer (3) und in der Zusatzkammer (8) ausgleichen, die Drücke in der Hauptkammer (3) und in der Zusatzkammer (8) gleich oder wenigstens annähernd gleich sind.

Die in Fig. 2 gezeigte Federeinrichtung weist im wesentlichen den gleichen Aufbau auf wie die in Fig. 1 gezeigt Federeinrichtung, wobei jedoch die Ventileinrichtung als ein elektrisch steuerbares Ventil ausgebildet ist, zu dessen Ansteuerung die Ausgangssignale einer elektrischen Auswerte- und Steuereinrichtung dienen. Der besseren Übersicht halber sind die den in Fig. 1 gezeigten Bauteilen gleichen Bauteile mit gleichen Bezugsziffern versehen.

Wie bereits erwähnt, ist die Hauptkammer (3) der Luftfeder (2, 3) über die Druckmittelleitung (5), eine Ventileinrichtung (15) und die Druckmittelleitung (7) wahlweise mit der Zusatzkammer (8) verbindbar oder gegen diese absperrbar. In der von der Hauptkammer (3) zum ersten Druckmittelanschluß der als Proportionalmagnetventil ausgebildeten Ventileinrichtung (15) führenden Druckmittelleitung (5) ist eine erste Druckmeßeinrichtung (9) und in der vom zweiten Druckmittelanschluß der Ventileinrichtung (15) zur Zusatzkammer (8) führenden Druckmittelleitung (7) ist eine zweite Druckmeßeinrichtung (16) angeordnet. Jede der Druckmeßeinrichtungen (z. B. Druckmeßdosen) ist so ausgebildet, daß sie ein dem Druck in der ihr zugeordneten Druckmittelkammer -Hauptkammer (3) bzw. Zusatzkammer (8)- entsprechendes elektrisches Signal erzeugt. Die erste Druckmeßeinrichtung (9) ist über eine elektrische Leitung (10) mit einem ersten Eingang einer elektrischen Auswerte- und Steuereinrichtung (11) und die zweite Druckmeßeinrichtung (16) ist über eine elektrische Leitung (12) mit einem zweiten Eingang der Auswerte- und Steuereinrichtung (11) verbunden. Die erste Druckmeßeinrichtung (9), die zweite Druckmeßeinrichtung (16) und die Auswerte- und Steuereinrichtung (11) bilden eine erste Einrichtung zum Erkennen einer Druckdifferenz zwischen dem Druck in der Hauptkammer (3) und dem Druck in der Zusatzkammer (8).

Von einem Ausgang der Auswerte- und Steuereinrichtung (11) führt eine elektrische Steuerleitung (13) zu einem als elektrisch bzw. elektromagnetisch betätigbares Stellmittel dienenden, als Proportionalmagnet ausgebildeten Elektromagneten (14) der Ventileinrichtung (15). Der Elektromagnet (14) steht mit einem Ventilschließglied der Ventileinrichtung (15) in Wirkverbindung. Der Elektromagnet (14) dient als eine zweite Einrichtung zum Verändern des Durchlaßquerschnittes der Ventileinrichtung (15). Über eine elektrische Leitung (18) ist ein weiterer Eingang der Auswerte- und Steuereinrichtung (11) mit einer Auswahl- und Steuereinrichtung (17) verbunden, mit welcher die Federhärte gewählt und ein entsprechendes Steuersignal auf die Auswerte- und Steuereinrichtung (11) gegeben werden kann. Von der Auswahl- und Steuereinrichtung (17) und der Steuereinrichtung der Auswerte- und Steuereinrichtung (11) wird eine Einrichtung (11, 17) zum Aktivieren der Ventileinrichtung (15) gebildet.

Die Funktion der vorstehend beschriebenen Federeinrichtung wird nachfolgend näher erläutert.

Es wird angenommen, daß die Federeinrichtung eines Fahrzeugs auf "HART" eingestellt ist und der Druck in der Hauptkammer (3) der Luftfeder (2, 3) des Fahrzeugs höher ist als in der der Luftfeder (2, 3) zugeordneten Zusatzkammer (8). Die als Proportionalmagnetventil ausgebildete Ventileinrichtung (15) befindet sich in ihrer Schließstellung und sperrt so die Hauptkammer (3) und Zusatzkammer (8) gegeneinander ab. Am Elektromagneten (14) liegt kein elektrisches Steuersignal an.

Soll die Luftfeder (2, 3) weicher eingestellt werden, um einen höheren Fahrkomfort zu haben, wird eine entsprechende Taste an der Auswahl- und Steuereinrichtung (17) betätigt. Von der Auswahl- und Steuereinrichtung (17) gelangt über die elektrische Leitung (18) ein elektrisches Steuersignal zur Auswerte- und Steuereinrichtung (11) und aktiviert diese. Die Auswerte- und Steuereinrichtung (11) vergleicht die über ihren ersten Eingang und über ihren zweiten Eingang hereinkommenden elektrischen Signale der ersten Druckmeßeinrichtung (9) und der zweiten Druckmeßeinrichtung (16) miteinander.

Das elektriche Signal der ersten Druckmeßeinrichtung (9) stellt den Druck in der Hauptkammer (3) der Luftfeder (2, 3) und das elektrische Signal der zweiten Druckmeßeinrichtung (16) stellt den Druck in der Zusatzkammer (8) der Luftfeder (2, 3) dar. Wenn die Drücke in der Hauptkammer (3) und in der Zusatzkammer (8) unterschiedlich hoch sind, ermittelt die Auswerte- und Steuereinrichtung (11) die Druckdifferenz zwischen den beiden Drücken und erzeugt ein dem Differenzwert entsprechendes elektrisches Steuersignal. Dieses Steuersignal gelangt über die elektrische Steuerleitung (13) auf den Elektromagneten (14) der Ventileinrichtung (15), wodurch das Ventilschließglied der Ventileinrichtung (15) mittels des Elektromagneten (14) in der Weise verstellt wird, daß es den Durchlaßquerschnitt der Ventileinrichtung (15) um einen geringen Betrag freigibt. Mit abnehmendem Differenzwert zwischen dem Druckwert des Druckes in der Hauptkammer (3) und dem Druckwert des Druckes in der Zusatzkammer (8) ändert sich auch der Wert des elektrischen Signals, welches auf den Elektromagneten (14) der Ventileinrichtung (15) gegeben wird. Dies wirkt sich in der Weise aus, daß der Durchlaßquerschnitt der Ventileinrichtung (15) bei kleiner werdender Druckdifferenz vergrößert wird, wobei dann die Ventileinrichtung (15) ihren größtmöglichen Durchlaßquerschnitt freigibt, wenn die Differenz zwischen dem Druck in der Hauptkammer (3) und dem Druck in der Zusatzkammer (8) gleich oder annähernd Null ist.

Soll dagegen das nutzbare Volumen der Luftfeder (2, 3) verringert werden, um z. B. bei höherer Beladung oder bei schnellerer Fahrt des Fahrzeugs eine straffe Federung zu haben, wird eine entsprechende andere Taste der Auswahl- und Steuereinrichtung (17) betätigt. Das Betätigen der anderen Taste bewirkt einen Abfall des elektrischen Steuersignals am Elektromagneten (14) der Ventileinrichtung (15), wodurch das Ventilschließglied der Ventileinrichtung (15) fast schlagartig von seiner den Durchlaßquerschnitt der Ventileinrichtung (15) freigebenden Stellung in seine den Durchlaßquerschnitt vollständig verschließende Stellung gebracht wird. Die Hauptkammer (3) und die Zusatzkammer (8) sind dann wieder gegeneinander abgesperrt.

Es ist natürlich auch möglich, das Proportionalmagnetventil durch ein Dreistellungsventil zu ersetzen, wobei das Dreistellungsventil z. B. in einer ersten Stellung die Verbindung zwischen Hauptkammer (3) der Luftfeder (2, 3) und Zusatzkammer (8) unterbricht, in einer zweiten Stellung die Verbindung zwischen den beiden Kammern (3 und 8) gedrosselt und in einer dritten Stellung ungedrosselt freigibt.

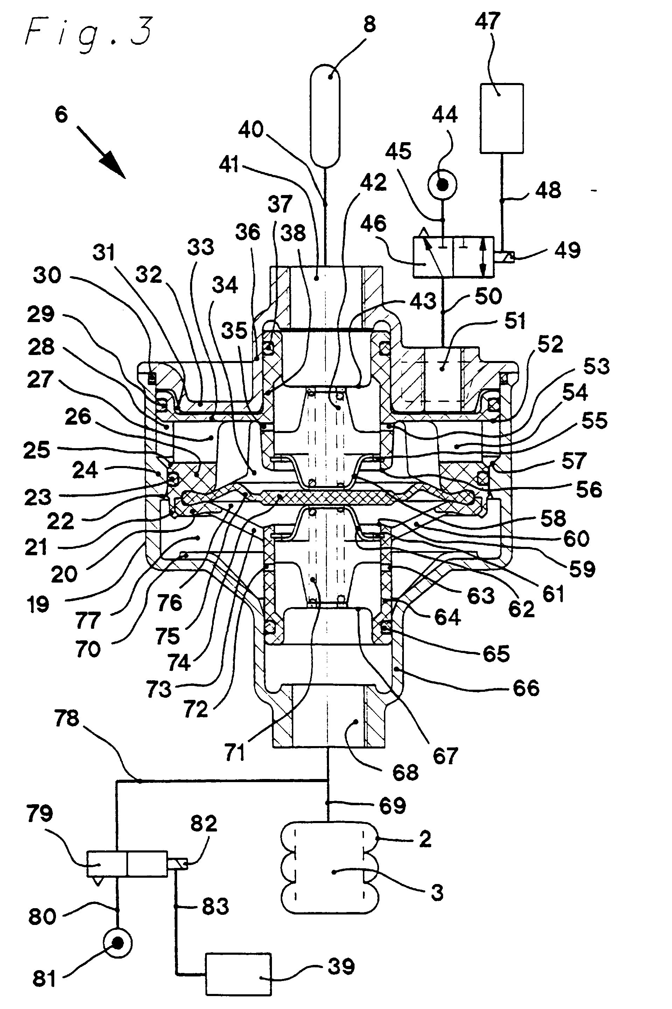

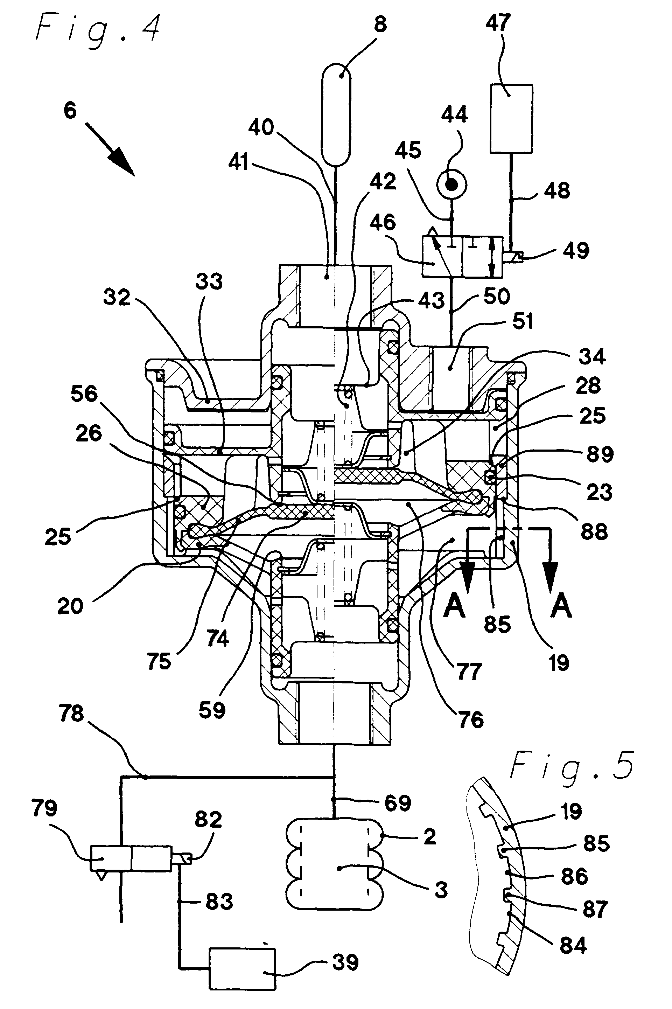

In den Fig. 3 und 4 ist eine Ventileinrichtung zur Verbindung der Hauptkammer der Luftfeder einer mit Druckluft arbeitenden Federeinrichtung mit einer Zusatzkammer dargestellt. Der Durchlaßquerschnitt dieser Ventileinrichtung wird direkt vom Druck der Hauptkammer und der Zusatzkammer der Federeinrichtung verändert, ohne Zuhilfenahme von elektrischen Druckmeßeinrichtungen.

Die Ventileinrichtung gemäß Fig. 3 weist ein Gehäuse (19, 32) auf, das aus einem topfförmig ausgebildeten ersten Gehäuseteil (19) und einem als Deckel (32) ausgebildeten zweiten Gehäuseteil, welches das topfförmige Gehäuseteil (19) verschließt, besteht. Zwischen dem topfförmigen Gehäuseteil (19) und dem Deckel (32) ist ein Dichtring (30) angordnet, der den Gehäuseinnenraum gegen die Atmosphäre abdichtet. Der Boden des topfförmigen Gehäuseteils (19) weist einen zentrisch angeordneten ersten rohrförmigen Gehäusefortsatz (66) auf, der sich nach außen, vom Boden weg erstreckt. Ebenso besitzt der Deckel (32) einen zentrisch angeordneten zweiten rohrförmigen Gehäusefortsatz (36), der sich nach außen, vom Deckel (32) weg erstreckt. Die beiden rohrförmigen Gehäuseforsätze (66 und 36) sind gleichachsig zueinander angeordnet.

Im Gehäuse (19, 32) ist ein als Hohlkolben ausgebildeter abgestufter erster Kolben (33, 26, 20) in Richtung der Längsachse des Gehäuses (19, 32) bewegbar angeordnet. Der erste Kolben (33, 26, 20) dient als Steuerkolben. Das den größeren Durchmesser aufweisende erste Kolbenteil (33) des ersten Kolbens (33, 26, 20) begrenzt mit seiner dem Deckel (32) zugewandten Seite, welche als eine von einem Druckmittel beaufschlagbare erste Wirkfläche des ersten Kolbens (33, 26, 20) dient, eine als Steuerkammer (31) dienende erste Druckmittelkammer. Von der dem Deckel (32) abgewandten Seite des ersten Kolbenteiles (33) des ersten Kolbens (33, 26, 20) und der einen Seite eines zweiten Kolbens (75, 74), welcher in Richtung der Längsachse des ersten Kolbens (33, 26, 20) relativ zum ersten Kolben (33, 26, 20) bewegbar am ersten Kolben (33, 26, 20) angeordnet ist, wird eine erste Teilkammer (34) einer aus zwei Teilkammern (34 und 28) bestehenden zweiten Druckmittelkammer (34, 28) begrenzt. Die erste Teilkammer (34) ist im ersten Kolben (33, 26, 20) gelegen. Die zweite Teilkammer (28) ist außerhalb des ersten Kolbens (33, 26, 20) gelegen und wird von einer Ringfläche des ersten Kolbens (33, 26, 20) begrenzt, die als eine zweite Wirkfläche (52) des ersten Kolbens (33, 26, 20) dient und der ersten Wirkfläche des ersten Kolbens (33, 26, 20) entgegengerichtet ist. Der zweite Kolben (75, 74) wird von einer Membran (75) gebildet, die mit einem äußeren wulstartigen Randbereich in das den kleineren Durchmesser aufweisende zweite Kolbenteil (26, 20) des ersten Kolbens (33, 26, 20) eingespannt ist. Das den geringeren Durchmesser aufweisende zweite Kolbenteil (26, 20) des ersten Kolbens (33, 26, 20) ist quer zu seiner Längsachse geteilt ausgebildet, wobei das eine Teil (26) einstückig mit dem den größeren Durchmesser aufweisenden ersten Kolbenteil (33) des ersten Kolbens (33, 26, 20) ausgebildet ist und das andere Teil (20) die Form einer Kegelscheibe hat, die mit ihrem äußeren Randbereich in einen elastisch verformbaren ringartigen Fortsatz (21) des zweiten Kolbenteiles (26) des ersten Kolbens (33, 26, 20) eingeschnappt ist. Die der ersten Teilkammer (34) der zweiten Druckmittelkammer (34, 28) zugewandte Seite des zweiten Kolbens (75, 74) dient als erste Wirkfläche des zweiten Kolbens (75, 74) und die der ersten Teilkammer (34) abgewandte Seite des zweiten Kolbens (75, 74) dient als zweite Wirkfläche des zweiten Kolbens (75, 74).

Von der dem Deckel (32) des Gehäuses (19, 32) abgewandten Seite des ersten Kolbens (33, 26, 20), und der der zweiten Druckmittelkammer (34, 28) abgewandten Seite des zweiten Kolbens (75, 74) wird eine dritte Druckmittelkammer (76, 77) begrenzt. Die dritte Druckmittelkammer (76, 77) besteht aus einer von der Kegelscheibe (20) und der Membran (75) begrenzten Teilkammer (76) und einer vom topfförmigen ersten Gehäuseteil (19) und der dem Deckel (32) abgewandten Seite des ersten Kolbens (33, 26, 20) begrenzten Teilkammer (77), wobei die beiden Teilkammern (76 und 77) über in der Kegelscheibe (20) angeordnete Durchlässe (60 und 73) ständig miteinander verbunden sind. Der erste Kolben (33, 26, 20) weist eine der ersten Wirkfläche des ersten Kolbens (33, 26, 20) entgegengerichtete dritte Wirkfläche auf, die der dritten Druckmittelkammer (76, 77) zugewandt ist. Die dritte Wirkfläche wird von der Differenzfläche aus der die dritte Druckmittelkammer (76, 77) begrenzenden Fläche des ersten Kolbens (33, 26, 20) abzüglich der die dritte Druckmittelkammer (76, 77) begrenzenden Fläche des zweiten Kolbens (74, 75) gebildet. Das erste Kolbenteil (33) des ersten Kolbens (33, 26, 20) trägt auf seinem Umfang einen Dichtring (29), der dichtend an der Wand des topfförmigen Gehäuseteiles (19) anliegt und so die Steuerkammer (31) und die zweite Druckmittelkammer (34, 28) gegeneinander abdichtet.

An dem nach Art einer Kegelscheibe ausgebildeten Teil (20) des zweiten Kolbenteiles (26, 20) des ersten Kolbens (33, 26, 20) ist zentrisch ein erster rohrförmiger Fortsatz (64) angeordnet, der sich durch die dritte Druckmittelkammer (76, 77) hindurch mit seiner einen Seite in den ersten rohrförmigen Gehäusefortsatz (66) des topfförmigen Gehäuseteiles (19) hineinerstreckt und gleitend in diesem geführt wird und sich mit seiner anderen Seite in Richtung auf den zweiten Kolben (75, 74) zu erstreckt. Auf dem Umfang des ersten rohrförmigen Fortsatzes (64) ist ein Dichtring (65) angeordnet, der dichtend an der Wand des ersten rohrförmigen Gehäusefortsatzes (66) des topfförmigen Gehäuseteiles (19) anliegt.

Am ersten Kolbenteil (33) des ersten Kolbens (33, 26, 20) ist zentrisch ein zweiter rohrförmiger Fortsatz (38) angeordnet, welcher sich vom ersten Kolbenteil (33) weg, durch die Steuerkammer (31) hindurch mit seiner einen Seite in den zweiten rohrförmigen Gehäusefortsatz (36) des Deckels (32) hineinerstreckt und in diesem gleitend geführt wird und sich mit seiner anderen Seite vom ersten Kolbenteil (33) weg in die erste Teilkammer (34) der zweiten Druckmittelkammer (34, 28) hinein, in Richtung auf den zweiten Kolben (75, 74) zu erstreckt. Auf dem Umfang des zweiten rohrförmigen Fortsatzes (38) ist ein Dichtring (37) angeordnet, der dichtend an der Wand des zweiten rohrförmigen Gehäusefortsatzes (36) des Deckels (32) anliegt.

Das sich auf den zweiten Kolben (74, 75) zu erstrekkende freie Ende des ersten rohrförmigen Fortsatzes (64) des ersten Kolbens (33, 26, 20), welches innerhalb der dritten Druckmittelkammer (76, 77) gelegen ist, ist als ein Ventilsitz (59) ausgebildet, der mit der einen Seite einer als Ventilschließglied (74) dienenden Verstärkung der Membran (75) ein erstes Ventil (74, 59) bildet. Das sich dem ersten rohrförmigen Fortsatz (64) entgegengerichtet ebenfalls auf den zweiten Kolben (74, 75) zu erstreckende freie Ende des zweiten rohrförmigen Fortsatzes (38) des ersten Kolbens (33, 26, 20), welches innerhalb der zweiten Druckmittelkammer (34, 28) gelegen ist, ist als ein Ventilsitz (56) ausgebildet, der mit der anderen Seite der als Ventilschließglied (74) dienenden Verstärkung der Membran (75) ein zweites Ventil (74, 56) bildet. Das zwischen den beiden Ventilsitzen (59 und 56) gelegene Ventilschließglied (74) bildet so mit den beiden Ventilsitzen (59 und 56) ein Doppelsitzventil (74, 59, 56).

In dem ersten rohrförmigen Fortsatz (64) ist eine Feder (71) angeordnet, die sich mit ihrem einen Ende an einem Steg (67) im ersten rohrförmigen Fortsatz (64) abstützt und mit ihrem anderen Ende einen topfförmig ausgebildeten Federteller (62) in Richtung auf den zweiten Kolben (74, 75) zu beaufschlagt und den Federteller (62) in Anlage mit einem als Anschlag (61) dienenden Sicherungsring hält, der in einer in der Wand des rohrförmigen Fortsatzes (64) angeordnete Nut gehalten wird.

In gleicher Weise ist im zweiten rohrförmigen Fortsatz (38) eine Feder (42) angeordnet, die sich mit ihrem einen Ende an einem Steg (43) im rohrförmigen Fortsatz (38) abstützt und mit ihrem anderen Ende einen topfförmig ausgebildeten Federteller (58) in Richtung auf den zweiten Kolben (74, 75) zu beaufschlagt und den Federteller in Anlage mit einem als Anschlag (55) dienenden Sicherungsring hält, der in einer in der Wand des rohrförmigen Fortsatzes (38) angeordnete Nut gehalten wird. Die so in den rohrförmigen Fortsätzen (64 und 38) gefesselt angeordneten, als Druckfedern ausgebildeten Federn (71 und 42) sind so bemessen und die Federteller (62 und 58) sind so ausgebildet und so zum zweiten Kolben (74, 75) angeordnet, daß zwischen jedem Federteller (62 bzw. 58) und der diesem zugewandten Seite des zweiten Kolbens (74, 75) ein Spalt verbleibt. Es ist natürlich auch möglich, die Federn (71 und 42) so zu bemessen, daß die Federteller (62 und 58) am zweiten Kolben (74, 75) anliegen. Die Federn (71 und 42) sollen einen Hub des zweiten Kolbens (74, 75) zulassen aber ein Flattern des zweiten Kolbens (74, 75) verhindern.

An der dem Gehäuseinnenraum zugewandten Seite des topfförmigen Gehäuseteiles (19) ist ein sich radial auf das den kleineren Durchmesser aufweisende zweite Kolbenteil (26, 20) des ersten Kolbens (33, 26, 20) zu erstreckender ringförmiger Vorsprung (24) angeordnet, an welchem ein auf dem Umfang des zweiten Kolbenteiles (26, 20) des ersten Kolbens (33, 26, 20) angeordneter Dichtring (23) dichtend anliegt. Das zweite Kolbenteil (26, 20) des ersten Kolbens (33, 26, 20) mit Dichtring (23) bildet mit dem ringförmigen Vorsprung (24) des topfförmigen Gehäuseteiles (19) ein drittes Ventil (26, 23, 24, 20), über welches in Abhängigkeit von der Stellung des ersten Kolbens (33, 26, 20) die zweite Druckmittelkammer (34, 28) mit der dritten Druckmittelkammer (76, 77) verbindbar oder gegen diese absperrbar ist.

Das zweite Kolbenteil (26, 20) des ersten Kolbens (33, 26, 20) weist auf seiner oberhalb des Dichtrings (23) gelegenen, der zweiten Druckmittelkammer (34, 28) zugewandten Seite im Bereich seiner umlaufenden Außenkante eine umlaufende Abschrägung (25) auf. Ebenso besitzt der umlaufende Vorsprung (24) auf seiner unterhalb des Dichtrings (23) gelegenen, der dritten Druckmittelkammer (76, 77) zugewandten Seite im Kantenbereich eine umlaufende Abschrägung (22) auf. Bei einer Bewegung des ersten Kolbens (33, 26, 20) in Richtung auf die dritte Druckmittelkammer (76, 77) zu entsteht zwischen der Abschrägung (22) des umlaufenden Vorsprungs (24) und der Abschrägung (25) des zweiten Kolbenteiles (26, 20) ein Ringspalt, dessen Größe sich in Abhängigkeit von dem vom ersten Kolben (33, 26, 20) zurückgelegten Weg, je nach Bewegungsrichtung des ersten Kolbens (33, 26, 20), vergrößert oder verkleinert.

Der am topfförmigen Gehäuseteil (19) angeordnete erste rohrförmige Gehäusefortsatz (66) ist an seinem freien Ende als ein erster Druckmittelanschluß (68) ausgebildet, der über eine Druckmittelleitung (69) mit der als Hauptkammer (3) der Federeinrichtung dienenden Druckmittelkammer der Luftfeder (2, 3) eines Fahrzeugs verbunden ist. An die von der Luftfeder (2, 3) zum Druckmittelanschluß (68) führende Druckmittelleitung (69) ist über eine Druckmittelleitung (78) der Ausgang eines elektromagnetisch betätigbaren 3/2-Wegeventils (79) angeschlossen. Der Eingang des 3/2-Wegeventils (79)ist über eine Druckmittelleitung (80) mit einer Druckmittelquelle (81), die z. B. ein Druckluft-Vorratsbehälter sein kann, verbunden. Ein Elektromagnet (82) des 3/2-Wegeventils (79) ist über eine elektrische Leitung (83) mit einer Auswahl- und Steuereinrichtung (39) verbunden, mittels welcher das Niveau des Fahrzeugs - Höhenlage des Fahrzeugs - steuerbar ist.

In dem Bereich der Wand des ersten rohrförmigen Fortsatzes (64) des ersten Kolbens (33, 26, 20), der in der dritten Druckmittelkammer (76, 77) gelegen ist, sind mehrere als eine erste Drossel (63, 72) dienende Durchgangsöffnungen angeordnet, so daß die dritte Druckmittelkammer (76, 77) über den großen Durchlaßquerschnitt des ersten Ventils (59, 74) mit der Hauptkammer (3) der Luftfeder (2, 3) verbindbar und über die erste Drossel (63, 72) ständig mit der Hauptkammer (3) der Luftfeder (2, 3) verbunden ist. Das erste Ventil (59, 74) und die erste Drossel (63, 72) bilden so eine zwischen der Hauptkammer (3) und dem dritten Ventil (24, 26, 20) bzw. zwischen der Hauptkammer (3) und einer mit der Hauptkammer (3) verbundenen Druckmittelkammer (77, 76) angeordnete erste Drosseleinrichtung (63, 72, 59, 74), deren Durchlaßquerschnitt mittels des ersten Ventils (59, 74) veränderbar ist. Das erste Ventil (59, 74) bildet dabei den großen Durchlaßquerschnitt und die als Drossel (63, 72) dienenden Durchgangsöffnungen bilden dabei den kleinen Durchlaßquerschnitt der ersten Drosseleinrichtung (63, 72, 59, 74). Der am Deckel (32) angeordnete zweite rohrförmige Gehäusefortsatz (36) ist an seinem freien Ende als ein zweiter Druckmittelanschluß (41) ausgebildet, der über eine Druckmittelleitung (40) mit der als Zusatzkammer (8) (Zusatzvolumen) dienenden Druckmittelkammer verbunden ist. In dem Bereich der Wand des zweiten rohrförmigen Fortsatzes (38) des ersten Kolbens (33, 26, 20), der in der ersten Teilkammer (34) der zweiten Druckmittelkammer (34, 28) gelegen ist, sind mehrere als eine zweite Drossel (35, 53) dienende Durchgangsöffnungen angeordnet, so daß die zweite Druckmittelkammer (34, 28) über den großen Durchlaßquerschnitt des zweiten Ventils (56, 74) mit der Zusatzkammer (8) verbindbar und über die zweite Drossel (35, 53) ständig mit der Zusatzkammer (8) verbunden ist. Das zweite Ventil (56, 74) und die zweite Drossel (35, 53) bilden so eine zwischen der Zusatzkammer (8) und dem dritten Ventil (24, 26, 20) bzw. zwischen der Zusatzkammer (8) und einer mit der Zusatzkammer (8) verbundenen weiteren Druckmittelkammer (34, 28) angeordnete zweite Drosseleinrichtung (35, 53, 56, 74), deren Durchlaßquerschnitt mittels des zweiten Ventils (56, 74) veränderbar ist. Das zweite Ventil (56, 74) bildet dabei den großen Durchlaßquerschnitt und die als Drossel (35, 53) dienenden Durchgangsöffnungen bilden dabei den kleineren Durchlaßquerschnitt der zweiten Drosseleinrichtung (35, 53, 56, 74).

Bedingt durch die Ausbildung des ersten Kolbens (33, 26, 20) als Stufenkolben verbleibt am ersten Kolbenteil (33) des ersten Kolbens (33, 26, 20) die als zweite Wirkfläche (52) dienende Ringfläche, welche einer Ringfläche (57) gegenüberliegt, die von der dem ersten Kolbenteil (33) zugewandten Seite des ringförmigen Vorsprunges (24) gebildet wird. Die Ringfläche (57) und die zweite Wirkfläche (52) des ersten Kolbens (33, 26, 20) begrenzen zusammen mit der Wand des topfförmigen Gehäuseteiles (19) und der Mantelfläche des den kleineren Durchmesser aufweisenden Kolbenteiles (26, 20) die als zweite Teilkammer (28) der zweiten Druckmittelkammer (34, 28) dienende Ringkammer. Die zweite Teilkammer (28) ist über kanalartige Durchgangsöffnungen (27, 54), welche die Wand des zweiten Kolbenteiles (26, 20) des ersten Kolbens (33, 26, 20) durchdringen, mit der ersten Teilkammer (34) der zweiten Druckmittelkammer (34, 28) verbunden.

Die Steuerkammer (31) ist über einen am Deckel (32) des Gehäuses (19, 32) angeordneten, als Steueranschluß (51) dienenden dritten Druckmittelanschluß und eine Druckmittelleitung (50) mit dem Ausgang eines als 3/2-Wege-Elektromagnetventil ausgebildeten Ventils (46) verbunden. Der Eingang des Ventils (46) steht über eine Druckmittelleitung (45) mit einer Druckmittelquelle (44), wie z. B. einem Druckluft-Vorratsbehälter, in Verbindung. Ein Elektromagnet (49) des Ventils (46) ist über eine elektrische Leitung (48) mit einer weiteren Auswahl- und Steuereinrichtung (47) verbunden. Mit der Auswahl- und Steuereinrichtung (47) kann die Betriebsweise für die Luftfeder gewählt werden - Federhärte erhöhen oder verringern durch Abschalten oder Zuschalten des Zusatzvolumens -.

Der erste Kolben (33, 26, 20) und der zweite Kolben (74, 75) bilden eine Kolbeneinheit (33, 26, 20, 74, 75), die bei druckloser Steuerkammer (31) an dem auch als ein erster Anschlag dienenden Deckel (32) anliegt und bei Beaufschlagung der Steuerkammer (31) mit Druckmittel an einem zweiten Anschlag (70) zur Anlage gebracht wird. Der zweite Anschlag (70) ist am Boden des topfförmigen Gehäuseteiles (19) angeordnet.

Der erste Kolben (33, 26, 20) dient als Betätigungselement für das Ventil (24, 26, 20, 23) und somit auch als Steuereinrichtung zum Aktivieren der Ventileinrichtung (6). Eine erste Einrichtung zum Erkennen einer Druckdifferenz zwischen dem Druck in der Hauptkammer (3) der Federeinrichtung und dem Druck in der Zusatzkammer (8) wird von dem zweiten Kolben (74, 75) gebildet. Eine zweite Einrichtung zum Verändern des Durchlaßquerschnittes der Ventileinrichtung (6) wird von dem ersten Ventil (59, 74) mit erster Drossel (63, 72) und dem zweiten Ventil (56, 74) mit zweiter Drossel (35, 53) gebildet, die mit dem zweiten Kolben (74, 75) in Wirkverbindung stehen.

In Fig. 4 ist eine steuerbare Ventileinrichtung dargestellt, die im wesentlichen den gleichen Aufbau aufweist, wie die steuerbare Ventileinrichtung gemäß Fig. 3. Lediglich die Ausgestaltung des dritten Ventils der Ventileinrichtung weicht von der Ausgestaltung des dritten Ventils der in Fig. 3 gezeigten Ventileinrichtung ab. Es wird der Einfachheit halber im Folgenden auch nur auf die Ausgestaltung des dritten Ventils eingegangen.

Zum besseren Verständnis der Funktion der in den Fig. 3 und 4 gezeigten Ventileinrichtung ist in Fig. 4 die linke Hälfte der Ventileinrichtung bei vollständig geöffnetem dritten Ventil und die rechte Hälfte der Ventileinrichtung bei vollständig geschlossenem dritten Ventil dargestellt. Den in Fig. 3 gezeigten Bauteilen gleiche Bauteile sind in Fig. 4 mit gleichen Bezugsziffern versehen.

Das topfförmige Gehäuseteil (19) weist im Bereich der dritten Druckmittelkammer (76, 77) an der Wand des Gehäuseteiles (19) in gleichem Abstand zueinander angeordnete Rippen (85) auf, die in Richtung der Längsachse des topfförmigen Gehäuseteiles (19) verlaufen und sich radial nach innen in Richtung auf den ersten Kolben (33, 20, 26) zu erstrecken. Die Rippen (85) erstrecken sich vom Boden des topfförmigen Gehäuseteiles (19) ausgehend in Richtung auf den Deckel (32) zu und bilden mit ihren freien Enden eine ringförmige Stufe (88) der Wand des topfförmigen Gehäuseteiles (19). Auf der von den Rippen (85) gebildeten Stufe (88) liegt ein ringförmiger Körper (89) auf, der unter Vorspannung an der Wand des topfförmigen Gehäuseteiles (19) anliegt. Der ringförmige Körper (89) ist so ausgebildet und so in das topfförmige Gehäuseteil (19) eingepaßt, daß zwischen seiner äußeren Mantelfläche und der Wand des topfförmigen Gehäuseteiles (19) kein Spalt vorhanden ist, über welchen ein ungewollter Austausch von Druckmittel der dritten Druckmittelkammer (76, 77) und der zweiten Druckmittelkammer (34, 28) stattfinden könnte. Zwischen der äußeren Mantelfläche des ringförmigen Körpers (89) und der Wand des topfförmigen Gehäuseteiles (19) kann zur Abdichtung auch ein Dicht- und/oder Klebemittel vorgesehen werden. Die Rippen (85) dienen als Abstützung für den Dichtring (23) des ersten Kolbens (33, 26, 20) und verhindern ein Heraustreten des Dichtringes (23) aus seiner Lagerstelle im ersten Kolben (33, 26, 20), insbesondere beim Öffnungsvorgang des dritten Ventils (89, 26, 23).

Der ringförmige Körper (89) bildet mit dem Kolbenteil (26) des ersten Kolbens (33, 26, 20) und dem Dichtring (23) das dritte Ventil (89, 26, 23), über welches die dritte Druckmittelkammer (76, 77) und die zweite Druckmittelkammer (34, 28) miteinander verbindbar bzw. gegeneinander absperrbar sind.

Fig. 5 zeigt einen Schnitt durch die Wand des topfförmigen Gehäuseteiles (19) nach der Schnittlinie A-A. In dieser Ansicht sind deutlich die an der Wand des Gehäuseteiles (19) angeordneten Rippen (85) und (87), von denen der Einfachheit halber nur zwei mit Bezugsziffern versehen sind, erkennbar. Die Wand des Gehäuseteiles (19) und die einander zugewandten Seiten von jeweils zwei Rippen (85 und 87) begrenzen jeweils einen Kanal (86 bzw. 84), der zur dritten Druckmittelkammer (76, 77) und zum ersten Kolben (33, 26, 20) sowie zum zweiten Kolben (75, 74) hin offen ist. Der Dichtring (23) wird über den gesamten Hub des Ventilschließgliedes von den Rippen (85, 87) abgestützt, sobald er sich von dem als ringförmiger Körper (89) ausgebildeten Dichtsitz gelöst hat.

Die Funktion der vorstehend beschriebenen, in einer Luftfederanlage eines Fahrzeugs angeordneten Ventileinrichtung wird nachfolgend, unter Bezugnahme auf die Fig. 1, 3, 4 und 5, näher erläutert.

Der Einfachheit halber wird die Funktion nur einer eine Hauptkammer (3) und eine Zusatzkammer (8) aufweisenden Federeinrichtung mit Ventileinrichtung (6) zur Verbindung von Hauptkammer (3) und Zusatzkammer (8) beschrieben.

Es wird angenommen, daß die Luftfeder (2, 3) auf "HART" eingestellt ist und die Drücke in der Hauptkammer (3) der Luftfeder (2, 3) und in der Zusatzkammer (8) gleich hoch sind. Die Steuerkammer (31) der Ventileinrichtung, (6) ist über das Ventil (46) mit der Atmosphäre verbunden. Die Druckmittelquelle (44) und die Steuerkammer (31) sind mittels des Ventils (46) gegeneinander abgesperrt. Das erste Ventil (59, 74) und das zweite Ventil (56, 74) der Ventileinrichtung (6) befinden sich in ihrer Offenstellung, so daß die Hauptkammer (3) der Luftfeder (2, 3) über den großen Durchlaßquerschnitt -erstes Ventil (59, 74)- und den kleineren Durchlaßquerschnitt -erste Drossel (63, 72)- der ersten Drosseleinrichtung (63, 72, 59, 74) mit der dritten Druckmittelkammer (76, 77) und die Zusatzkammer (8) über den großen Durchlaßquerschnitt -zweites Ventil (56, 74)- und den kleinen Durchlaßquerschnitt -zweite Drossel (35, 53) -der zweiten Drosseleinrichtung (35, 53, 56, 74) mit der zweiten Druckmittelkammer (34, 28) der Ventileinrichtung (6) verbunden ist. Da somit in der dritten Druckmittelkammer (76, 77) und in der zweiten Druckmittelkammer (34, 28) ebenfalls gleich hohe Drücke herrschen, wird der zweite Kolben (75, 74) von den einander entgegengerichtet auf ihn einwirkenden Kräften dieser Drücke in seiner neutralen Mittelstellung gehalten, wobei die beiden Druckfedern (71 und 42) mit Federtellern (62 und 58) die neutrale Mittelstellung des zweiten Kolbens (75, 74) stabilisieren.

Der in der zweiten Teilkammer (28) der zweiten Druckmittelkammer (34, 28) anstehende Druck beaufschlagt die am ersten Kolbenteil (33) des ersten Kolbens (33, 26, 20) vorhandene zweite Wirkfläche (52) und der in der dritten Druckmittelkammer (76, 77) anstehende Druck beaufschlagt die dritte Wirkfläche des ersten Kolbens (33, 26, 20), wodurch die aus dem ersten Kolben (33, 26, 20) und dem zweiten Kolben (75, 74) bestehende Kolbeneinheit (33, 26, 20, 74, 75) in Richtung auf die Steuerkammer (31) zu belastet und so an dem als erster Anschlag dienenden Deckel (32) des Gehäuses (19, 32) gehalten wird. Das dritte Ventil (24, 26, 20, 23) - in Fig. 3 - bzw. das dritte Ventil (89, 26, 20, 23) - in Fig. 4 - befindet sich in seiner Schließstellung.

Das 3/2-Wegeventil (79) sperrt die Hauptkammer (3) der Luftfeder (2, 3) gegen die Atmosphäre und gegen die Druckmittelquelle (81) ab, so daß in der Luftfeder (2, 3) eine konstante Luftmenge vorhanden ist.

Wenn eine weichere Federeinstellung gewünscht wird, betätigt der Fahrer des Fahrzeugs eine entsprechende Taste der Auswahl- und Steuereinrichtung (47). Von der Auswahl- und Steuereinrichtung (47) gelangt ein elektrisches Signal zum Elektromagneten (49) des Ventils (46). Das Ventil (46) schaltet in der Weise um, daß die Steuerkammer (31) der Ventileinrichtung (6) gegen die Atmosphäre abgesperrt und mit der Druckmittelquelle (44) verbunden wird. Der sich in der Steuerkammer (31) dann aufbauende Druck verschiebt die Kolbeneinheit (33, 26, 20, 74, 75) in Richtung auf die dritte Druckmittelkammer (76, 77) zu, und zwar so weit, bis sie am zweiten Anschlag (70) zur Anlage kommt. Das dritte Ventil (24, 26, 20, 23 bzw. 89, 26, 20, 23) gelangt in seine Offenstellung. Die dritte Druckmittelkammer (76, 77) und die zweite Druckmittelkammer (34, 28) und somit die Hauptkammer (3) der Luftfeder (2, 3) und die Zusatzkammer (8) sind dann über das vollständig geöffnete dritte Ventil (24, 26, 20, 23 bzw. 89, 26, 20, 23) miteinander verbunden. Da die Luftfeder (2, 3) dann ein um das Volumen der Zusatzkammer (8) vergrößertes Volumen hat, ist die Luftfeder (2, 3) weich.

Soll die Luftfeder (2, 3) wieder auf "HART" eingestellt werden, betätigt der Fahrer des Fahrzeugs eine entsprechende Taste der Auswahl- und Steuereinrichtung (47). Das Ventil (46) wird stromlos und gelangt wieder in seine Ausgangsstellung, in welcher es die Steuerkammer (31) der Ventileinrichtung (6) gegen die Druckmittelquelle (44) absperrt und mit der Atmosphäre verbindet. Die Steuerkammer (31) wird drucklos. In der dritten Druckmittelkammer (76, 77) und in der zweiten Druckmittelkammer (34, 28) herrschen gleich hohe Drücke. Am zweiten Kolben (74, 75) herrscht somit Kräftegleichgewicht. Da jedoch vom Druck in der dritten Druckmittelkammer (76, 77) über die zweite Wirkfläche (52) und die dritte Wirkfläche des ersten Kolbens (33, 26, 20) auf den ersten Kolben (33, 26, 20) eine Kraft in Richtung auf die Steuerkammer (31) zu ausgeübt wird, wird die Kolbeneinheit (33, 26, 20, 74, 75) in Richtung auf die Steuerkammer (31) zu verschoben und kommt am Deckel (32) des Gehäuses (19, 32) zur Anlage. Dabei gelangt das dritte Ventil (24, 26, 20, 23 bzw. 89, 26, 20, 23) in seine Schließstellung. Die dritte Druckmittelkammer (76, 77) und die zweite Druckmittelkammer (34, 28) und somit auch die Hauptkammer (3) der Luftfeder (2, 3) und die Zusatzkammer (8) sind dann wieder gegeneinander abgesperrt.

Geht man von einem Betriebszustand der Federeinrichtung aus, in welchem nach dem Beladen des Fahrzeugs in der Hauptkammer (3) der Luftfeder (2, 3) ein höherer Druck herrscht als in der der Luftfeder (2, 3) zugeordneten Zusatzkammer (8), und in welchem die Hauptkammer (3) und die Zusatzkammer (8) mittels der Ventileinrichtung (6) gegeneinander abgesperrt sind, wird das Ventilschließglied (74) des zweiten Ventils (56, 74) aufgrund des auf den zweiten Kolben (74, 75) einwirkenden höheren Druckes in der dritten Druckmittelkammer (76, 77) gegen die Kraft der Druckfeder (42) dichtend an dem ihm zugeordneten Ventilsitz (56) gehalten -Fig. 4-.

Soll die Luftfeder (2, 3) auf "WEICH" eingestellt werden, betätigt der Fahrer des Fahrzeugs eine entsprechende Taste der Auswahl- und Steuereinrichtung (47). Das Ventil (46) erhält ein elektrisches Steuersignal und schaltet in der Weise um, daß die Steuerkammer (31) der Ventileinrichtung (6) gegen die Atmosphäre abgesperrt und mit der Druckmittelquelle (44) verbunden wird. Der sich in der Steuerkammer (31) aufbauende Druck verschiebt die Kolbeneinheit (33, 26, 20, 74, 75) in Richtung auf die dritte Druckmittelkammer (76, 77) zu, so weit, bis sie am Anschlag (70) zur Anlage kommt. Das dritte Ventil (24, 26, 20, 23 bzw. 89, 26, 20, 23) gelangt dabei in seine Offenstellung. Aus der dritten Druckmittelkammer (76, 77) strömt dann durch den vollständig geöffneten Durchlaßquerschnitt des dritten Ventils (24, 26, 20, 23 bzw. 89, 26, 20, 23) Druckmittel in die zweite Druckmittelkammer (34, 28) der Ventileinrichtung (6) -Fig. 4, linke Seite-.

Da das Ventil (56, 74) der zweiten Drosseleinrichtung (35, 53, 56, 74) jedoch geschlossen ist, kann das Druckmittel aus der zweiten Druckmittelkammer (34, 28) nur durch den kleinen Durchlaßquerschnitt -Drossel (35, 53)- der zweiten Drosseleinrichtung (35, 53, 56, 74) zum zweiten Druckmittelanschluß (41) der Ventileinrichtung (6) und durch diesen weiter zur Zusatzkammer (8) der Federeinrichtung gelangen. Da die vom Druck in der zweiten Druckmittelkammer (34, 28) beaufschlagte Wirkfläche des zweiten Kolbens (74, 75) gegenüber der vom Druckmittel in der dritten Druckmittelkammer (76, 77) beaufschlagten Wirkfläche des zweiten Kolbens (74, 75) um die vom Ventilsitz (56) des zweiten Ventils (56, 74) begrenzte Fläche des zweiten Kolbens (74, 75) verringert ist, und die vom Ventilsitz (56) begrenzte Fläche des zweiten Kolbens (74, 75) nur von dem niedrigeren Druck der Zusatzkammer (8) beaufschlagt wird, wird das zweite Ventil (56, 74) solange in seiner geschlossenen Stellung gehalten, bis der Druck in der Zusatzkammer (8) und der Druck in der Hauptkammer (3) der Luftfeder (2, 3) sich über den kleinen Durchlaßquerschnitt -Drossel (35, 53)- der zweiten Drosseleinrichtung (35, 53, 56, 74) ausgeglichen haben.

Sobald die vom Druck in der Zusatzkammer (8), vom Druck in der zweiten Druckmittelkammer (34, 28) und von der Feder (42) auf den zweiten Kolben (74, 75) ausgeübte Kraft gleich oder annähernd gleich ist der dieser Kraft entgegengerichtet vom Druck in der dritten Druckmittelkammer (76, 77) auf den zweiten Kolben (74, 75) ausgeübten Kraft, gelangt das Ventil (56, 74) der zweiten Drosseleinrichtung (35, 53, 56, 74) in seine Offenstellung. Die Hauptkammer (3) der Luftfeder (2, 3) und die Zusatzkammer (8) sind dann über das Ventil (59, 74) der ersten Drosseleinrichtung (63, 72, 59, 74), das dritte Ventil (24, 26, 20, 23 bzw. 89, 26, 20, 23) und den großen Durchlaßquerschnitt -Ventil (56, 74)- der zweiten Drosseleinrichtung (35, 53, 56, 74) miteinander verbunden. Da in der Hauptkammer (3) der Luftfeder (2, 3) und in der Zusatzkammer (8) dann wieder gleich hohe Drücke herrschen, wird der zweite Kolben (74, 75) in seiner neutralen Mittelstellung gehalten, in welcher das Ventil (59, 74) der ersten Drosseleinrichtung (63, 72, 59, 74) und das Ventil (56, 74) der zweiten Drosselleinrichtung (35, 53, 56, 74) sich in ihrer Offenstellung befinden. Das Volumen der Hauptkammer (3) der Luftfeder (2, 3) ist dann um das Volumen der Zusatzkammer (8) vergrößert, woraus eine geringere Härte der Luftfeder (2, 3) resultiert.

Mittels der von den beiden Federn (42 und 71) beaufschlagten Federteller (58 und 62) wird der zweite Kolben (74, 75) in seiner neutralen Mittelstellung stabilisiert, in der Weise, daß er zwar einen vorbestimmten Hub ausführen kann, jedoch nicht in der bewegten Luftsäule schwingt. Eine bewegte Luftsäule kann z. B. durch kurzzeitige Druckänderungen zwischen dem Druck im Luftfederbalg (2, 3) und dem Druck in der Zusatzkammer (8) verursacht werden.

Wird eine härtere Einstellung der Federeinrichtung gewünscht, so betätigt der Fahrer des Fahrzeugs eine entsprechende Taste der Auswahl- Steuereinrichtung (47). Das Ventil (46) wird dann stromlos und schaltet in der Weise um, daß die Druckmittelquelle (44) und die Steuerkammer (31) der Ventileinrichtung (6) gegeneinander abgesperrt und die Steuerkammer (31) mit der Atmosphäre verbunden wird. Die Steuerkammer (31) wird drucklos, und die Kolbeneinheit (33, 26, 20, 74, 75) wird von der Kraft des auf die zweite Wirkfläche (52) des ersten Kolbens (33, 26, 20) einwirkenden Druckes in der zweiten Teilkammer (28) der zweiten Druckmittelkammer (34, 28) und der Kraft des auf die dritte Wirkfläche des ersten Kolbens (33, 26, 20) einwirkenden Druckes in der dritten Druckmittelkammer (76, 77) in Richtung auf die Steuerkammer (31) zu verschoben und kommt am Deckel (32) zur Anlage.

Das dritte Ventil (24, 26, 20, 23 bzw. 89, 26, 20, 23) gelangt dabei in seine Schließstellung. Da in der Hauptkammer (3) der Luftfeder (2, 3) und in der Zusatzkammer (8) gleich hohe Drücke herrschen, wird der zweite Kolben (74, 75) in seiner neutralen Mittelstellung gehalten. Das Ventil (59, 74) der ersten Drosseleinrichtung (63, 72, 59, 74) und das Ventil (56, 74) der zweiten Drosseleinrichtung (35, 53, 56, 74) befinden sich in ihrer Offenstellung. Dadurch daß die Hauptkammer (3) der Luftfeder (2, 3) mittels des dritten Ventils (24, 26, 20, 23 bzw. 89, 26, 20, 23) gegen die Zusatzkammer (8) abgesperrt ist, steht der Druckluft in der Hauptkammer (3) jetzt nur noch ein um das Volumen der Zusatzkammer (8) verringertes Volumen zur Verfügung. Die Luftfeder (2, 3) wird dadurch härter.

Sinkt der Druck in der Luftfeder (2, 3), bedingt durch eine Verringerung der Fahrzeugbeladung ab, wenn die Ventilenrichtung (6) sich in ihrer Absperrstellung befindet - Hauptkammer (3) der Luftfeder (2, 3) und Zusatzkammer (8) gegeneinander abgesperrt -, überwiegt der Druck in der mit der Zusatzkammer (8) verbundenen zweiten Druckmittelkammer (34, 28) gegenüber dem Druck in der mit der Hauptkammer (3) verbundenen dritten Druckmittelkammer (76, 77). Der zweite Kolben (74, 75) bewegt sich dann in Richtung auf die dritte Druckmittelkammer (76, 77) zu und das Ventilschließglied (74) kommt am Ventilsitz (59) zur Anlage. Das erste Ventil (59, 74) befindet sich dann in seiner Schließstellung.

Soll die Härte der Federeinrichtung verringert werden, erfolgt dies in der Weise, daß nach dem Betätigen der entsprechenden Taste der Auswahl- und Steuereinrichtung (47) die Steuerkammer (31) der Ventileinrichtung (6) mittels des Ventils (46) gegen die Atmosphäre abgesperrt und mit der Druckmittelquelle (44) verbunden wird. Der sich dann in der Steuerkammer (31) aufbauende Druck verschiebt die Kolbeneinheit (33, 26, 20, 74, 75) in Richtung auf die dritte Druckmittelkammer (76, 77) zu, so weit, bis sie am Anschlag (70) zur Anlage kommt. Dabei gelangt das dritte Ventil (24, 26, 20, 23 bzw. 89, 26, 20, 23) in seine Offenstellung. Von der zweiten Druckmittelkammer (34, 28) strömt durch das geöffnete dritte Ventil (24, 26, 20, 23 bzw. 89, 26, 20, 23) Druckmittel aus der zweiten Druckmittelkammer (34, 28) in die dritte Druckmittelkammer (76, 77) und von dieser weiter durch den kleinen Durchlaßquerschnitt -Drossel (63, 72)- der ersten Drosseleinrichtung (63, 72, 59, 74) und den ersten Druckmittelanschluß (68) sowie die Druckmittelleitung (69) zur Hauptkammer (3) der Luftfeder (2, 3).

Da die vom Druckmittel in der zweiten Druckmittelkammer (34, 28) beaufschlagte Wirkfläche des zweiten Kolbens (74, 75) größer ist als die dieser Wirkfläche entgegengerichtete, um die vom Ventilsitz (59) des ersten Ventils (59, 74) begrenzte Fläche verringerte Wirkfläche des zweiten Kolbens (74, 75) bleibt das erste Ventil (59, 74) geschlossen. Es erfolgt somit ein relativ langsamer Druckanstieg in der Hauptkammer (3) der Luftfeder (2, 3).

Das erste Ventil (59, 74) wird so lange in seiner geschlossenen Stellung gehalten, bis der Druck in der Zusatzkammer (8) und der Druck in der Hauptkammer (3) der Luftfeder (2, 3) sich über den kleinen Durchlaßquerschnitt -Drossel (63, 72)- der ersten Drosseleinrichtung (63, 72, 59, 74) ausgeglichen haben. Sobald die vom Druck in der Hauptkammer (3), vom Druck in der dritten Druckmittelkammer (76, 77) und von der Feder (71) auf den zweiten Kolben (74, 75) ausgeübte Kraft gleich oder annähernd gleich ist der dieser Kraft entgegengerichtet vom Druck in der zweiten Druckmittelkammer (34, 28) auf den zweiten Kolben (74, 75) ausgeübten Kraft, gelangt das erste Ventil (59, 74) in seine Offenstellung. Die Hauptkammer (3) der Luftfeder (2, 3) ist dann über den großen Durchlaßquerschnitt -Ventil (59, 74)- der ersten Drosseleinrichtung (63, 72, 59, 74) mit der dritten Druckmittelkammer (77, 76) und über diese sowie das dritte Ventil (24, 26, 20, 23 bzw. 89, 26, 20, 23), die zweite Druckmittelkammer (34, 28) und den großen Durchlaßquerschnitt -Ventil (56, 74)- der zweiten Drosseleinrichtung (35, 53, 56, 74) mit der Zusatzkammer (8) verbunden.

Wenn der Druck in der Hauptkammer (3) der Luftfeder (2, 3) und der Druck in der dritten Druckmittelkammer (76, 77) sowie der Druck in der Zusatzkammer (8) und der Druck in der zweiten Druckmittelkammer (34, 28) sich im Gleichgewicht befinden, herrscht auch zwischen den einander entgegengerichtet auf den zweiten Kolben (74, 75) einwirkenden Druckkräften Gleichgewicht. Der zweite Kolben (74, 75) wird dann in seiner neutralen Mittelstellung gehalten, in welcher das erste Ventil (59, 74) und das zweite Ventil (56, 74) sich in ihrer Offenstellung befinden.

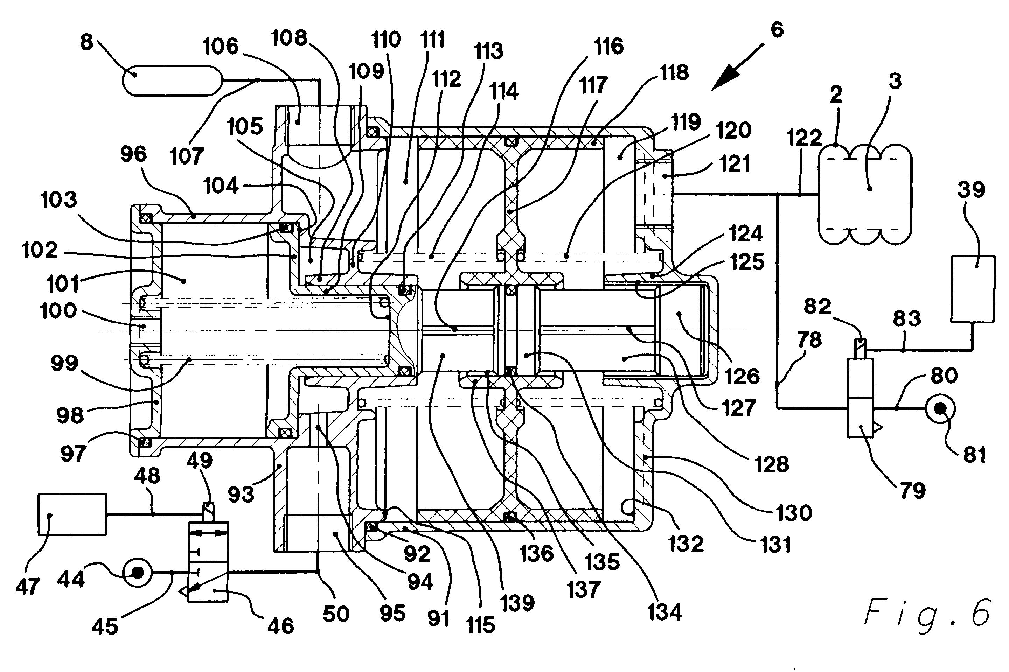

In Fig. 6 ist eine Ventileinrichtung zum Verbinden der Hauptkammer mit der Zusatzkammer einer Federeinrichtung dargestellt, bei welcher Teile des Ventils, welches zur Verbindung der beiden Druckmittelkammern der Ventileinrichtung miteinander dient, zusätzlich auch Bestandteil der beiden Drosseln sind.

Bauteile und Leitungen der in Fig. 6 gezeigten Einrichtung, die gleich sind den Bauteilen und Leitungen der in den Fig. 3 und 4 gezeigten Einrichtung, sind auch mit gleichen Bezugsziffern versehen.

Die in Fig. 6 gezeigt Ventileinrichtung (6) besitzt ein Gehäuse (91, 130, 93), das aus einem einen Boden (130) aufweisenden topfförmig ausgebildeten ersten Gehäuseteil (91, 130) und einem als Deckel ausgebildeten zweiten Gehäuseteil (93) besteht. Die beiden Gehäuseteile (91, 130 und 93) sind mittels nicht dargestellter Verbindungsmittel, wie z. B. Schrauben, miteinander verbunden. Zwischen den einander zugewandten Seiten der beiden Gehäuseteile (91, 130 und 93) ist eine Dichtung (92) angeordnet. Das zweite Gehäuseteil (93) besitzt einen in Richtung der Längsachse des Gehäuses (91, 130, 93) verlaufenden rohrförmigen Fortsatz (96), wobei das eine Teil des Fortsatzes (96) sich vom Gehäuse (91, 130, 93) weg und das andere Teil des Fortsatzes (96) sich in das Gehäuse (91, 130, 93) hineinerstreckt. Der sich in das Gehäuse (91, 130, 93) hineinerstreckende Teil des rohrförmigen Fortsatzes (96) weist eine Stufe (104) auf und besitzt in der Nähe seines freien Endes eine ringförmige Wand (110). Am inneren Rand der ringförmigen Wand (110) ist koaxial zum rohrförmigen Fortsatz (96) ein in Richtung der Längsachse des Gehäuses (91, 130, 93) verlaufendes rohrförmiges Teil (108) angeordnet. Der rohrförmige Fortsatz (96) wird an seinem sich vom Gehäuse (91, 130, 93) weg erstreckenden freien Ende von einem Deckel (98) verschlossen. Zwischen dem Deckel (98) und dem rohrförmigen Fortsatz (96) ist eine Dichtung (97) angeordnet.

In dem den größeren Durchmesser aufweisenden, sich vom Gehäuse (91, 130, 93) weg erstreckenden Teil des rohrförmigen Fortsatzes (96) ist ein erster Kolben (102) in Richtung der Längsachse des Gehäuses (91, 130, 93) bewegbar angeordnet. Der erste Kolben (102) besitzt eine Umfangsnut, in der ein Dichtring (103) gelagert ist. Der Dichtring (103) liegt dichtend an der Wand des rohrförmigen Fortsatzes (96) an. Von der dem Deckel (98) abgewandten Seite des ersten Kolbens (102) und der ringförmigen Wand (110) wird eine als Steuerkammer (105) dienende erste Druckmittelkammer begrenzt. Die Steuerkammer (105) ist über eine als Gehäusekanal (94) ausgebildete Druckmittelleitung mit einem als Steueranschluß (95) dienenden Druckmittelanschluß verbunden.

An der der Steuerkammer (105) zugewandten Seite des ersten Kolbens (102) ist eine Kolbenstange (109) zentrisch angeordnet. Die Kolbenstange (109) erstreckt sich durch das als eine erste Führung für die Kolbenstange (109) dienende rohrförmige Teil (108) hindurch in Richtung auf den Boden (130) des Gehäuses (91, 130, 93) zu. In einem zentrisch am Boden (130) des Gehäuses (91, 130, 93) angeordneten, zum Gehäuseinnenraum hin offenen topfförmig ausgebildeten Teil (124), welches auf seiner der Kolbenstange (109) zugewandten Seite in Richtung seiner Längsachse verlaufende Rippen (125) aufweist, wird die Kolbenstange (109) mit ihrem freien Endbereich geführt. Das topfförmig ausgebildete Teil (124) dient somit als eine zweite Führung für die Kolbenstange (109). In dem von der ersten Führung umgebenen Bereich der Kolbenstange (109) ist in einer Umfangsnut der Kolbenstange (109) ein Dichtring (113) angeordnet, der dichtend an der Wand der ersten Führung anliegt.

Koaxial zur Kolbenstange (109) ist im Gehäuse (91, 130, 93) ein zweiter Kolben (117, 118) in Richtung der Längsachse des Gehäuses (91, 130, 93) relativ zum ersten Kolben (102) und zur Kolbenstange (109) bewegbar angeordnet. Auf dem Umfang des zweiten Kolbens (117, 118) ist in einer Nut ein Dichtring (136) angeordnet, der dichtend an der Innenwand des Gehäuses (91, 130, 93) anliegt. Der zweite Kolben (117, 118) begrenzt mit seiner dem Deckel des Gehäuses (91, 130, 93) zugewandten Seite eine zweite Druckmittelkammer (111) und mit seiner dem Boden (130) des Gehäuses (91, 130, 93) zugewandten Seite eine dritte Druckmittelkammer (119). Die dritte Druckmittelkammer (119) ist über einen ersten Druckmittelanschluß (121) und eine Druckmittelleitung (122) mit der Hauptkammer (3) der Luftfeder (2, 3) verbunden und die zweite Druckmittelkammer (111) steht über einen zweiten Druckmittelanschluß (106) und eine Druckmittelleitung (107) mit der Zusatzkammer (8) in Verbindung.

Der zweite Kolben (117, 118) weist eine zentrisch angeordnete Durchgangsöffnung (135) auf, die von einem koaxial zur Kolbenstangen (109) am zweiten Kolben (117, 118) angeordneten rohrförmigen Teil, welches als erster Ventilkörper (137) eines Ventils (137, 131, 134) dient, begrenzt wird und durch welche die Kolbenstange (109) des ersten Kolbens (102) hindurch geführt ist.

Die Kolbenstange (109) weist einen ersten eingeschnürten Bereich (139) und einen zweiten eingeschnürten Bereich (128) auf. Der zwischen den eingeschnürten Bereichen (139 und 128) gelegene Teil der Kolbenstange (109) weist eine Umfangsnut auf, in welcher ein Dichtring (134) angeordnet ist, der dichtend an der der Kolbenstange (109) gegenüberliegenden Wand des rohrförmien ersten Ventilkörpers (137) anliegt. Der den Dichtring (134) tragende Bereich des zwischen den eingeschnürten Bereichen (139 und 128) gelegenen Teiles der Kolbenstange (109) dient als ein als Ventilschließglied ausgebildeter zweiter Ventilkörper (131, 134), welcher zusammen mit dem ersten Ventilkörper (137), der mit dem zweiten Kolben (117, 118) verbunden ist, das in der Art eines Schieberventils wirkende Ventil (137, 131, 134) bildet. Der freie Endbereich der Kolbenstange (109), der ebenso wie der zweite Ventilkörper (131, 134) einen größeren Durchmesser aufweist als die eingeschnürten Bereiche (139 und 128) der Kolbenstange (109), dient als ein erstes Drosselglied (126). Der dem ersten Drosselglied (126) gegenüberliegende, an den Dichtring (134) angrenzende Bereich des zweiten Ventilkörpers (131, 134) hat zusätzlich zu seiner Ventilfunktion die Funktion eines zweiten Drosselgliedes (131). Die der Kolbenstange (109) gegenüberliegende Wand des rohrförmigen ersten Ventilkörpers (137) und die mit dieser Wand korrespondierende Mantelfläche des ersten Drosselgliedes (126) begrenzen den Durchlaßquerschnitt (Drosselspalt) einer ersten Drosseleinrichtung (137, 126). Die der Kolbenstange (109) gegenüberliegende Wand des rohrförmigen ersten Ventilkörpers (137) und die mit dieser Wand korrespondierende Mantelfläche des zweiten Drosselgliedes (131) begrenzen den Durchlaßquerschnitt (Drosselspalt) einer zweiten Drosseleinrichtung (137, 131).

Die dem zweiten Kolben (117, 118) zugewandte Seite des zweiten Gehäuseteiles (93) dient mit ihrem sich in den Gehäuseinnenraum hineinerstreckenden äußeren Rand als ein erster Anschlag (115) für den zweiten Kolben (117, 118). Als ein zweiter Anschlag (132) für den zweiten Kolben (117, 118) dient die der dritten Druckmittelkammer (119) zugewandte Seite des Bodens (130) des ersten Gehäuseteiles (91, 130).

Der zweite Kolben (117, 118) und der am zweiten Kolben (117, 118) angeordnete erste Ventilkörper (137) sind in ihrer axialen Erstreckung so bemessen, daß der erste Ventilkörper (137) und das rohrförmige Teil (108) des zweiten Gehäuseteiles (93) bzw. der erste Ventilkörper (137) und das topfförmige Teil (124) des Bodens (130) auch dann nicht aneinander zur Anlage kommen können, wenn der zweite Kolben (117, 118) am ersten Anschlag (115) oder am zweiten Anschlag (132) anliegt, so daß bei geöffnetem Ventil (137, 131, 134) keine unbeabsichtigte Drosselung des Druckmittelstromes von der jeweils einen Druckmittelkammer zu der jeweils anderen Druckmittelkammer erfolgen kann, und daß das Ventil (137, 131, 134) sich immer in seiner Schließstellung befindet, wenn der erste Kolben (102) sich in seiner Ausgangsstellung befindet.

In der Ausgangsposition des ersten Kolbens (102), bei gleichzeitiger neutraler Mittelstellung des zweiten Kolbens (117, 118), befindet der als Ventilschließglied dienende zweite Ventilkörper (131, 134) sich im mittleren Bereich des die Durchgangsöffnung (135) im zweiten Kolben (117, 118) begrenzenden rohrförmigen ersten Ventilkörpers (137). Die eingeschnürten Bereiche (139 und 128) der Kolbenstange (109) besitzen mehrere in Richtung der Längsachse der Kolbenstange (109) verlaufende rippenartige Vorsprünge (116, 127), die in gleichem Abstand zueinander auf dem Umfang der eingeschnürten Bereiche (139 und 128) angeordnet sind.

Der zweite Ventilkörper (131, 134) bildet mit dem ersten Ventilkörper (137) das Ventil (131, 134, 137), mittels welchem die dritte Druckmittelkammer (119) und die zweite Druckmittelkammer (111) und somit die Hauptkammer (3) der Luftfeder (2, 3) und die Zusatzkammer (8) wahlweise miteinander verbindbar oder gegeneinander absperrbar sind. In der zweiten Druckmittelkammer (111) ist eine als Druckfeder dienende erste Feder (114) angeordnet, die sich mit ihrem einen Ende an der ringförmigen Wand (110) des zweiten Gehäuseteiles (93) abstützt und mit ihrem anderen Ende den zweiten Kolben (117, 118) in Richtung auf die dritte Druckmittelkammer (119) zu beaufschlagt. Ebenso ist in der dritten Druckmittelkammer (119) eine als Druckfeder dienende zweite Feder (120) angeordnet, die sich mit ihrem einen Ende am Boden (130) des Gehäuses (91, 130, 193) abstützt und mit ihrem anderen Ende den zweiten Kolben (117, 118) in Richtung auf die zweite Druckmittelkammer (111) zu beaufschlagt. Die beiden einander entgegengerichtet auf den zweiten Kolben (117, 118) einwirkenden Federn (114 und 120) sind so dimensioniert, daß sie den zweiten Kolben (117, 118) in seiner neutralen Mittelstellung stabilisieren und der zweite Kolben (117, 118) einen Hub in Richtung auf die zweite Druckmittelkammer (111) bzw. die dritte Druckmittelkammer (119) zu ausführen kann, in welcher der jeweils niedrigere Druck herrscht, wenn die Druckdifferenz zwischen dem Druck in der zweiten Druckmittelkammer (111) und dem Druck in der dritten Druckmittelkammer (119) einen vorbestimmten Wert erreicht oder überschreitet. Die Federkräfte sind dabei so ausgelegt, daß bei drucklosen Druckmittelkammern (111 und 119) jede der beiden Federn (114 bzw. 120) in der Lage ist, die Reibkraft der Dichtelemente (136 und 134) und gegebenenfalls die Restkraft der jeweils anderen Feder zu überwinden, um den Kolben (117, 118) von einer Endlage in die neutrale Mittelstellung zu bringen.

Der als Steuereinrichtung für das Ventil (137, 131, 134) dienende erste Kolben (102) weist eine zentrisch angeordnete Vertiefung (112) auf, die sich bis in die Kolbenstange (109) hineinerstreckt. Mit seiner der Steuerkammer (105) abgewandten Seite begrenzt der erste Kolben (102) einen Federraum (101), der über eine im Deckel (98) angeordnete Durchgangsöffnung (100) mit der Atmosphäre verbunden ist. Im Federraum (101) ist eine als Druckfeder dienende Feder (99) so angeordnet, daß sie sich mit ihrem einen Ende in einer ringförmigen Vertiefung des Deckels (98) abstützt und mit ihrem anderen Ende den ersten Kolben (102) in Richtung auf die Steuerkammer (105) zu beaufschlagt, wobei sie über einen Teil ihrer axialen Erstreckung in die Vertiefung (112) des ersten Kolbens (102) eingetaucht ist. Die Feder (99) ist so dimensioniert, daß sie den ersten Kolben (102) auch dann in seiner Ausgangsstellung hält, wenn der auf die Stirnseite des ersten Drosselgliedes (126) einwirkende Druck in der dritten Druckmittelkammer (119) seine maximale Höhe hat. Wird auf die Anordnung von Rippen im topfförmigen Teil (124) des Bodens (130) des Gehäuses (91, 130, 93) verzichtet, so kann auf dem Umfang des ersten Drosselgliedes (126) ein Dichtring angeordnet werden, der dichtend an der Innenwand des topfförmigen Teiles (124) anliegt. Eine Beaufschlagung der Stirnseite des ersten Drosselgliedes (126) mit dem Druckmittel in der dritten Druckmittelkammer (119) wird dann verhindert. Die Feder (99) kann in einem solchen Fall schwächer dimensioniert sein. Es muß dann allerdings eine Entlüftungsöffnung im Boden des topfförmigen Teiles (124) angeordnet werden.

Über die als Steuerleitung dienende Druckmittelleitung (50) ist der als Steueranschluß (95) dienende dritte Druckmittelanschluß der Ventileinrichtung (6) mit dem Ausgang des als 3/2-Wege-Magnetventil ausgebildeten Ventils (46) verbunden. Der Druckmitteleingang des Ventils (46) steht über die Druckmittelleitung (45) mit der Druckmittelquelle (44) in Verbindung. Der Elektromagnet (49) des Ventils (46) ist über die elektrische Leitung (48) mit der Auswahl- und Steuereinrichtung (47) verbunden.

Der erste Kolben (102) dient als Betätigungselement für das Ventil (137, 131, 134) und somit auch als Steuereinrichtung zum Aktivieren der Ventileinrichtung (6). Eine erste Einrichtung zum Erkennen einer Druckdifferenz zwischen dem Druck in der Hauptkammer (3) der Luftfeder (2, 3) und dem Druck in der Zusatzkammer (8) wird von dem zweiten Kolben (117, 118) gebildet. Eine zweite Einrichtung zum Verändern des Durchlaßquerschnittes der Ventileinrichtung wird von dem Ventil (137, 131, 134) und den beiden Drosseleinrichtungen (137, 131 und 137, 126) gebildet.

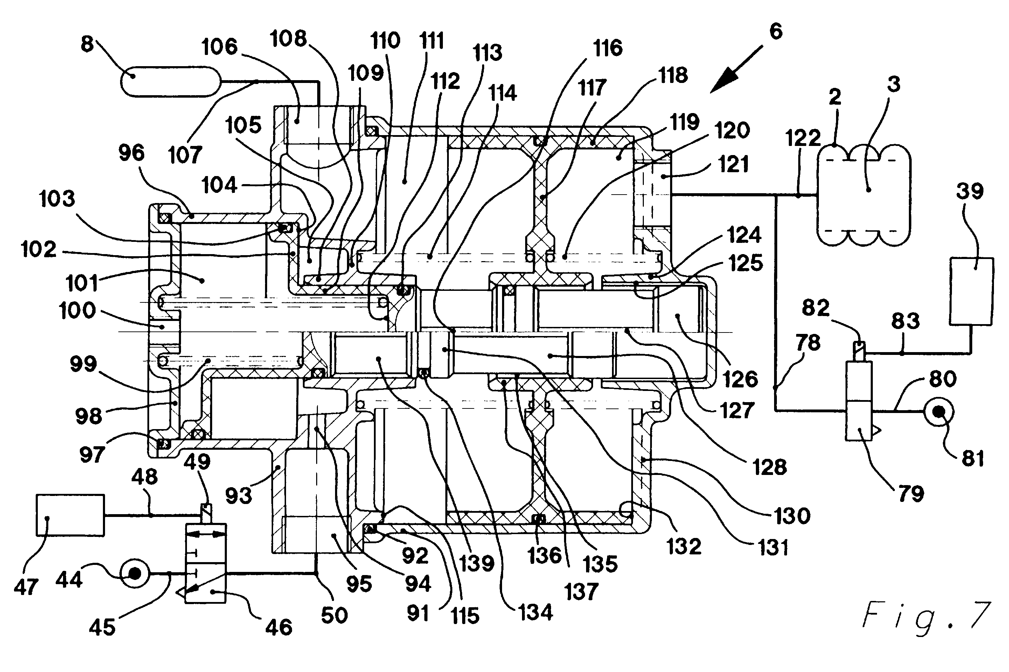

Fig. 7 zeigt die vorstehend beschriebene Ventileinrichtung bei geöffnetem Ventil und aktivierter Drosseleinrichtung. Da die in Fig. 7 dargestellte Ventileinrichtung in ihrem Aufbau identisch ist mit der in Fig. 6 gezeigten Ventileinrichtung, kann auf eine Beschreibung der Fig. 7 verzichtet werden. Der besseren Übersicht halber sind alle Bauteile der in Fig. 7 gezeigten Ventileinrichtung mit den gleichen Bezugszeichen versehen wie die Bauteile der in Fig. 6 gezeigten Ventileinrichtung.

Die Funktion der in den Fig. 6 und 7 gezeigten Ventileinrichtung wird nachfolgend näher erläutert.

Bei gleich hohen Drücken in der Hauptkammer (3) der Luftfeder (2, 3) und in der Zusatzkammer (8) und somit gleich hohen Drücken in der mit der Hauptkammer (3) verbundenen dritten Druckmittelkammer (119) und der mit der Zusatzkammer (8) verbundenen zweiten Druckmittelkammer (111) sowie bei druckloser Steuerkammer (105) befindet der erste Kolben (102) sich in seiner Ausgangsstellung und der zweite Kolben (117, 118) befindet sich in seiner neutralen Mittelstellung. Das Ventil (137, 131, 134) ist geschlossen, die beiden Druckmittelkammern (119 und 111) und somit auch die Hauptkammer (3) der Luftfeder (2, 3) und die Zusatzkammer (8) sind gegeneinander abgesperrt. Die Luftfeder (2, 3) ist auf "HART" eingestellt - s. Fig. 6 -.

Soll die Luftfeder auf "WEICH" eingestellt werden, wird eine entsprechende Taste der Auswahl- und Steuereinrichtung (47) betätigt. Über die elektrische Leitung (48) gelangt ein elektrisches Signal zum Elektromagneten (49) des Ventils (46). Dieses schaltet in der Weise um, daß die Steuerkammer (105) der Ventileinrichtung (6) gegen die Atmosphäre abgesperrt und mit der Druckmittelquelle (44) verbunden wird. Der sich in der Steuerkammer (105) aufbauende Druck verschiebt den als Steuerkolben dienenden ersten Kolben (102) gegen die Kraft der Feder (99) in Richtung auf den Deckel (98) zu, und zwar soweit, bis dieser an dem als Anschlag für den ersten Kolben (102) dienenden Deckel (98) zu Anlage kommt. Der an der Kolbenstange (109) angeordnete zweite Ventilkörper (131, 134) tritt dabei aus dem rohrförmigen ersten Ventilkörper (137) aus. Das Ventil (137, 131) ist dann geöffnet. Die beiden Druckmittelkammern (111 und 119) und somit auch die Hauptkammer (3) der Luftfeder (2, 3) und die Zusatzkammer (8) sind dann über den großen Durchlaßquerschnitt des Ventils (137, 131, 134) miteinander verbunden. Die erste Drosseleinrichtung (137, 126) und die zweite Drosseleinrichtung (137, 131) sind dabei unwirksam.

Soll die Luftfeder (2, 3) wieder auf "HART" gestellt werden, wird durch Betätigen einer entsprechenden Taste der Auswahl- und Steuereinrichtung (47) die Steuerkammer (105) der Ventileinrichtung (6) mittels des Ventils (46) gegen die Druckmittelquelle (44) abgesperrt und mit der Atmosphäre verbunden. Der erste Kolben (102) wird durch die Kraft der Feder (99) in seine Ausgangsstellung zurückgeschoben. Das Ventil (137, 131, 134) gelangt dabei in seine Schließstellung, so daß die beiden Druckmittelkammern (111 und 119) und somit auch die Hauptkammer (3) der Luftfeder (2, 3) und die Zusatzkammer (8) dann wieder gegeneinander abgesperrt sind.

Sinkt der Druck in den Luftfedern (2, 3) des Fahrzeugs aufgrund einer Verringerung der Fahrzeugbeladung, wenn die Ventileinrichtung (6) sich in ihrer Absperrstellung befindet - Hauptkammer (3) der Luftfeder (2, 3) und Zusatzkammer (8) gegeneinander abgesperrt -, überwiegt der Druck in der mit der Zusatzkammer (8) verbundenen zweiten Druckmittelkammer (111) gegenüber dem Druck in der mit der Hauptkammer (3) verbundenen dritten Druckmittelkammer (119). Der zweite Kolben (117, 118) wird dann vom Druck in der zweiten Druckmittelkammer (111) in Richtung auf die dritte Druckmittelkammer (119) zu verschoben und kommt am zweiten Anschlag (132) zu Anlage. Das Ventil (137, 131, 134) verbleibt dabei in seiner Schließstellung - s. Fig. 7, obere Hälfte der Abbildung -.

Soll die Härte der Federeinrichtung verringert werden, erfolgt dies in der Weise, daß nach dem Betätigen der entsprechenden Taste der Auswahl- und Steuereinrichtung (47) die Steuerkammer (105) der Ventileinrichtung (6) mittels des Ventils (46) gegen die Atmosphäre abgesperrt und mit der Druckmittelquelle (44) verbunden wird. Der sich dann in der Steuerkammer (105) aufbauende Druck verschiebt den ersten Kolben (102) gegen die Kraft der Feder (99) in Richtung auf den Deckel (98) zu, soweit, bis der erste Kolben (102) am Deckel (98) zur Anlage kommt. Der über die Kolbenstange (109) mit dem ersten Kolben (102) verbundene zweite Ventilkörper (131, 134) wird in der gleichen Richtung mitgenommen und tritt aus dem mit dem zweiten Kolben (117, 118) verbundenen rohrförmigen ersten Ventilkörper (137) aus. Das ebenfalls an der Kolbenstange (109) angeordnete erste Drosselglied (126) wird dabei von der Kolbenstange (109) ebenfalls in der gleichen Richtung mitgenommen und taucht dabei in den rohrförmigen ersten Ventilkörper (137) ein. Das Ventil (137, 131, 134) ist dann geöffnet und die erste Drosseleinrichtung (137, 126) ist dann wirksam -siehe Fig. 7, untere Hälfte der Abbildung-. Druckmittel aus der zweiten Druckmittelkammer (111) strömt dann durch das geöffnete Ventil (137, 131, 134) und den Drosselspalt der ersten Drosselleinrichtung (137, 126) in die dritte Druckmittelkammer (119) und von dieser weiter in die Hauptkammer (3). Aufgrund der sich dann verringernden Druckdifferenz zwischen dem Druck in der zweiten Druckmittelkammer (111) und dem Druck in der dritten Druckmittelkammer (119) bewegt der zweite Kolben (117, 118) sich langsam in Richtung auf die zweite Druckmittelkammer (111) zu. Dabei bewegt sich der rohrförmige erste Ventilkörper (137) in Richtung vom Drosselglied (126) weg. Wenn Druckgleichheit oder annähernd Druckgleichheit zwischen dem Druck in der zweiten Druckmittelkammer (111) und somit dem Druck in der Zusatzkammer (8) und dem Druck in der dritten Druckmittelkammer (119) und somit dem Druck in der Hauptkammer (3) der Luftfeder (2, 3) erreicht ist, befindet der zweite Kolben (117, 118) sich wieder in seiner neutralen Mittelstellung, in welcher der rohrförmige erste Ventilkörper (137) den Bereich des ersten Drosselgliedes (126) verlassen hat. Die erste Drosseleinrichtung (137, 126) ist dann unwirksam. Die Hauptkammer (3) der Luftfeder (2, 3) ist dann über den großen Durchlaßquerschnitt des Ventils (137, 131, 134) ungedrosselt mit der Zusatzkammer (8) verbunden.

Soll die Luftfeder (2, 3) wieder auf "HART" eingestellt werden, wird die Steuerkammer (105) entlüftet. Der erste Kolben (102) wird von der Feder (99) wieder in seine Ausgangsstellung zurückgeschoben, wobei das Ventil (137, 131, 134) wieder in seine Schließstellung gelangt. Die Hauptkammer (3) der Luftfeder (2, 3) ist dann gegen die Zusatzkammer (8) abgesperrt.

Geht man von einem Betriebszustand der Luftfederanlage des Fahrzeugs aus, in welchem nach dem Beladen des Fahrzeugs in der Hauptkammer (3) der Luftfeder (2, 3) ein höherer Druck herrscht als in der der Luftfeder (2, 3) zugeordneten Zusatzkammer (8), und in welchem die Hauptkammer (3) und die Zusatzkammer (8) mittels der Ventileinrichtung (6) gegeneinander abgesperrt sind, bewegt der zweite Kolben (117, 118) sich aufgrund des höheren Druckes in der dritten Druckmittelkammer (119) gegen die Kraft der Feder (114) in Richtung auf die zweite Druckmittelkammer (111) zu und kommt dort am zweiten Anschlag (115) zur Anlage.

Soll die Luftfeder (2, 3) auf "WEICH" eingestellt werden, wird nach dem Betätigen einer entsprechenden Taste der Auswahl- und Steuereinrichtung (47) über das Ventil (46) Druckmittel in die Steuerkammer (105) der Ventileinrichtung (6) eingesteuert. Der sich in der Steuerkammer (105) aufbauende Druck verschiebt den ersten Kolben (102) gegen die Kraft der Feder (99) in Richtung auf den Deckel (98) zu. Der zweite Ventilkörper (131, 134) (der den Dichtring 134 aufweisende Bereich des zweiten Drosselgliedes 131) tritt dabei aus dem rohrförmigen ersten Ventilkörper (137) aus, so daß sich das Ventil (137, 131, 134) dann in seiner Offenstellung befindet. Das zweite Drosselglied (131) (der Bereich des Drosselgliedes 131, der keinen Dichtring aufweist) befindet sich dabei noch im rohrförmigen ersten Ventilkörper (137). Die zweite Drosseleinrichtung (137, 131) ist dann wirksam. Von der dritten Druckmittelkammer (119) und somit von der Hauptkammer (3) der Luftfeder (2, 3) strömt dann Druckmittel durch den Drosselspalt (Spalt zwischen der Wand des ersten Ventilkörpers 137 und Mantelfläche des zweiten Drosselgliedes 131) der zweiten Drosseleinrichtung (137, 131) und das geöffnete Ventil (137, 131, 134) in die zweite Druckmittelkammer (111) und von dieser weiter in die Zusatzkammer (8).

Aufgrund der sich langsam verringernden Druckdifferenz zwischen dem Druck in der mit der Hauptkammer (3) verbundenen dritten Druckmittelkammer (119) und dem Druck in der mit der Zusatzkammer (8) verbundenen zweiten Druckmittelkammer (111) bewegt der zweite Kolben (117, 118) sich langsam in Richtung auf die dritte Druckmittelkammer (119) zu. Dabei bewegt der rohrförmige erste Ventilkörper (137) sich in Richtung vom zweiten Drosselglied (131) weg. Wenn Druckgleichheit oder annähernd Druckgleichheit zwischen dem Druck in der dritten Druckmittelkammer (119) und dem Druck in der zweiten Druckmittelkammer (111) erreicht ist, hat auch der zweite Kolben (117, 118) wieder seine neutrale Mittelstellung erreicht, in welcher der rohrförmige erste Ventilkörper (137) den Bereich des zweiten Drosselgliedes (131) verlassen hat. In dieser Stellung des zweiten Kolbens (117, 118) ist die zweite Drosseleinrichtung (137, 131) unwirksam. Die Hauptkammer (3) der Luftfeder (2, 3) ist dann über den großen Durchlaßquerschnitt des Ventils (137, 131, 134) ungedrosselt mit der Zusatzkammer (8) verbunden.

Soll die Luftfeder (2, 3) auf "HART" eingestellt werden, betätigt der Fahrer des Fahrzeugs eine entsprechende Taste der Auswahl- und Steuereinrichtung (47). Über das Ventil (46) wird die Steuerkammer (105) der Ventileinrichtung (6) dann entlüftet. Durch die Kraft der Feder (99) wird der erste Kolben (102) in seine Ausgangsstellung zurückgeschoben, wobei das Ventil (137, 131, 134) wieder in seine Schließstellung gelangt. Die Hauptkammer (3) der Luftfeder (2, 3) ist dann gegen die Zusatzkammer (8) abgesperrt.

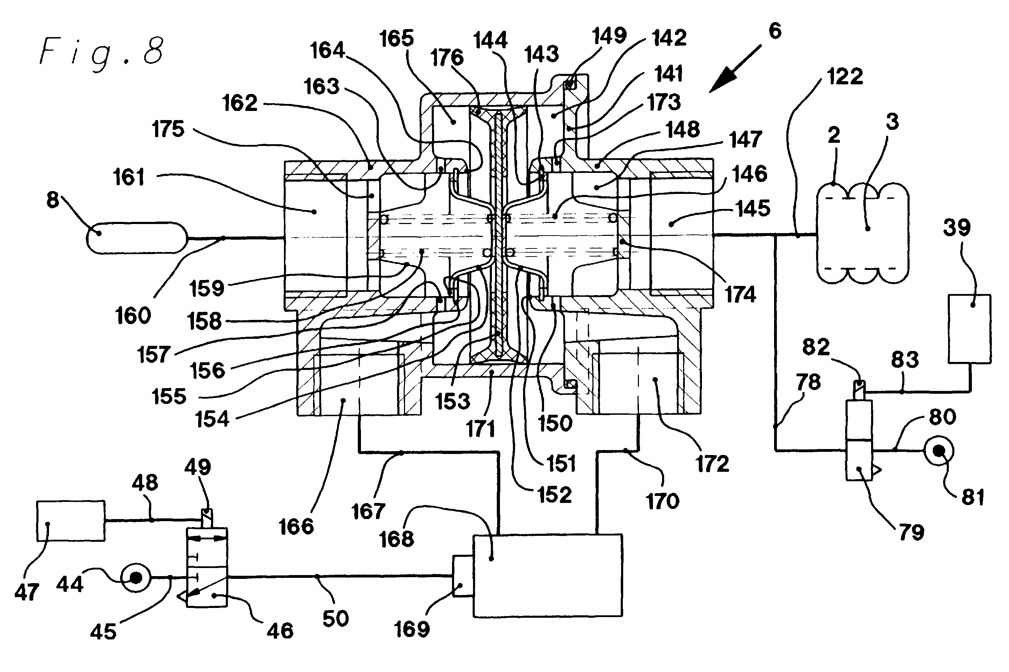

In Fig. 8 ist eine Ventileinrichtung zum Verbinden von Hauptkammer und Zusatzkammer einer Federeinrichtung dargestellt, deren Ventil zum Verbinden der in der Ventileinrichtung gelegenen Druckmittelkammern miteinander außerhalb des Gehäuses der Ventileinrichtung angeordnet ist. Die Bauteile und Leitungen, die gleich sind den in den Figuren 3 bis 7 gezeigten Bauteilen und Leitungen, sind auch mit gleichen Bezugsziffern versehen.

Die in Fig. 8 gezeigte Ventileinrichtung weist ein Gehäuse (171, 141) auf, das aus einem topfförmig ausgebildeten ersten Gehäuseteil (171) und einem als Deckel ausgebildeten zweiten Gehäuseteil (141), welches das topfförmige Gehäuseteil (171) verschließt, besteht.

Zwischen den beiden Gehäuseteilen (171 und 141) ist ein Dichtring (149) angeordnet, der den Gehäuseinnenraum gegen die Atmosphäre abdichtet. Das zweite Gehäuseteil (141) besitzt einen ersten rohrförmigen Gehäusefortsatz (148), der sich mit seinem einen Ende nach außen, vom Deckel weg, und mit seinem anderen Ende in den Gehäuseinnenraum hineinerstreckt. Am Boden des topfförmigen ersten Gehäuseteiles (171) ist ein zweiter rohrförmiger Gehäusefortsatz (162) angeordnet, der sich mit seinem einen Ende nach außen, vom Boden weg, und mit seinem anderen Ende in den Gehäuseinnenraum hineinerstreckt. Die beiden rohrförmigen Gehäusefortsätze (162) und (148) sind gleichachsig zueinander angeordnet.

Im Gehäuse (171, 141) ist ein mit Dichtlippen (176) versehener scheibenförmiger Kolben (153, 176) in Richtung der Längsachse des Gehäuses (171, 141) bewegbar angeordnet. Der Kolben (153, 176) ist zwischen den einander zugewandten Seiten der beiden rohrförmigen Gehäusefortsätze (148 und 162) angeordnet und trennt eine erste Druckmittelkammer (142) von einer zweiten Druckmittelkammer (165). Das sich auf den Kolben (153, 176) zu erstreckende freie Ende des ersten Gehäusefortsatzes (148), welches innerhalb der ersten Druckmittelkammer (142) gelegen ist, ist als ein Ventilsitz (151) ausgebildet, der mit der ihm zugewandten Seite des auch als Ventilschließglied (153) dienenden scheibenförmigen Teiles des Kolbens (153, 176) ein erstes Ventil (151, 153) bildet. Das sich dem ersten Gehäusefortsatz (148) entgegengerichtet ebenfalls auf den Kolben (153, 176) zu erstreckende freie Ende des zweiten Gehäusefortsatzes (162), welches innerhalb der zweiten Druckmittelkammer (165) gelegen ist, ist als ein Ventilsitz (164) ausgebildet, der mit der ihm zugewandten Seite des als Ventilschließglied (153) dienenden scheibenförmigen Teiles des Kolbens (153, 176) ein zweites Ventil (164, 153) bildet.

Im ersten Gehäusefortsatz (148) ist eine Feder (146) angeordnet, die sich an einem Steg (174) im ersten Gehäusefortsatz (148) abstützt und mit ihrem anderen Ende einen topfförmig ausgebildeten Federteller (152) in Richtung auf das Ventilschließglied (153) zu beaufschlagt und den Federteller (152) in Anlage mit einem als Anschlag (144) dienenden Sicherungsring hält, der in einer in der Wand des ersten Gehäusefortsatzes (148) angeordneten Nut (143) gehalten wird. Zwischen dem Federteller (152) und dem Steg (174) sind im ersten Gehäusefortsatz (148) Rippen (147) angeordnet, an welchen der Federteller (152) bei einer Bewegung in Richtung auf den Steg (174) zu zur Anlage bringbar ist.

In gleicher Weise ist im zweiten Gehäusefortsatz (162) eine Feder (158) angeordnet, die sich mit Ihrem einen Ende an einem Steg (175) im Gehäusefortsatz (162) abstützt und mit ihrem anderen Ende einen topfförmig ausgebildeten Federteller (154) in Richtung auf das Ventilschließglied (153) zu beaufschlagt und den Federteller (154) in Anlage mit einem als Anschlag (155) dienenden Sicherungsring hält, der in einer in der Wand des Gehäusefortsatzes (162) angeordneten Nut (156) gehalten wird. Zwischen dem Federteller (154) und dem Steg (175) sind im zweiten Gehäusefortsatz (162) Rippen (159) angeordnet, an welchen der Federteller (154) bei einer Bewegung in Richtung auf den Steg (175) zu zur Anlage bringbar ist.

Die so in den Gehäusefortsätzen (148 und 162) gefesselt angeordneten, als Druckfedern dienenden Federn (146 und 158) sind so dimensioniert, und die Federteller (152 und 154) sind so ausgebildet und so zu dem Ventilschließglied (153) angeordnet, daß zwischen jedem Federteller (152 bzw. 154) und der diesem zugeordneten Seite des Ventilschließgliedes (153) ein Spalt verbleibt. Es ist natürlich auch möglich, die Federn (146 und 158) so zu bemessen, daß die Federteller (152 und 154) am Ventilschließglied (153) anliegen. Die Federkräfte sind so bemessen, daß bei drucklosen Druckmittelkammern (142, 165) jede der Federn (146 bzw. 158) in der Lage ist, die Reibkraft der Dichtlippen (176) des Kolbens (153, 176) und gegebenenfalls die Restkraft der jeweils anderen Feder (158 bzw. 146) zu überwinden und den Kolben (153, 176) von einer Endlage in seine neutrale Mittelstellung zu bringen.

Der sich vom Gehäuse (171, 141) weg erstreckende Teil des ersten Gehäusefortsatzes (148) ist an seinem freien Ende als ein erster Druckmittelanschluß (145) ausgebildet, der über eine Druckmittelleitung (122) mit der Hauptkammer (3) der Luftfeder (2, 3) verbunden ist. An die Druckmittelleitung (122) ist die zum Ausgang des elektromagnetisch betätigbaren 3/2-Wegeventils (79) führende Druckmittelleitung (78) angeschlossen. Der Eingang des 3/2-Wegeventils (79) steht über die Druckmittelleitung (80) mit der Druckmittelquelle (81) in Verbindung. Die elektrische Leitung (83) verbindet den Elektromagneten (82) des 3/2-Wegeventils (79) mit der Auswahl- und Steuereinrichtung (39).

Der sich vom Gehäuse (171, 141) weg erstreckende Teil des zweiten Gehäusefortsatzes (162) ist an seinem freien Ende als ein zweiter Druckmittelanschluß (161) ausgebildet, der über eine Druckmittelleitung (160) mit der Zusatzkammer (8) verbunden ist.

In dem Bereich der Wand des ersten Gehäusefortsatzes (148), der in der ersten Druckmittelkammer (142) der Ventileinrichtung (6) gelegen ist, sind mehrere als eine erste Drossel (150, 173, 151, 153) dienende Durchgangsöffnungen angeordnet. Die erste Drossel (150, 173) bildet mit dem ersten Ventil (151, 153) eine zwischen der Hauptkammer (3) und einem dritten Ventil (168) zum Verbinden der ersten Druckmittelkammer (142) mit der zweiten Druckmittelkammer (165) bzw. zwischen der Hauptkammer (3) und der ersten Druckmittelkammer (142) angeordnete erste Drosseleinrichtung (150, 173, 151, 153), deren Durchlaßquerschnitt mittels des ersten Ventils (151, 153) veränderbar ist. Der Durchlaßquerschnitt des ersten Ventils (151, 153) ist dabei der große Durchlaßquerschnitt und die erste Drossel (150, 173) ist dabei der kleine Durchlaßquerschnitt der ersten Drosseleinrichtung (150, 173, 151, 153). Die erste Druckmittelkammer (142) ist über das erste Ventil (151, 153) mit der Hauptkammer (3) der Luftfeder (2, 3) verbindbar und über die erste Drossel (150, 173) ständig mit der Hauptkammer (3) der Luftfeder (2, 3) verbunden.

Ebenso weist der Bereich der Wand des zweiten Gehäusefortsatzes (162), der in der zweiten Druckmittelkammer (165) gelegen ist, mehrere als eine zweite Drossel (157, 163) dienende Durchgangsöffnungen auf. Die zweite Drossel (157, 163) bildet mit dem zweiten Ventil (164, 153) eine zwischen der Zusatzkammer (8) und dem dritten Ventil (168) bzw. zwischen der Zusatzkammer (8) und der zweiten Druckmittelkammer (165) angeordnete zweite Drosseleinrichtung (157, 163, 164, 153), deren Durchlaßquerschnitt mittels des zweiten Ventils (164, 153) veränderbar ist. Der Durchlaßquerschnitt des zweiten Ventils (164, 153) ist dabei der große Durchlaßquerschnitt und die zweite Drossel (157, 163) ist dabei der kleine Durchlaßquerschnitt der zweiten Drosseleinrichtung (157, 163, 164, 153). Die zweite Druckmittelkammer (165) ist über das zweite Ventil (164, 153) mit der Zusatzkammer (8) verbindbar und über die zweite Drossel (157, 163) ständig mit der Zusatzkammer (8) verbunden.

Das Gehäuse (171, 141) weist einen dritten Druckmittelanschluß (172) und einen vierten Druckmittelanschluß (166) auf, wobei der dritte Druckmittelanschluß (172) der ersten Druckmittelkammer (142) und der vierte Druckmittelanschluß (166) der zweiten Druckmittelkammer (165) der Ventileinrichtung (6) zugeordnet ist. Über eine Druckmittelleitung (170) ist der dritte Druckmittelanschluß (172) mit einem Druckmittelanschluß des als steuerbares Absperrventil ausgebildeten dritten Ventils (168) verbunden. Eine Druckmittelleitung (167) verbindet den vierten Druckmittelanschluß (166) der Ventileinrichtung (6) mit einem weiteren Druckmittelanschluß des dritten Ventils (168). Ein Steuereingang (169) des dritten Ventils (168) ist über die als Steuerleitung dienende Druckmittelleitung (50) mit dem Ausgang des als 3/2-Wege-Elektromagnetventil ausgebildeten Ventils (46) verbunden. Der Eingang des Ventils (46) steht über die Druckmittelleitung (45) mit der Druckmittelquelle (44) in Verbindung. Der Elektromagnet (49) des Ventils (46) ist über die elektrische Leitung (48) mit der weiteren Auswahl- und Steuereinrichtung (47) verbunden. Der Durchlaßquerschnitt des dritten Ventils (168) ist mindestens so groß wie der Durchlaßquerschnitt des ersten Ventils (151, 153) oder des zweiten Ventils (164, 153).

Die Funktion der vorstehend beschriebenen, in einer Federeinrichtung eines Fahrzeugs angeordneten Ventileinrichtung wird nachfolgend näher erläutert. Auf die Funktion der Ventile (79 und 46) sowie der Auswahl- und Steuereinrichtungen (39 und 47) wird nicht mehr näher eingegangen, da sie die gleiche Funktion haben wie die in den vorangegangenen Ausführungsbeispielen bereits beschriebenen entsprechenden Ventile und Auswahl- und Steuereinrichtungen.

Es wird angenommen, daß die Luftfeder (2, 3) auf "HART" eingestellt ist und die Drücke in der Hauptkammer (3) der Luftfeder (2, 3) und in der Zusatzkammer (8) gleich hoch sind. Der Steueranschluß (169) des als Absperrventil ausgebildeten Ventils (168) ist über das Ventil (46) mit der Atmosphäre verbunden. Die als Steuerdruckquelle dienende Druckmittelquelle (44) und der Steueranschluß (169) des Absperrventils (168) sind mittels des Ventils (46) gegeneinander abgesperrt. Das dritte Ventil (168) befindet sich in seiner Schließstellung, so daß die mit der Hauptkammer (3) verbundene erste Druckmittelkammer (142) und die mit der Zusatzkammer (8) verbundene zweite Druckmittelkammer (165) gegeneinander abgesperrt sind. Das Ventil (151, 153) der ersten Drosseleinrichtung (150, 173, 151, 153) und das Ventil (164, 153) der zweiten Drosseleinrichtung (157, 163, 164, 153) der Ventileinrichtung (6) befinden sich in ihrer Offenstellung, so daß die Hauptkammer (3) der Luftfeder (2, 3) über den großen Durchlaßquerschnitt -erstes Ventil (151, 153)- der ersten Drosseleinrichtung (150, 173, 151, 153) mit der ersten Druckmittelkammer (142) und die Zusatzkammer (8) über den großen Durchlaßquerschnitt -zweites Ventil (164, 153)-der zweiten Drosseleinrichtung (157, 163, 164, 153) mit der zweiten Druckmittelkammer (165) der Ventileinrichtung (6) verbunden ist. Da somit in der ersten Druckmittelkammer (142) und in der zweiten Druckmittelkammer (165) ebenfalls gleich hohe Drücke herrschen, wird der Kolben (153, 176) von den einander entgegengerichtet auf ihn einwirkenden Kräften dieser Drücke in seiner neutralen Mittelstellung gehalten, wobei die beiden Federn (146 und 158) mit Federtellern (152 und 154) die neutrale Mittelstellung des Kolbens (153, 176) stabilisieren.

Mittels des elektromagnetisch betätigbaren Wegeventils (79) ist die Hauptkammer (3) der Luftfeder (2, 3) gegen die Atmosphäre und gegen die Druckmittelquelle (81) abgesperrt, so daß in der Luftfeder (2, 3) eine konstante Luftmenge vorhanden ist.

Wenn eine weichere Federeinstellung gewünscht wird, betätigt der Fahrer des Fahrzeugs eine entsprechende Taste der Auswahl- und Steuereinrichtung (47). Von der Auswahl- und Steuereinrichtung (47) gelangt ein elektrisches Signal zum Elektromagneten (49) des Ventils (46). Das Ventil (46) schaltet in der Weise um, daß der Steueranschluß (169) des dritten Ventils (168) gegen die Atmosphäre abgesperrt und mit der Druckmittelquelle (44) verbunden wird. Das dritte Ventil (168) wird vom Druck der Druckmittelquelle (44) von seiner Schließstellung in seine Offenstellung gebracht. Über das geöffnete dritte Ventil (168), die Druckmittelleitungen (167 und 170) sowie die Druckmittelanschlüsse (166 und 172) sind die erste Druckmittelkammer (142) und die zweite Druckmittelkammer (165) der Ventileinrichtung (6) und somit die Hauptkammer (3) der Luftfeder (2, 3) und die Zusatzkammer (8) dann miteinander verbunden. Da die Luftfeder (2, 3) dann ein um das Volumen der Zusatzkammer (8) vergrößertes Volumen hat, ist die Luftfeder (2, 3) weich.

Soll die Luftfeder (2, 3) wieder auf "HART" eingestellt werden, betätigt der Fahrer des Fahrzeugs eine entsprechende Taste der Auswahl- und Steuereinrichtung (47). Der Steueranschluß (169) des dritten Ventils (168) wird mittels des Ventils (46) gegen die Druckmittelquelle (44) abgesperrt und mit der Atmosphäre verbunden. Das dritte Ventil (168) gelangt dann in seine Schließstellung und sperrt so die erste Druckmittelkammer (142) und die zweite Druckmittelkammer (165) der Ventileinrichtung (6) und somit die Hauptkammer (3) der Luftfeder (2, 3) und die Zusatzkammer (8) gegeneinander ab.

Geht man von einem Betriebszustand der Luftfederanlage des Fahrzeugs aus, in welchem aufgrund einer Erhöhung der Fahrzeugbeladung in der Hauptkammer (3) der Luftfeder (2, 3) ein höherer Druck herrscht als in der der Luftfeder (2, 3) zugerordneten Zusatzkammer (8) und in welchem die Hauptkammer (3) und die Zusatzkammer (8) mittels der Ventileinrichtung (6) gegeneinader abgesperrt sind, wird das Ventilschließglied (153) aufgrund des höheren Druckes in der ersten Druckmittelkammer (142) gegen die Kraft der Feder (158) dichtend am Ventilsitz (164) des zweiten Ventils (164, 153) gehalten. Der Kolben (153, 176) befindet sich dann in seiner zweiten Endlage.

Soll die Luftfeder (2, 3) auf "WEICH" eingestellt werden, betätigt der Fahrer des Fahrzeugs eine entsprechende Taste der Auswahl- und Steuereinrichtung (47). Über das Ventil (46) wird der Steueranschluß (169) des dritten Ventils (168) mit dem Druck der Druckmittelquelle (44) beaufschlagt. Das dritte Ventil (168) gelangt dann in seine Offenstellung und verbindet die erste Druckmittelkammer (142) und die zweite Druckmittelkammer (165) der Ventileinrichtung (6) miteinander. Aus der ersten Druckmittelkammer (142) strömt dann Druckmittel in die zweite Druckmittelkammer (165) der Ventileinrichtung (6).

Da das Ventil (164, 153) der zweiten Drosseleinrichtung (157, 163, 164, 153) jedoch geschlossen ist, kann das Druckmittel aus der zweiten Druckmittelkammer (165) nur durch die Drossel (157, 163) der zweiten Drosseleinrichtung (157, 163, 164, 153) gedrosselt zum zweiten Druckmittelanschluß (161) der Ventileinrichtung (6) und durch diesen weiter zur Zusatzkammer (8) der Federeinrichtung gelangen. Da die vom Druck in der zweiten Druckmittelkammer (165) beaufschlagte Wirkfläche des Kolbens (153, 176) gegenüber der vom Druckmittel in der ersten Druckmittelkammer (142) beaufschlagten Wirkfläche des Kolbens (153, 176) um die vom Ventilsitz (164) des zweiten Ventils (164, 153) abgedeckte Fläche des Kolbens (153, 176) verringert ist, und die vom Ventilsitz (164) des zweiten Ventils (164, 153) begrenzte Fläche des Ventilschließgliedes (153) nur von dem niedrigeren Druck der Zusatzkammer (8) beaufschlagt wird, wird das zweite Ventil (164, 153) so lange in seiner geschlossenen Stellung gehalten, bis der Druck in der Zusatzkammer (8) und der Druck in der Hauptkammer (3) der Luftfeder (2, 3) sich über die Drossel (157, 163) der zweiten Drosseleinrichtung (157, 163, 164, 153) ausgeglichen haben. Sobald die vom Druck in der Zusatzkammer (8), vom Druck in der zweiten Druckmittelkammer (165) und von der Feder (158) auf den Kolben (153, 176) ausgeübte Kraft gleich oder annähernd gleich ist der dieser Kraft entgegengerichtet vom Druck in der ersten Druckmittelkammer (142) auf den Kolben (153, 176) ausgeübten Kraft, bewegt der Kolben (153, 176) sich in Richtung auf die erste Druckmittelkammer (142) zu, wobei das Ventilschließglied (153) vom Ventilsitz (164) des Ventils (164, 153) der zweiten Drosseleinrichtung (157, 163, 164, 153) abhebt. Das Ventil (164, 153) gelangt in seine Offenstellung. Die Hauptkammer (3) der Luftfeder (2, 3) und die Zusatzkammer (8) sind dann über den großen Durchlaßquerschnitt -Ventil (151, 153)- der ersten Drosseleinrichtung (150, 173, 151, 153), das Absperrventil (168) und den großen Durchlaßquerschnitt -Ventil (164, 153)- der zweiten Drosseleinrichtung (157, 163, 164, 153) miteinander verbunden. Da in der Hauptkammer (3) der Luftfeder (2, 3) und in der Zusatzkammer (8) dann wieder gleich hohe Drücke herrschen, wird der Kolben (153, 176) in seiner neutralen Mittelstellung gehalten, in welcher das erste Ventil (151, 153) und das zweite Ventil (164, 153) sich in ihrer Offenstellung befinden. Das Volumen der Hauptkammer (3) der Luftfeder (2, 3) ist dann um das Volumen der Zusatzkammer (8) vergrößert, woraus eine geringere Härte der Luftfeder (2, 3) resultiert.

Wird eine härtere Einstellung der Federeinrichtung gewünscht, so betätigt der Fahrer des Fahrzeugs eine entsprechende Taste der Auswahl- und Steuereinrichtung (47). Das Ventil (46) sperrt die Druckmittelquelle (44) und den Steueranschluß (169) des dritten Ventils (168) gegeneinander ab und verbindet den Steueranschluß (169) mit der Atmosphäre. Das dritte Ventil (168) gelangt in seine Schließstellung und sperrt die beiden Druckmittelkammern (142 und 165) der Ventileinrichtung (6) und somit die Hauptkammer (3) der Luftfeder (2, 3) und die Zusatzkammer (8) gegeneinander ab. Da in der Hauptkammer (3) der Luftfeder (2, 3) und in der Zusatzkammer (8) gleich hohe Drücke herrschen, wird der Kolben (153, 176) in seiner neutralen Mittelstellung gehalten. Das erste Ventil (151, 153) und das zweite Ventil (164, 153) befinden sich in ihrer Offenstellung. Dadurch, daß die Hauptkammer (3) der Luftfeder (2, 3) gegen die Zusatzkammer (8) abgesperrt ist, steht der Druckluft in der Hauptkammer (3) jetzt nur noch ein um das Volumen der Zusatzkammer (8) verringerts Volumen zur Verfügung. Die Luftfeder (2, 3) ist dadurch härter.

Sinkt der Druck in der Luftfeder (2, 3) aufgrund einer Verringerung der Beladung des Fahrzeugs ab,wenn die Ventileinrichtung (6) sich in ihrer Absperrstellung befindet - Hauptkammer (3) der Luftfeder (2, 3) und Zusatzkammer (8) gegeneinander abgesperrt - ,überwiegt der Druck in der zweiten Druckmittelkammer (165) gegenüber dem Druck in der ersten Druckmittelkammer (142). Der Kolben (153, 176) bewegt sich dann gegen die Kraft der Feder (146) in Richtung auf die erste Druckmittelkammer (142) zu und das Ventilschließglied (153) kommt am Ventilsitz (151) des ersten Ventils (151, 153) zur Anlage. Das erste Ventil (151, 153) befindet sich dann in seiner Schließstellung. Der Kolben (153, 76) befindet sich dann in seiner ersten Endlage.

Soll die Härte der Federeinrichtung verringert werden, erfolgt dies in der Weise, daß nach dem Betätigen der entsprechenden Taste der Auswahl- und Steuereinrichtung (47) der Steueranschluß (169) des dritten Ventils (168) mittels des Ventils (46) gegen die Atmosphäre abgesperrt und mit der Druckmittelquelle (44) verbunden wird. Das dritte Ventil (168) gelangt dann in seine Offenstellung und verbindet so die erste Druckmittelkammer (142) und die zweite Druckmittelkammer (165) der Ventileinrichtung (6) miteinader. Von der zweiten Druckmittelkammer (165) strömt durch das geöffnete dritte Ventil (168) Druckmittel aus der zweiten Druckmittelkammer (165) in die erste Druckmittelkammer (142) und von dieser weiter durch die Drossel (150, 173) der ersten Drosseleinrichtung (150, 173, 151, 153) und den ersten Druckmittelanschluß (145) sowie die Druckmittelleitung (122) gedrosselt zur Hauptkammer (3) der Luftfeder (2, 3). Da die vom Druckmittel in der zweiten Druckmittelkammer (165) beaufschlagte Wirkfläche des Kolbens (176, 153) größer ist als die dieser Wirkfläche entgegengerichtete, um die vom Ventilsitz (151) des ersten Ventils (151, 153) abgedeckte Fläche verringerte Wirkfläche des Kolbens (176, 153) bleibt das Ventil (151, 153) der ersten Drosseleinrichtung (150, 173, 151, 153) geschlossen. Es erfolgt somit ein relativ langsamer Druckausgleich zwischen dem Druck in der Hauptkammer (3) der Luftfeder (2, 3) und dem Druck in der Zusatzkammer (8).

Das Ventil (151, 153) der ersten Drosseleinrichtung (150, 173, 151, 153) wird solange in seiner geschlossenen Stellung gehalten, bis der Druck in der Zusatzkammer (8) und der Druck in der Hauptkammer (3) der Luftfeder (2, 3) sich über die Drossel (150, 173) der ersten Drosseleinrichtung (150, 173, 151, 153) ausgeglichen haben. Sobald die vom Druck in der Hauptkammer (3) der Luftfeder (2, 3), vom Druck in der ersten Druckmittelkammer (142) sowie von der Feder (146) auf den Kolben (153, 176) ausgeübte Kraft gleich oder annähernd gleich der dieser Kraft entgegengerichtet vom Druck in der zweiten Druckmittelkammer (165) auf den Kolben (153, 176) ausgeübten Kraft ist, gelangt das Ventil (151, 153) der ersten Drosseleinrichtung (150, 173, 151, 153) in seine Offenstellung.

Wenn der Druck in der Hauptkammer (3) der Luftfeder (2, 3) und der Druck in der ersten Druckmittelkammer (142) sowie der Druck in der Zusatzkammer (8) und der Druck in der zweiten Druckmittelkammer (165) sich im Gleichgewicht befinden, herrscht auch zwischen den einander entgegengerichtet auf den Kolben (153, 176) einwirkenden Druckkräften Gleichgewicht. Der Kolben (153, 176) wird dann in seiner neutralen Mittelstellung gehalten, in welcher das erste Ventil (151, 153) und das zweite Ventil (164, 153) sich in ihrer Offenstellung befinden.

Da die Steuerung des Ventils (24, 26, 20, 137, 131, 168) zum Verbinden der Hauptkammer (3) mit der Zusatzkammer (8) unabhängig ist von der Steuerung der Drosseleinrichtungen (63, 72, 59, 74, 35, 53, 56, 126, 129, 137, 138, 123, 131, 150, 173, 157, 163, 164, 151, 153) ist das Ventil (24, 26, 20, 137, 131, 168) schnell in seine Offenstellung und auch schnell in seine Schließstellung bringbar. Der verlangsamte Druckausgleichsvorgang zwischen dem Druck in der Hauptkammer (3) und dem Druck in der Zusatzkammer (8) wird ausschließlich von den differenzdruckabhängig steuerbaren Drosseleinrichtungen (63, 72, 59, 74, 35, 53, 56, 126, 129, 137, 138, 123, 131, 150, 173, 157, 163, 164, 151, 153) gesteuert.

Bei den Drosseleinrichtungen gemäß Fig. 3, 4, 6, 7 und 8 handelt es sich um Konstantdrossein (63, 72, 35, 53, 150, 173, 157, 163, 126, 137, 131), die dadurch zu in ihrem Durchlaßquerschnitt veränderbaren Drosseleinrichtungen werden, daß jeder Konstantdrossel ein Ventil (24, 26, 20, 168, 137, 131, 134) parallelgeschaltet ist, mittels welchem die Drossel umgehbar ist. Die Drosseleinrichtungen gemäß Fig. 6 und Fig. 7 bestehen aus je einem Drosselglied (126 und 131), welches mit einem rohrförmigen ersten Ventilkörper (137) eines Ventils (137, 131, 134) zum Verbinden der Hauptkammer (3) mit der Zusatzkammer (8) eine erste Drosseleinrichtung (126, 137 bzw. eine zweite Drosseleinrichtung (131, 137) bildet. Eines der beiden Drosselglieder wird dabei von dem zweiten Ventilkörper (131, 134) des Ventils (137, 131, 134) gebildet.

Selbstverständlich können auch alle die Drosseleinrichtungen bildenden Teile von Bauteilen gebildet werden, die nicht als Ventilkörper dienen.

Der erste Kolben (33, 20, 26) der Ventileinrichtung (6) gemäß Fig. 3 und Fig. 4 muß nicht zwangsläufig als Stufenkolben ausgebildet sein. Auf die durch die Stufe gebildete zweite Wirkfläche (52) kann verzichtet werden, wenn als Rückstellkraft eine Feder verwendet wird. Diese Feder kann dann z.B. in der dritten Druckmittelkammer (76, 77) so angeordnet sein, daß sie sich am Boden des Gehäuses (19, 32) abstützt und die aus erstem Kolben (33, 20, 26) und zweitem Kolben (74, 75) bestehende Kolbeneinheit (33, 20, 26, 74, 75) in Richtung auf die Steuerkammer (31) zu belastet.

Bei allen Ausführungsarten der erfindungsgemäßen Ventileinrichtung (6) ist der Durchlaßquerschnitt des Ventils, welches die der Hauptkammer zugeordnete Druckmittelkammer mit der der Zusatzkammer zugeodneten Druckmittelkammer verbindet, vorteilhafterweise größer als der Durchlaßquerschnitt der mit den Druckmittelanschlüssen der Ventileinrichtung (6) verbundenen Druckmittelleitungen (40, 69, 107, 122, 160). Der Durchlaßquerschnitt der Drosseln ist dagegen kleiner als der Durchlaßquerschnitt der Druckmittelleitungen (40, 69, 107, 122, 160).

## Patentansprüche

1. Mit Druckmittel arbeitende Federeinrichtung für ein Fahrzeug mit folgenden Merkmalen:
a) die Federeinrichtung weist eine Hauptkammer (3) auf, die zur Abstützung eines Aufbaus des Fahrzeugs auf einer Fahrzeugachse dient, wobei die Hauptkammer (3) bei Federhüben ihr Volumen verändert;
b) es ist eine Zusatzkammer (8) vorgesehen, die über eine Ventileinrichtung (6, 15) wahlweise mit der Hauptkammer (3) verbindbar oder gegen diese absperrbar ist;
c) die Ventileinrichtung (6, 15) ist so ausgebildet, daß sie von ihrer Offenstellung schnell in ihre Schließstellung umschaltbar ist, jedoch beim Öffnungsvorgang zwecks Verlangsamung eines Druckausgleichs zwischen dem Druck in der Hauptkammer (3) und dem Druck in der Zusatzkammer (8) eine den Druckmittelstrom drosselnde Voröffnungsphase durchläuft;
gekennzeichnet durch die folgenden Merkmale:
d) d) es ist eine erste Einrichtung (9, 16, 11, 74, 75, 117, 118, 176, 153) zum Erkennen einer Druckdifferenz zwischen dem Druck in der Hauptkammer (3) und dem Druck in der Zusatzkammer (8) vorgesehen;
e) es ist eine zweite Einrichtung (14, 33, 26, 20, 24, 74, 75, 59, 56, 35, 53, 63, 72, 131, 134, 137, 126, 153, 150, 151, 173, 157, 163, 164, 168) zum Verändern des Durchlaßquerschnittes der Ventileinrichtung (6, 15) vorgesehen;
f) es ist eine Steuereinrichtung (11, 17, 46, 33, 102, 168) vorgesehen, die zum Aktivieren der Ventileinrichtung (6, 15) dient;
g) die erste Einrichtung (9, 16, 11, 74, 75, 117, 118, 176, 153) und die zweite Einrichtung (14, 33, 26, 20, 24, 74, 75, 59, 56, 35, 53, 63, 72, 131, 134, 137, 126, 153, 150, 151, 173, 164, 157, 163, 168) sind derart miteinander und mit der Steuereinrichtung (11, 17, 46, 33, 102, 168) verknüpft, daß beim Tätigwerden der Steuereinrichtung (11, 17, 46, 33, 102, 168) und dadurch aktivierter Ventileinrichtung (6, 15) und bei Vorhandensein einer Druckdifferenz zwischen dem Druck in der Hauptkammer (3) und dem Druck in der Zusatzkammer (8) die Ventileinrichtung (6, 15) nur einen Teil ihres Durchlaßquerschnittes und erst bei Verringerung der Druckdifferenz auf einen vorbestimmten Wert ihren gesamten Durchlaßquerschnitt freigibt.

2. Mit Druckmittel arbeitende Federeinrichtung nach Anspruch 1, gekennzeichnet durch die folgenden Merkmale:
a) die erste Einrichtung weist einen Kolben (75, 74, 117, 118, 153, 176) auf, dessen eine Seite mit dem Druck der Hauptkammer (3) und dessen anderen Seite mit dem Druck der Zusatzkammer (8) beaufschlagt wird;
b) es ist ein Ventil (24, 26, 20, 137, 131, 134, 168) vorgesehen, mittels welchem die Hauptkammer (3) und die Zusatzkammer (8) wahlweise miteinander verbindbar oder gegeneinander absperrbar sind;
c) die zweite Einrichtung weist eine zwischen der Hauptkammer (3) und dem Ventil (24, 26, 20, 137, 131, 134, 168) angeordnete erste Drosseleinrichtung (63, 72, 59, 74, 137, 126, 151, 153, 150, 173) und eine zwischen der Zusatzkammer (8) und dem Ventil (24, 26, 20, 137, 131, 134, 168) angeordnete zweite Drosseleinrichtung (35, 53, 56, 74, 137, 131, 157, 163, 153, 164) auf, über welche bei geöffnetem Ventil (24, 26, 20, 137, 131, 168) die Hauptkammer (3) und die Zusatzkammer (8) miteinander verbunden sind;
d) die erste Drosseleinrichtung (63, 72, 59, 74, 137, 126, 151, 153, 150, 173) und die zweite Drosseleinrichtung (35, 53, 56, 74, 137, 131, 157, 163, 164, 153) sind so ausgebildet, daß sie von einer drosselnden Stellung -kleiner Durchlaßquerschnitt- in eine nicht drosselnde Stellung -großer Durchlaßquerschnitt- bringbar sind;
e) die erste Drosseleinrichtung (63, 72, 59, 74, 137, 126, 151, 153, 150, 173) und die zweite Drosseleinrichtung (35, 53, 56, 74, 137, 131, 157, 163, 164, 153) stehen mit dem Kolben (75, 74, 117, 118, 153, 176) der ersten Einrichtung derart in Wirkverbindung, daß bei geöffnetem Ventil (24, 26, 20, 137, 131, 134, 168) und Vorhandensein einer Druckdifferenz zwischen dem Druck in der Hauptkammer (3) und dem Druck in der Zusatzkammer (8) die eine der beiden Drosselleinrichtungen (63, 72, 59, 74, 137, 126, 151, 153, 150, 173 oder 35, 53, 56, 74, 137, 131, 157, 163, 154, 153) sich in ihrer drosselnden Stellung befindet und vom Kolben (75, 74, 117, 118, 153, 176) in ihre nicht drosselnde Stellung gebracht wird, wenn der Druck in der Hauptkammer (3) und der Druck in der Zusatzkammer (8) sich über diese Drosseleinrichtung (63, 72, 59, 74, 137, 126, 151, 153, 150, 173 oder 35, 53, 56, 74, 137, 131, 157, 163, 164, 153) wenigstens annähernd ausgeglichen haben;
f) die Steuereinrichtung weist ein Betätigungselement (102, 33, 26, 20) zum Betätigen des Ventils (24, 26, 20, 137, 131, 134, 168) auf.

3. Mit Druckmittel arbeitende Federeinrichtung nach wenigstens einen der vorhergehenden Ansprüche, gekennzeichnet durch die folgenden Merkmale:
a) die erste Drosseleinrichtung (63, 72, 59, 74, 151, 153, 150, 173) wird von einem ersten Ventil (59, 74, 151, 153) sowie einer ersten Drossel (63, 72, 150, 173) und die zweite Drosseleinrichtung (56, 74, 35, 53, 164, 153, 157, 163) wird von einem zweiten Ventil (56, 74, 164, 153) sowie einer zweiten Drossel (35, 53, 157, 163) gebildet, wobei das erste Ventil (59, 74, 151, 153) und die erste Drossel (63, 72, 150, 173) zwischen der Hauptkammer (3) und einer dieser zugeordneten Druckmittelkammer (76, 77, 142) und das zweite Ventil (56, 74, 164, 153) sowie die zweite Drossel (35, 53, 157, 163) zwischen der Zusatzkammer (8) und einer dieser zugeordneten weiteren Druckmittelkammer (34, 28, 165) angeordnet ist;
b) zur Veränderung des Durchlaßquerschnittes der ersten Drosseleinrichtung (63, 72, 59, 74, 150, 173, 151, 153) dient das erste Ventil (59, 74, 151, 153), wobei der Durchlaßquerschnitt des ersten Ventils (59, 74, 151, 153) als großer Durchlaßquerschnitt der ersten Drosseleinrichtung (63, 72, 59, 74, 151, 153, 150, 173) dient;
c) zur Veränderung des Durchlaßquerschnittes der zweiten Drosseleinrichtung (35, 53, 56, 74, 164, 153, 157, 163) dient das zweite Ventil (56, 74, 164, 153), wobei der Durchlaßquerschnitt des zweiten Ventils (56, 74, 164, 153) als großer Durchlaßquerschnitt der zweiten Drosseleinrichtung (35, 53, 56, 74, 164, 153, 157, 163) dient;
d) als Ventil zum Verbinden der der Hauptkammer (3) zugeordneten Druckmittelkammer (77, 76, 142) mit der der Zusatzkammer (8) zugeordneten weiteren Druckmittelkammer (34, 28, 165) dient das mittels des Betätigungselementes (33, 102) betätigbare Ventil (20, 24, 26, 168).

4. Mit Druckmittel arbeitende Federeinrichtung nach wenigstens einem der vorhergehenden Ansprüche, gekennzeichnet durch die folgenden Merkmale:
a) das Ventil (137, 131, 134) zum Verbinden der Hauptkammer (3) mit der der Zusatzkammer (8) wird von einem mit dem Kolben (117, 118) der ersten Einrichtung verbundenen ersten Ventilkörper (137) und einem mit dem Betätigungselement (102) verbundenen zweiten Ventilkörper (131, 134) gebildet, wobei der Kolben (117, 118) und das Betätigungselement (102) relativ zueinander bewegbar sind,
b) die erste Drosseleinrichtung (137, 126,) wird von einem mit dem Betätigungselement (102) für das Ventil (137, 131, 134) verbundenen ersten Drosselglied (126) und dem ersten Ventilkörper (137) und die zweite Drosseleinrichtung ( 137, 131) wird von einem ebenfalls mit dem Betätigungselement (102) verbundenen zweiten Drosselglied (131) sowie dem ersten Ventilkörper (137) gebildet;
c) das erste Drosselglied (126) und das zweite Drosselglied (131) sind so ausgebildet und so zu dem ersten Ventilkörper (137) angeordnet, daß bei Vorhandensein von einer Druckdifferenz zwischen dem Druck in der Hauptkammer (3) und dem Druck in der Zusatzkammer (8) bei geöffnetem Ventil (131, 134, 137) und sich dabei über die sich in ihrer drosselnden Stellung befindende Drosseleinrichtung (126, 137 bzw. 131, 137) ausgleichenden Drücken in der Hauptkammer (3) und in der Zusatzkammer (8) und bei einer durch den Druckausgleichsvorgang bewirkten Bewegung des Kolbens (117, 118) diejenige Drosseleinrichtung (126, 137 bzw. 131, 137), welche der den niedrigeren Druck aufweisenden Kammer -Hauptkammer (3) oder Zusatzkammer (8)- zugeordnet ist, von ihrer drosselnden Stellung in ihre nicht drosselnde Stellung gebracht wird.

5. Mit Druckmittel arbeitende Federeinrichtung nach Anspruch 4, dadurch gekennzeichnet, daß das zweite Drosselglied (131) von einem Teil des zweiten Ventilkörpers (131, 134) des Ventils (137, 131, 134) gebildet wird.

6. Mit Druckmittel arbeitende Federeinrichtung nach Anspruch 1, gekennzeichnet durch die folgenden Merkmale:
a) die erste Einrichtung weist eine der Hauptkammer (3) zugeordnete erste Druckmeßeinrichtung (9) und eine der Zusatzkammer (8) zugeordnete zweite Druckmeßeinrichtung (16) auf, die dem Druck in der Hauptkammer (3) und dem Druck in der Zusatzkammer (8) entsprechende elektrische Signale erzeugen;
b) die erste Einrichtung weist eine Auswerte- und Steuereinrichtung (11) zum Erkennen einer Druckdifferenz zwischen dem Druck in der Hauptkammer (3) und dem Druck in der Zusatzkammer (8) und zum Erzeugen eines einer Druckdifferenz entsprechenden elektrischen Signals auf;
c) die zweite Einrichtung wird von elektrisch oder elektromagnetisch betätigbaren Stellmitteln (14) gebildet, die mit einem Ventilschließglied der Ventileinrichtung (15) in Wirkverbindung stehen;

7. Mit Druckmittel arbeitende Federeinrichtung nach Anspruch 6, dadurch gekennzeichnet, daß die elektromagnetisch betätigbaren Stellmittel (14) von einem Proportionalmagneten gebildet werden.

8. Mit Druckmittel arbeitende Federeinrichtung nach Anspruch 1, gekennzeichnet durch die folgenden Merkmale:
a) die Steuereinrichtung wird von einem in der Ventileinrichtung (6) angeordneten ersten Kolben (33, 26, 20) gebildet, der eine vom Druckmittel in einer als Steuerkammer (31) dienenden ersten Druckmittelkammer beaufschlagbare Wirkfläche und eine vom Druckmittel einer dritten Druckmittelkammer (76, 77) beaufschlagte, der vom Druckmittel in der Steuerkammer (31) beaufschlagten Wirkfläche entgegengerichtete Wirkfläche aufweist;
b) die erste Einrichtung wird von einem in der Ventileinrichtung (6) angeordneten zweiten Kolben (74, 75) gebildet, der eine vom Druckmittel in einer zweiten Druckmittelkammer (34, 28) beaufschlagte erste Wirkfläche und eine vom Druckmittel der dritten Druckmittelkammer (76, 77) beaufschlagte der ersten Wirkfläche entgegengerichtete zweite Wirkfläche aufweist;
c) die zweite Einrichtung wird von einem ersten Ventil (59, 74) zum Verbinden der dritten Druckmittelkammer (76, 77) mit der Hauptkammer (3) und einem zweiten Ventil (56, 74) zum Verbinden der zweiten Druckmittelkammer (34, 28) mit der Zusatzkammer (8) sowie einer dem ersten Ventil (59, 74) zugeordneten ersten Drossel (63, 72) und einer dem zweiten Ventil (56, 74) zugeordneten zweiten Drossel (35, 53) gebildet, wobei die dritte Druckmittelkammer (76, 77) über die erste Drossel (63, 72) ständig mit der Hauptkammer (3) und die zweite Druckmittelkammer (34, 28) über die zweite Drossel (35, 53) ständig mit der Zusatzkammer (8) verbunden ist;
d) zur Betätigung des ersten Ventils (59, 74) und des zweiten Ventils (56, 74) dient der zweite Kolben (74, 75;
e) es ist ein vom ersten Kolben (33, 26, 20) betatigbares drittes Ventil (24, 89, 26, 20) vorgesehen, welches zur Verbindung der zweiten Druckmittelkammer(34, 28) mit der dritten Druckmittelkammer (76, 77) dient,
f) die Steuerkammer (31) ist über ein Ventil (46) wahlweise mit einer Druckmittelquelle (44) oder mit einer Druckmittelsenke verbindbar oder gegen beide absperrbar.

9. Mit Druckmittel arbeitende Federeinrichtung nach Anspruch 8, dadurch gekennzeichnet, daß
der erste Kolben (33, 26, 20) als Stufenkolben ausgebildet ist, der eine vom Druckmittel in der Steuerkammer (31) beaufschlagbare ersce Wirkfläche, eine vom Druckmittel in der zweiten Druckmittelkammer (34, 28) beaufschlagte, der ersten Wirkfläche entgegengerichtete zweite Wirkfläche (52) und eine vom Druckmittel in der dritten Druckmittelkammer (76, 77) beaufschlagte, der ersten Wirkfläche entgegengerichtete dritte Wirkfläche aufweist.

10. Mit Druckmittel arbeitende Federeinrichtung nach den Ansprüchen 1, 8 und 9, gekennzeichnet durch die folgenden Merkmale:
a) die Ventileinrichtung (6) weist ein Gehäuse (19, 32) auf, in welchem der erste Kolben (33, 26, 20) in Richtung der Längsachse des Gehäuses (19, 32) abgedichtet verschiebbar angeordnet ist;
b) der erste Kolben (33, 26, 20) ist als Hohlkolben ausgebildet und setzt sich aus einem einen größere Durchmesser aufweisenden ersten Kolbenteil (33) und einem einen kleinerem Durchmesser aufweisenden zweiten Kolbenteil (26, 20) zusammen;
c) der zweite Kolben (74, 75) ist zentrich am zweiten Kolbenteil (26, 20) des ersten Kolbens (33, 26, 20) abgedichtet und relativ zum ersten Kolben (33, 26, 20) bewegbar so angeordnet, daß er zusammen mit der ihm zugewandten Seite des ersten Kolbenteiles (33) des ersten Kolbens (33, 26, 20) den als eine erste Teilkammer (34) der zweiten Druckmittelkammer (34, 28) dienenden Innenraum des ersten Kolbens (33, 26, 20) begrenzt;
d) der erste Kolben (33, 26, 20) begrenzt mit seiner dem zweiten Kolben (74, 75) abgewandten Seite die als Steuerkammer (31) dienende erste Druckmittelkammer und mit seiner der Steuerkammer (31) und der zweiten Druckmittelkammer (34, 28) abgewandten Seite sowie der der zweiten Druckmittelkammer (34, 28) abgewandten Seite des zweiten Kolbens (74, 75) die dritte Druckmittelkammer (76, 77);
e) am zweiten Kolbenteil (26, 20) des ersten Kolbens (33, 26, 20) ist zentrisch ein erster rohrförmiger Fortsatz (64) angeordnet, der sich einerseits in die dritte Druckmittelkammer (76, 77) hinein, in Richtung auf den zweiten Kolben (74, 75) zu und andererseits durch die dritte Druckmittelkammer (76, 77) hindurch in Richtung auf einen ersten Druckmittelanschluß (68) des Gehäuses (19, 32) zu erstreckt, wobei zwischen dem Gehäuse (19, 32) und der äußeren Mantelfläche des ersten rohrförmigen Fortsatzes (64) eine Dichtung (65) angeordnet ist;
f) am ersten Kolbenteil (33) des ersten Kolbens (33, 26, 20) ist zentrisch ein zweiter rohrförmiger Fortsatz (38) angeordet, der sich einerseits in die zweite Druckmittelkammer (34, 28) hinein, in Richtung auf den zweiten Kolben (74, 75) zu und andererseits durch die Steuerkammer (31) hindurch in Richtung auf einen zweiten Druckmittelanschluß (41) des Gehäuses (19, 32) zu erstreckt, wobei zwischen dem Gehäuse (19, 32) und der äußeren Mantelfläche des zweiten rohrförmigen Fortsatzes (38) eine Dichtung (37) angeordnet ist;
g) das dem zweiten Kolben (74, 75) zugewandte Ende des ersten rohrförmigen Fortsatzes (64) ist als Ventilsitz (59) ausgebildet und bildet mit einem am zweiten Kolben (74, 75) angeordneten Ventilschließglied (74) das erste Ventil (59, 74);
h) das dem zweiten Kolben (74, 75) zugewandte Ende des zweiten rohrförmigen Fortsatzes (38) ist als Ventilsitz (56) ausgebildet und bildet mit einem am zweiten Kolben (74, 75) angeordneten Ventilschließglied (74) das zweite Ventil (56, 74);
i) in der Wand des Bereiches des ersten rohrförmigen Fortsatzes (64), der in der dritten Druckmittelkammer (76, 77) gelegen ist, ist wenigstens eine als erste Drossel (63, 72) dienende Durchgangsöffnung angeordnet und in der Wand des Bereiches des zweiten rohrförmigen Fortsatzes (38), der in der zweiten Druckmittelkammer (34, 28) gelegen ist, ist wenigstens eine als zweite Drossel (35, 53) dienende Durchgangsöffnung angeordnet;
k) an der Wand des Gehäuses (19, 32) ist ein ringförmiger Körper (24, 89) angeordnet, der sich in radialer Richtung auf das zweite Kolbenteil (26, 20) des ersten Kolbens (33, 26, 20) zu erstreckt und mit dem zweiten Kolbenteil (26, 20) des ersten Kolbens (33, 26, 20) das dritte Ventil (24, 89, 26, 20) bildet;
l) der ringförmige Körper (24, 89) ist in Richtung der Längsachse des Gehäuses (19, 32) so bemessen, daß das von ihm und dem zweiten Kolbenteil (26, 20) gebildete dritte Ventil (24, 89, 26, 20) sich in seiner Schließstellung befindet, wenn der erste Kolben (33, 26, 20) sich bei druckloser Steuerkammer (31) in einer ersten Endlage befindet und sich das dritte Ventil (24, 89, 26, 20) in seiner Offenstellung befindet, wenn der erste Kolben (33, 26, 20) bei Beaufschlagung der Steuerkammer (31) mit Druckmittel in eine zweite Endlage gelangt ist;
m) der zweite Kolben (74, 75) und das mit diesem verbundene Ventilschließglied (74) sind so zwischen dem Ventilsitz (59) des ersten Ventils (59, 74) und dem Ventilsitz (56) des zweiten Ventils (59, 74) angeordnet, daß das erste Ventil (59, 74) in seine Schließstellung gebracht wird, wenn der Druck in der zweiten Druckmittelkammer (34, 28) höher ist als der Druck in der dritten Druckmittelkammer (76, 77) und das zweite Ventil (56, 74) in seine Schließstellung gebracht wird, wenn der Druck in der dritten Druckmittelkammer (76, 77) höher ist als der Druck in der zweiten Druckmittelkammer (34, 28) und daß bei gleich hohen oder annähernd gleich hohen Drücken in der zweiten Druckmittelkammer (34, 28) und in der dritten Druckmittelkammer (76, 77) das erste Ventil (59, 74) und das zweite Ventil (56, 74) in ihrer Offenstellung gehalten werden.

11. Mit Druckmittel arbeitende Federeinrichtung nach Anspruch 10, gekennzeichnet durch die folgenden Merkmale:
a) der zweite Kolben (74, 75) wird von einer Membran (75) gebildet, die mit ihrem äußeren Randbereich am zweiten Kolbenteil (26, 20) des ersten Kolbens (33, 26, 20) befestigt und abgedichtet ist;
b) es ist eine erste Feder (71) vorgesehen, die sich mit ihrem einen Ende am ersten rohrförmigen Fortsatz (64) des ersten Kolbens (33, 26, 20) abstützt und mit ihrem anderen Ende einen Federteller (62) in Richtung auf die eine Seite des zweiten Kolbens (74, 75) zu beaufschlagt;
c) es ist eine zweite Feder (42) vorgesehen, die sich mit ihrem einen Ende am zweiten rohrförmigen Fortsatz (38) des ersten Kolbens (33, 26, 20) abstützt und mit ihrem anderen Ende einen Federteller (58) in Richtung auf die andere Seite des zweiten Kolbens (74, 75) zu beaufschlagt;
d) die einander entgegengerichtet sich auf den zweiten Kolben (74, 75) zuerstreckenden Federn (71 und 42) sind so dimensioniert, daß sie bei gleich hohen oder annähernd gleich hohen Drücken in der zweiten Druckmittelkammer (34, 28) und in der dritten Druckmittelkammer (76, 77) den zweiten Kolben (74, 75) in der neutralen Mittelstellung zwischen dem ersten Ventil (59, 74) und dem zweiten Ventil (56, 74) stabilisieren.
e) die Federn (71 und 42) sind so dimensioniert, daß der zweite Kolben (74, 75) gegen die Kraft der Feder (71 bzw. 42) einen Hub in Richtung auf die den niedrigeren Druck aufweisende Druckmittelkammer (34, 28 bzw. 76, 77) zu macht, wenn eine vorbestimmte Druckdifferenz zwischen dem Druck in der zweiten Druckmittelkammer (34, 28) und dem Druck in der dritte Druckmittelkammer (76, 77) erreicht oder überschritten wird.

12. Mit Druckmittel arbeitende Federeinrichtung nach Anspruch 11, gekennzeichnet durch die folgenden Merkmale:
a) das zweite Kolbenteil (26, 20) des ersten Kolbens (33, 26, 20) ist quer zu seiner Längsachse geteilt ausgebildet;
b) das erste Teil (26) und das zweite Teil (20) des zweiten Kolbenteiles (26, 20) sind mittels Schnapp-/oder Rastmitteln (21) miteinander verbunden;
c) der als Membran ausgebildete zweite Kolben (74, 75) ist mit seinem äußeren Randbereich zwischen dem ersten Teil (26) und dem zweiten Teil (20) des zweiten Kolbenteiles (26, 20) eingespannt.

13. Mit Druckmittel arbeitende Federeinrichtung nach wenigstens einem der vorhergehenden Ansprüche, dadurch gekennzeichnet, daß das Ventilschließglied (74) für das erste Ventil (59, 74) und das zweite Ventil (56, 74) von einer zentrisch an der Membran (75) angeordneten Verstärkung der Membran (75) gebildet wird.

14. Mit Druckmittel arbeitende Federeinrichtung nach wenigstens einem der vorhergehenden Ansprüche, dadurch gekennzeichnet, daß die zweite Druckmittelkammer (34, 28) von dem als eine erste Teilkammer (34) dienenden Innenraum des als Hohlkolben ausgebildeten ersten Kolbens (33, 26, 20) und einer als zweite Teilkammer (28) dienenden Ringkammer gebildet wird, welche vom ersten Kolbenteil (33) des ersten Kolbens (33, 26, 20) und dem ringförmigen Körper (24, 89) begrenzt wird, wobei die erste Teilkammer (34) und die zweite Teilkammer (28) über wenigstens eine den Mantel des ersten Kolbens (33, 26, 20) durchdringende kanalartige Durchgangsöffnung (27, 54) miteinander verbunden sind.

15. Mit Druckmittel arbeitende Federeinrichtung nach wenigstens einem der vorhergehenden Ansprüche, dadurch gekennzeichnet, daß der ringförmige Körper (24) von einem sich in radialer Richtung auf das zweite Kolbenteil (26, 20) des ersten Kolbens (33, 26, 20) zu erstreckenden Vorsprung des Gehäuses (19, 32) gebildet wird.

16. Mit Druckmittel arbeitende Federeinrichtung nach wenigstens einem der vorhergehenden Ansprüche, dadurch gekennzeichnet, daß der ringförmige Körper von einem lösbar in das Gehäuse (19, 32) eingesetzten Ring (89) gebildet wird.

17. Mit Druckmittel arbeitende Federeinrichtung nach wenigstens einem der vorhergehenden Ansprüche, dadurch gekennzeichnet, daß an den ringförmigen Körper (24, 89) an der Wand des Gehäuses (19, 32) angeordnete rippenartige Vorsprünge (85, 87) anschließen, die in Richtung der Längsachse des Gehäuses (19, 32) verlaufen und sich in radialer Richtung auf das zweiten Kolbenteil (26, 20) des ersten Kolbens (33, 26, 20) zu erstrecken.

18. Mit Druckmittel arbeitende Federeinrichtung nach wenigstens einem der vorhergehenden Ansprüche, dadurch gekennzeichnet, daß das erste Kolbenteil (33) und das zweite Kolbenteil (26, 20) des ersten Kolbens (33, 26, 20) als eine einstückige Baueinheit ausgebildet sind.

19. Mit Druckmittel arbeitende Federeinrichtung nach Anspruch 1, gekennzeichnet durch die folgenden Merkmale:
a) die Steuereinrichtung wird von einem in der Ventileinrichtung (6) angeordneten ersten Kolben (102) gebildet, der vom Druckmittel in einer als Steuerkammer (105) dienenden ersten Druckmittelkammer gegen eine Rückstellkraft verschiebbar ist;
b) die erste Einrichtung wird von einem in der Ventileinrichtung (6) angeordneten zweiten Kolben (117, 118) gebildet, der eine von einem Druckmittel in einer zweiten Druckmittelkammer (111) beaufschlagte erste Wirkfläche und eine von einem Druckmittel in einer dritten Druckmittelkammer (119) beaufschlagte, der ersten Wirkfläche entgegengerichtete zweite Wirkfläche aufweist;
c) in der Ventileinrichtung (6) ist ein Ventil (137, 131, 134) angeordnet, welches zur Verbindung der zweiten Druckmittelkammer (111) mit der dritten Druckmittelkammer (119) dient;
d) das Ventil (137, 131, 134) und der erste Kolben (102) stehen derart miteinander in Wirkverbindung, daß das Ventil (137, 131) vom ersten Kolben (102) gegen die Rückstellkraft in seine Offenstellung bringbar ist;
e) das Ventil (137, 131, 134) wird von einer den zweiten Kolben (117, 118) durchdringenden Durchgangsöffnung (135), welche von einem am zweiten Kolben (117, 118) angeordneten rohrförmigen ersten Ventilkörper (137) begrenzt wird, und einem als Ventilschließglied dienenden zweiten Ventilkörper (131, 134) gebildet, welcher an einer Kolbenstange (109) des ersten Kolbens (102), die durch die Durchgangsöffnung (135) des zweiten Kolbens (117, 118) hindurchgeführt ist, angeordnet ist;
f) die zweite Einrichtung wird von einem ersten Drosselglied (126) und einem zweiten Drosselglied (131), die an der Kolbenstange (109) angeordnet sind, und der der Kolbenstanage (109) gegenüberliegenden Wand des rohrförmigen ersten Ventilkörpers (137) gebildet, wobei das zweite Drosselglied (131) Teil des als Ventilschließglied dienenden zweiten Ventilkörpers (131, 134) ist;
g) das erste Drosselglied (126) und das zweite Drosselglied (131) sind so zueinander und so zu dem ersten Ventilkörper (137) angeordnet, daß eine vom ersten Drosselglied (126) und dem ersten Ventilkörper (137) gebildete erste Drosseleinrichtung (126, 137) wirksam wird, wenn der Druck in der zweiten Druckmittelkammer (111) höher ist als der Druck in der dritten Druckmittelkammer (119) und eine vom zweiten Drosselglied (131) und dem ersten Ventilkörper (137) gebildete zweite Drosseleinrichtung (131, 137) wirksam wird, wenn der Druck in der dritten Druckmittelkammer (119) höher ist als der Druck in der zweiten Druckmittelkammer (111);
h) die dritte Druckmittelkammer (119) ist mit der Hauptkammer (3) und die zweite Druckmittelkammer (111) ist mit der Zusatzkammer (8) verbunden;
i) die Steuerkammer (105) ist über ein zusätzliches Ventil (46) wahlweise mit einer Druckmittelquelle (44) oder mit einer Druckmittelsenke verbindbar oder gegen beide absperrbar;
k) es ist eine erste Feder (120) vorgesehen, die sich mit ihrem einen Ende an einem ersten Gehäuseteil (91, 130) der Ventileinrichtung (6) abstützt und mit ihrem anderen Ende den zweiten Kolben (117, 118) in Richtung auf die zweite Druckmittelkammer (111) zu beaufschlagt;
l) es ist eine zweite Feder (114) vorgesehen, die sich mit ihrem einen Ende an einem zweiten Gehäuseteil (93) der Ventileinrichtung (6) abstützt und mit ihrem anderen Ende den zweiten Kolben (117, 118) in Richtung auf die dritte Druckmittelkammer (119) zu beaufschlagt;
m) die einander entgegengerichtet auf den zweiten Kolben (117, 118) einwirkenden Federn (120, 114) sind so dimensioniert, daß sie bei gleich hohen oder annähernd gleich hohen Drücken in der zweiten Druckmittelkammer (111) und in der dritten Druckmittelkammer (119) den zweiten Kolben (117, 118) in seiner neutralen Mittelstellung stabilisieren;
n) die Federn (120, 114) sind so dimensioniert, daß der zweite Kolben (117, 118) gegen die Kraft der Feder (120 bzw. 114) einen Hub in Richtung auf die den niedrigeren Druck aufweisende Druckmittelkammer (111 bzw. 119) zu macht, wenn eine vorbestimmte Druckdifferenz zwischen dem Druck in der zweiten Druckmittelkammer (111) und dem Druck in der dritten Druckmittelkammer (119) erreicht oder überschritten wird;

20. Mit Druckmittel arbeitende Federeinrichtung nach wenigstens einem der vorhergehenden Ansprüche, gekennzeichnet durch die folgenden Merkmale:
a) der erste Kolben (102) ist in einem Gehäuse (91, 130, 93) der Ventileinrichtung (6) in Richtung der Längsachse des Gehäuses (91, 130, 93) verschiebbar angeordnet;
b) der zweiten Kolben (117, 118) ist gleichachsig mit dem ersten Kolben (102) und in Richtung der Längsachse des Gehäuses (91, 130, 93) relativ zum ersten Kolben (102) verschiebbar im Gehäuse (91, 130, 93) angeordnet;
c) das erste Drosselglied (126) ist am freien Ende der Kolbenstange (109) angeordnet;

21. Mit Druckmittel arbeitende Federeinrichtung nach Anspruch 1, gekennzeichnet durch die folgenden Merkmale:
a) die erste Einrichtung wird von einem in der Ventileinrichtung (6) angeordneten Kolben (153, 176) gebildet, der eine von einem Druckmittel in einer ersten Druckmittelkammer (142) beaufschlagte erste Wirkfläche und eine von einem Druckmittel in einer zweiten Druckmittelkammer (165) beaufschlagte, der ersten Wirkfläche entgegengerichtete zweite Wirkfläche aufweist;
b) die zweite Einrichtung wird von einem ersten Ventil (151, 153) zum Verbinden der ersten Druckmittelkammer (142) mit der Hauptkammer (3) und einem zweiten Ventil (164, 153) zum Verbinden der zweiten Druckmittelkammer (165) mit der Zusatzkammer (8) sowie einer dem ersten Ventil (151, 153) zugeordneten ersten Drossel (150, 173) und einer dem zweiten Ventil (164, 153) zugeordneten zweiten Drossel (157, 163) gebildet, wobei die erste Druckmittelkammer (142) über die erste Drossel (150, 173) ständig mit der Hauptkammer (3) und die zweite Druckmittelkammer (165) über die zweite Drossel (157, 163) ständig mit der Zusatzkammer (8) verbunden ist;
c) es ist ein steuerbares drittes Ventil (168) vorgesehen, welches zur Verbindung der ersten Druckmittelkammer (142) mit der zweiten Druckmittelkammer (165) dient.

22. Mit Druckmittel arbeitende Federeinrichtung nach Anspruch 1, gekennzeichnet durch die folgenden Merkmale:
a) die erste Einrichtung wird von einem Kolben (153, 176) gebildet, der in einem Gehäuse (171, 141) in Richtung der Längsachse des Gehäueses (171, 141) verschiebbar angeordnet ist und eine erste Druckmittelkammer (142) von einer zweiten Druckmittelkammer (165) trennt;
b) in der ersten Druckmittelkammer (142) ist ein erster Ventilsitz (151) angeordnet, der mit einem Teil (153) des Kolbens (153, 176) ein erstes Ventil (151, 153) bildet, über welches die erste Druckmittelkammer (142) mit der Hauptkammer (3) der Federeinrichtung verbindbar ist;
c) in der zweiten Druckmittelkammer (165) ist ein zweiter Ventilsitz (164) angeordnet, der mit dem Teil (153) des Kolbens (153, 176) ein zweites Ventil (164, 153) bildet, über welches die zweite Druckmittelkammer (165) mit der Zusatzkammer (8) verbindbar ist;
d) dem ersten Ventil (151, 176) ist eine erste Drossel (150, 173) zugeordnet, über welche die Hauptkammer (3) ständig mit der ersten Druckmittelkammer (142) verbunden ist und dem zweiten Ventil (164, 153) ist eine zweite Drossel (157, 163) zugeordnet, über welche die Zusatzkammer (8) mit der zweiten Druckmittelkammer (165) ständig verbunden ist;
e) es ist eine erste Feder (146) vorgesehen, die sich mit ihrem einen Ende am Gehäuse (171, 141) abstützt und mit ihrem anderen Ende einen Federteller (152) in Richtung auf die eine Seite des Kolbens (153, 176) zu beaufschlagt;
f) es ist eine zweite Feder (158) vorgesehen, die sich mit ihrem einen Ende am Gehäuse (171, 141) abstützt und mit ihrem anderen Ende einen Federteller (154) in Richtung auf die andere Seite des Kolbens (153, 176) zu beaufschlagt;
g) die einander entgegengerichtet sich auf den Kolben (153, 176) zu erstreckenden Federn (146 und 158) sind so dimensioniert, daß sie bei gleich hohen oder annähernd gleich hohen Drücken in der ersten Druckmittelkammer (142) und in der zweiten Druckmittelkammer (165) den Kolben (153, 176) in seiner neutralen Mittelstellung zwischen dem ersten Ventil (151, 153) und dem zweiten Ventil (164, 153) stabilisieren;
h) die Federn (146 und 158) sind so dimensioniert, daß der Kolben (153, 176) gegen die Kraft der Feder (146 bzw. 158) einen Hub in Richtung auf die den niedrigeren Druck aufweisende Druckmittelkammer (142 bzw. 165) zu macht, wenn eine vorbestimmte Druckdifferenz zwischen dem Druck in der ersten Druckmittelkammer (142) und dem Druck in der zweiten Druckmittelkammer (165) erreicht oder überschritten wird.

23. Mit Druckmittel arbeitende Federeinrichtung nach wenigstens einem der vorhergehenden Ansprüche, gekennzeichnet durch die folgenden Merkmale:
a) die Ventileinrichtung (6) weist ein Gehäuse (171, 141) auf, in welchem ein Kolben (153, 176) in Richtung der Längsachse des Gehäuses abgedichtet verschiebbar angeordnet ist;
b) der Kolben (153, 176) weist eine vom Druckmittel in einer ersten Druckmittelkammer (142) beaufschlagte erste Wirkfläche und eine vom Druckmittel in einer zweiten Druckmittelkammer (165) beaufschlagte, der ersten Wirkfläche entgegengerichtete zweite Wirkfläche auf;
c) das Gehäuse (171, 141) weist einen ersten rohrförmigen Gehäusefortsatz (148) und einen diesem gegenüberliegenden zweiten rohrförmigen Gehäusefortsatz (162) auf;
d) der erste rohrförmige Gehäusefortsatz (148) erstreckt sich in die erste Druckmittelkammer (142) hinein und der zweite rohrförmige Gehäusefortsatz (162) erstreckt sich in die zweite Druckmittelkammer (165) hinein;
e) der Kolben (153, 176) ist zwischen den einander zugewandten Seiten der beiden rohrförmigen Gehäusefortsätze (148 und 162) angeordnet und trennt die erste Druckmittelkammer (142) von der zweiten Druckmittelkammer (165);
f) das sich auf den Kolben (153, 176) zu erstrekkende freie Ende des ersten Gehäuseforsatzes (148) ist als Ventilsitz (151) ausgebildet, der mit der ihm zugewandten Seite eines als Ventilschließglied (153) dienenden Teiles des Kolbens (153, 176) ein erstes Ventil (151, 153) bildet und das sich auf den Kolben (153, 176) zu erstreckende freie Ende des zweiten Gehäusefortsatzes (162) ist als Ventilsitz (164) ausgebildet, der mit der ihm zugewandten Seite des als Ventilschließglied (153) dienenden Teiles des Kolbens (153, 176) ein zweites Ventil (164, 153) bildet;
g) zur Betätigung des ersten Ventils (151, 153) und des zweiten Ventils (164, 153) dient der Kolben (153, 176);
h) in der Wand des Bereiches des ersten Gehäusefortsatzes (148), der in der ersten Druckmittelkammer (142) gelegen ist, ist wenigstens eine als erste Drossel (150, 173) dienende Durchgangsöffnung angeordnet und in der Wand des Bereiches des zweiten Gehäusefortsatzes (162), der in der zweiten Druckmittelkammer (165) gelegen ist, ist wenigstens eine als zweite Drossel (157, 163) dienende Durchgangsöffnung angeordnet.

## Revendications

1. Groupe de suspension pour véhicule, fonctionnant avec un fluide sous pression, présentant les éléments suivants :
a) le groupe de suspension présente une chambre principale (3), servant au soutien d'une superstructure du véhicule sur un essieu du véhicule, ladite chambre principale (3) modifiant son volume lors des courses de suspension ;
b) il est prévu une chambre additionnelle (8), susceptible d'être au choix reliée avec la chambre principale (3), ou bien isolée vis-à-vis de celle-ci, au moyen d'un agencement de soupape (6, 15) ;
c) l'agencement de soupape (6, 15) est ainsi réalisé qu'il peut être rapidement commuté depuis sa position ouverte vers sa position fermée, cependant que lors de l'opération d'ouverture et dans le but de ralentir une égalisation de la pression entre la pression dans la chambre principale (3) et la pression dans la chambre additionnelle (8) il se produit une phase de préouverture avec étranglement de l'écoulement du fluide sous pression ;
caractérisé par les éléments suivants :
d) il est prévu un premier dispositif (9, 16, 11, 74, 75, 117, 118, 176, 153) pour reconnaître une différence de pression entre la pression dans la chambre principale (3) et la pression dans la chambre additionnelle (8) ;
e) il est prévu un deuxième dispositif (14, 33, 26, 20, 24, 74, 75, 59, 56, 35, 53, 63, 72, 131, 134, 137, 126, 153, 150, 151, 173, 157, 163, 164, 168) pour modifier la section de passage de l'agencement de soupape (6, 15) ;
f) il est prévu un dispositif de commande (11, 17, 46, 33, 102, 168) qui sert à activer l'agencement de soupape (6, 15) ; et
g) le premier dispositif (9, 16, 11, 74, 75, 117, 118, 167, 158) et le deuxième dispositif (14, 33, 26, 20, 24, 74, 75, 59, 56, 35, 53, 63, 72, 131, 134, 137, 126, 153, 150, 151, 173, 157, 163, 164, 168) sont enchaînés l'un à l'autre et avec le dispositif de commande (11, 17, 46, 33, 102, 168) de telle manière que lors de l'entrée en action du dispositif de commande (11, 17, 46, 33, 102, 168) et que l'agencement de soupape (6, 15) est ainsi activé, et en présence d'une différence de pression entre la pression dans la chambre principale (3) et la pression dans la chambre additionnelle (8) l'agencement de soupape (6, 15) ne libère qu'une partie de sa section de passage, et cet agencement de soupape libère la totalité de sa section de passage uniquement lors d'une réduction de la différence de pression à une valeur prédéterminée.

2. Groupe de suspension selon la revendication 1, caractérisé par les éléments suivants :
a) le premier dispositif comprend un piston (75, 74, 117, 118, 153, 176) dont un côté est attaqué par la pression de la chambre principale (3) et dont l'autre côté est attaqué par la pression de la chambre additionnelle (8) ;
b) il est prévu une valve (24, 26, 20, 137, 131, 134, 168) au moyen de laquelle la chambre principale (3) et la chambre additionnelle (8) peuvent être au choix reliées l'une à l'autre, ou bien isolées l'une par rapport à l'autre ;
c) le deuxième dispositif comprend un premier agencement à étranglement (63, 72, 59, 74, 137, 126, 151, 153, 150, 173) agencé entre la chambre principale (3) et ladite valve (24, 26, 20, 137, 131, 134, 163), et un deuxième agencement à étranglement (35, 53, 56, 74, 137, 131, 157, 153, 163, 164) agencé entre la chambre additionnelle (8) et ladite valve (24, 26, 20, 137, 131, 134, 168), via laquelle la chambre principale (3) et la chambre additionnelle (8) sont reliées l'une à l'autre lorsque la valve est ouverte (24, 26, 20, 137, 131, 168) ;
d) le premier agencement à étranglement (63, 72, 59, 74, 137, 126, 151, 153, 150, 173) et le deuxième agencement à étranglement (35, 53, 56, 74, 137, 131, 157, 163, 164, 153) sont ainsi réalisés qu'ils peuvent être amenés depuis une position d'étranglement à petite section de passage jusque dans une position sans étranglement à forte section de passage ;
e) le premier agencement à étranglement (63, 72, 59, 74, 137, 126, 151, 153, 150, 173) et le deuxième agencement à étranglement (35, 53, 56, 74, 137, 131, 157, 163, 164, 153) se trouvent en liaison d'action avec le piston (75, 74, 117, 118, 153, 176) du premier dispositif de telle manière que lorsque la valve (24, 26, 20, 137, 131, 134, 168) est ouverte et en présence d'une différence de pression entre la pression dans la chambre principale (3) et la pression dans la chambre additionnelle (8) l'un des deux agencements à étranglement (63, 72, 59, 74, 137, 126, 151, 153, 150, 173, ou 35, 53, 56, 74, 137, 131, 157, 163, 154, 153) se trouve dans sa position d'étranglement et est amené par le piston (75, 74, 117, 118, 153, 176) dans sa position de non-étranglement, lorsque la pression dans la chambre principale (8) et la pression dans la chambre additionnelle (8) se sont au moins approximativement égalisées via cet agencement à étranglement (63, 72, 59, 74, 137, 126, 151, 153, 150, 173, ou 35, 53, 56, 74, 137, 131, 157, 163, 154, 153) ;
f) le dispositif de commande comprend un élément d'actionnement (102, 33, 26, 20) pour actionner la valve (24, 26, 20, 137, 131, 134, 168).

3. Groupe de suspension selon l'une ou l'autre des revendications précédentes, caractérisé par les éléments suivants :
a) le premier agencement à étranglement (63, 72, 59, 74, 151, 153, 150, 173) est constitué par une première valve (59, 74, 151, 153) ainsi que par un premier étranglement (63, 72, 150, 173), et le deuxième agencement à étranglement (56, 74, 35, 53, 164, 153, 157, 163) est constitué par une deuxième valve (56, 74, 164, 153) ainsi que par un deuxième étranglement (35, 53, 157, 163), de sorte que ladite première valve (59, 74, 151, 153) et le premier étranglement (63, 72, 150, 173) sont agencés entre la chambre principale (3) et une chambre à fluide sous pression (76, 77, 142) associée à celle-ci et, et la deuxième valve (56, 74, 64, 164, 153) et le deuxième étranglement (35, 53, 157, 163) sont agencés entre la chambre additionnelle (8) et une deuxième chambre à fluide sous pression (34,28, 165) associée à celle-ci ;
b) la première valve (59, 74, 151, 153) sert à modifier la section de passage du premier agencement à étranglement (63, 72, 59, 74, 150, 173, 151, 153), et la section de passage de la première valve (59, 74, 151, 153) fait office de grande section de passage du premier agencement à étranglement (63, 72, 59, 74, 151, 153, 150, 173) ;
c) la deuxième valve (56, 74, 164, 153) sert à modifier la section de passage du deuxième agencement à étranglement (35, 53, 56, 74, 164, 158, 157, 163), et la section de passage de la deuxième valve (56, 74, 164, 153) fait office de grande section de passage du deuxième agencement à étranglement (35, 53, 56, 74, 164, 153, 157, 163) ; d) la valve (20, 24, 26, 168) susceptible d'être actionnée au moyen de l'élément d'actionnement (33, 102) sert de soupape pour la liaison de la chambre à fluide sous pression (77, 76, 142) associée à la chambre principale (3) avec la deuxième chambre à fluide sous pression (34, 28, 165) associée à la chambre additionnelle (8).

4. Groupe de suspension selon l'une au moins des revendications précédentes, caractérisé par les éléments suivants :
a) la valve (137, 131, 134) pour la liaison de la chambre principale (3) avec la chambre additionnelle (8) est formée par un premier corps de valve (137) relié au piston (117, 118) du premier dispositif, et par un deuxième corps de valve (131, 134) relié à l'élément d'actionnement (102), ledit piston (117, 118) et ledit élément d'actionnement (102) étant susceptibles de se déplacer l'un par rapport à l'autre ;
b) le premier agencement à étranglement (137, 126) est formé par un premier organe d'étranglement (126) relié à l'élément d'actionnement (102) pour la valve (137, 131, 134) et par le premier corps de valve (137), et le deuxième agencement à étranglement (137, 131) est formé par un deuxième organe d'étranglement (131) également relié à l'élément d'actionnement (102) et par le premier corps de valve (137) ; et
c) le premier organe d'étranglement (126) et le deuxième organe d'étranglement (131) sont ainsi réalisés, et agencés de telle manière vis-à-vis du premier corps de valve (137) qu'en présence d'une différence de pression entre la pression dans la chambre principale (3) et la pression dans la chambre additionnelle (8) tandis que la valve (131, 134, 137) est ouverte et que les pressions dans la chambre principale (3) et dans la chambre additionnelle (8) s'égalisent par l'intermédiaire de l'agencement à étranglement (126, 137, ou 131, 137) qui se trouve dans sa position d'étranglement, et lors d'un déplacement du piston (117, 118) provoqué par l'opération d'égalisation de pression, c'est celui des agencements à étranglement (126, 137, ou 131, 137) qui est associé à la chambre, c'est-à-dire la chambre principale (3) ou la chambre additionnelle (8), qui présente la pression la plus faible qui est amené de sa position d'étranglement jusque dans sa position de non-étranglement.

5. Groupe de suspension selon la revendication 4, caractérisé en ce que le deuxième organe d'étranglement (131) est formé par une partie du deuxième corps de valve (131, 134) de la valve (137, 131, 134).

6. Groupe de suspension selon la revendication 1, caractérisé par les éléments suivants :
a) le premier dispositif comprend un premier dispositif de mesure de pression (9) associé à la chambre principale (3) et un deuxième dispositif de mesure de pression (16) associé à la chambre additionnelle (8), lesquels produisent des signaux électriques qui correspondent à la pression dans la chambre principale (3) et à la pression dans la chambre additionnelle (8) ;
b) le deuxième dispositif comprend un dispositif d'évaluation et de commande (11) destiné à reconnaître une différence de pression entre la pression dans la chambre principale (3) et la pression dans la chambre additionnelle (8), et à produire un signal électrique qui correspond à une différence de pression ; et
c) le deuxième dispositif est formé par des organes de positionnement (14) susceptibles d'être actionnés par voie électrique ou électromagnétique, lesquels sont en liaison d'action avec un organe de fermeture de soupape de l'agencement de soupape (15).

7. Groupe de suspension selon la revendication 6, caractérisé en ce que les organes de positionnement (14) susceptibles d'être actionnés par voie électromagnétique sont formés par un aimant proportionnel.

8. Groupe de suspension selon la revendication 1, caractérisé par les éléments suivants :
a) le dispositif de commande est formé par un premier piston (33, 26, 20) agencé dans l'agencement de soupape (6) et présentant une première surface active attaquée par le fluide sous pression dans une première chambre à fluide sous pression servant de chambre de commande (31) et une deuxième surface active, à l'opposé de la première surface active attaquée par la pression le fluide sous pression dans la chambre de commande (31), laquelle est attaquée par le fluide sous pression (76, 77) d'une troisième chambre à fluide sous pression (76, 77) ;
b) le premier dispositif est formé par un deuxième piston (74, 75) agencé dans l'agencement de soupape (6) et présentant une première surface active attaquée par le fluide sous pression dans une deuxième chambre à fluide sous pression (34, 28), et une deuxième surface active, à l'opposé de la première surface active, laquelle est attaquée par le fluide sous pression dans la troisième chambre à fluide sous pression (34, 28) ;
c) le deuxième dispositif est formé par une première valve (59, 74) pour relier la troisième chambre à fluide sous pression (76, 77) à la chambre principale (3), et par une deuxième valve (56, 74) pour relier la deuxième chambre à fluide sous pression (34, 28) à la chambre additionnelle (8), ainsi que par un premier étranglement (63, 72) associé à la première valve (59, 74) et par un deuxième étranglement (35, 53) associé à la deuxième valve (56, 74), la troisième chambre à fluide sous pression (76, 77) étant constamment reliée à la chambre principale (3) via le premier étranglement (63, 72) et la deuxième chambre à fluide sous pression (34, 28) étant constamment reliée à la chambre additionnelle (8) via le deuxième étranglement (35, 53) ;
d) le deuxième piston (74, 75) sert à actionner la première valve (59,74) et la deuxième valve (56, 74) ;
e) il est prévu une troisième valve (24, 89, 26, 20), susceptible d'être actionnée par le premier piston (33, 26, 20), laquelle sert à la liaison de la deuxième chambre à fluide sous pression (34, 28) avec la troisième chambre à fluide sous pression (76, 77) ; et
f) la chambre de commande (31) est susceptible d'être au choix reliée avec une source de fluide sous pression (44) ou avec une bâche à fluide, ou bien d'être isolée par rapport aux deux.

9. Groupe de suspension selon la revendication 8, caractérisé en ce que le premier piston (33, 26, 20) est réalisé sous forme de piston en gradins, qui comporte une première surface active attaquée par le fluide sous pression dans la chambre de commande (31), une deuxième surface active (52), à l'opposé de la première surface active, attaquée par le fluide sous pression dans la deuxième chambre à fluide sous pression (34, 28), et une troisième surface active, à l'opposé de la première surface active, attaquée par le fluide sous pression dans la troisième chambre à fluide sous pression (76, 77).

10. Groupe de suspension selon l'une des revendications 1, 8 et 9, caractérisé par les éléments suivants :
a) L'agencement de soupape (6) comprend un boîtier (19, 32) dans lequel le premier piston (33, 26, 20) est agencé avec faculté de translation en direction de l'axe longitudinal du boîtier (19,32) et avec étanchement ;
b) le premier piston (33, 26, 20) est réalisé sous forme de piston creux et se compose d'une première partie de piston (33) qui présente un diamètre plus important, et d'une deuxième partie de piston (26,20) qui présente un diamètre plus faible ;
c) le deuxième piston (74, 75) est agencé de manière centrée sur la deuxième partie de piston (26, 20) du premier piston (33, 26, 20) de manière étanchée et susceptible de se déplacer par rapport au premier piston (33, 26, 20) de telle manière qu'il délimite, conjointement avec le côté tourné vers lui-même de la première partie de piston (33) du premier piston (33, 26, 20), la chambre intérieure du premier piston (33, 26, 20) qui sert de première chambre partielle (34) pour la deuxième chambre à fluide sous pression (34, 28) ;
d) le premier piston (33, 26, 20) délimite, avec son côté détourné du deuxième piston (74,75), la première chambre à fluide sous pression qui sert de chambre de commande (31), et délimite, avec son côté détourné de la chambre de commande (31) et de la deuxième chambre à fluide sous pression (34, 28) ainsi qu'avec son côté détourné de la deuxième chambre à fluide sous pression (34, 28) du deuxième piston (74, 75), la troisième chambre à fluide sous pression (76, 77) ;
e) sur la deuxième partie de piston (26, 20) du premier piston (33, 26, 20) est agencé au centre un premier prolongement de forme tubulaire (64) qui s'étend d'un côté jusque dans la troisième chambre à fluide sous pression (76, 77) en direction du deuxième piston (74, 75), et de l'autre côté à travers la troisième chambre à fluide sous pression (76, 77) en direction d'un premier raccord à fluide sous pression (68) du boîtier (19, 32), et il est prévu un joint (65) agencé entre le boîtier (19, 32) et la surface enveloppe extérieure du premier prolongement tubulaire (64) ;
f) sur la première partie de piston (33) du premier piston (33, 26, 20) est agencé au centre au deuxième prolongement de forme tubulaire (38) qui s'étend d'un côté jusque dans la deuxième chambre à fluide sous pression (34, 28) en direction du deuxième piston (74, 75), et de l'autre côté à travers la chambre de commande (31) en direction d'un deuxième raccord à fluide sous pression (41) du boîtier (19, 32), et il est prévu un joint (37) agencé entre le boîtier (19, 32) et la surface enveloppe extérieure du deuxième prolongement tubulaire (38) ;
g) l'extrémité, tournée vers le deuxième piston (74, 75), du premier prolongement tubulaire (64) est réalisée sous forme de siège de valve (59) et forme, conjointement avec un opercule de valve (74) agencé sur le deuxième piston (74, 75), la première valve (59, 74) ;
h) l'extrémité du deuxième prolongement tubulaire (38) tournée vers le deuxième piston (74, 75) est réalisée sous forme de siège de valve (56), et forme la deuxième valve (56, 74), conjointement avec un deuxième opercule de valve (74) agencé sur le deuxième piston (74, 75) ;
i) dans la paroi de la région du premier prolongement tubulaire (64) qui se trouve dans à la troisième chambre à fluide sous pression (76, 77) est ménagée au moins une ouverture de passage qui sert de premier étranglement (63, 72), et dans la paroi de la région du deuxième prolongement tubulaire (38) qui se trouve dans la deuxième chambre à fluide sous pression (34, 28) est ménagée au moins une ouverture de passage qui sert de deuxième étranglement (35, 53) ;
k) sur la paroi du boîtier (19, 32) est agencé un corps de forme annulaire (24, 89), qui s'étend en direction radiale vers la deuxième partie de piston (26, 20) du premier piston (33, 26, 20), et la deuxième partie de piston (26,20) forme la troisième valve (24, 89, 26, 20) avec la deuxième partie de piston (26,20) du premier piston (33, 26, 20) ;
l) le corps annulaire (24, 89) présente en direction de l'axe longitudinal du boîtier (19, 32) une dimension telle que la troisième valve (24, 89, 26, 20) qui est formée par lui-même et par la deuxième partie de piston (26,20) se trouve dans une position de fermeture lorsque le premier piston (33, 26, 20) est situé dans une première position terminale tandis que la chambre de commande (31) est sans pression, et la troisième valve (24, 89, 26, 20) se trouve dans une position ouverte lorsque le premier piston (33, 26, 20) est parvenu jusque dans une deuxième position terminale par alimentation de la chambre de commande (31) avec un fluide sous pression ;
m) le deuxième piston (74, 75) et l'opercule de valve (74) qui lui est relié sont agencés entre le siège de valve (59) de la première valve (59, 74) et le siège de valve (56) de la deuxième valve (59, 74) de telle manière que la première valve (59, 74) est amenée dans sa position de fermeture lorsque la pression dans la deuxième chambre à fluide sous pression (34, 28) est supérieure à la pression dans la troisième chambre à fluide sous pression (76, 77), et la deuxième valve (56, 74) est amenée dans sa position de fermeture lorsque la pression dans la troisième chambre à fluide sous pression (76, 77) est supérieure à la pression dans la deuxième chambre à fluide sous pression (34, 28), et en ce lorsqu'il règne des pressions égales ou pratiquement égales dans la deuxième chambre à fluide sous pression (34, 28) et dans la troisième chambre à fluide sous pression (76, 77), la première valve (59,74) et la deuxième valve (56, 74) sont maintenues dans leur position d'ouverture.

11. Groupe de suspension selon la revendication 10, caractérisé par les éléments suivants :
a) le deuxième piston (74, 75) est formé par une membrane, laquelle est fixée et étanchée par sa région de bordure extérieure sur la deuxième partie de piston (26, 20) du premier piston (33, 26, 20) ;
b) il est prévu un premier ressort (71), qui s'appuie par une extrémité sur un premier prolongement tubulaire (64) du premier piston (33, 26, 20) et qui sollicite par son autre extrémité un appui de ressort (62) en direction d'un côté du deuxième piston (74, 75) ;
c) il est prévu un deuxième ressort (42), qui s'appuie par une extrémité sur un deuxième prolongement tubulaire (38) du premier piston (33, 26, 20) et qui sollicite par son autre extrémité un appui de ressort (58) en direction de l'autre côté du deuxième piston (74, 75) ;
d) les ressorts (71 et 42) qui s'étendent l'un vers l'autre et en directions opposées vers le deuxième piston (74, 75) ont des dimensions telles que lorsqu'il règne dans la deuxième chambre à fluide sous pression (34, 28) et dans la troisième chambre à fluide sous pression (76, 77) des pressions approximativement égales, ils stabilisent le deuxième piston (74, 75) dans la position médiane neutre entre la première valve (59, 74) et la deuxième valve (56, 74) ;
e) les ressorts (71 et 42) ont des dimensions telles que le deuxième piston (74, 75) effectue à l'encontre de la force des ressorts (71 et 42) une course en direction de la chambre à fluide sous pression (34, 28, ou 76, 77) qui présente la plus faible pression lorsqu'on atteint ou qu'on dépasse une différence de pression prédéterminée entre la pression dans la deuxième chambre à fluide sous pression (34, 28) et la pression dans la troisième chambre à fluide sous pression (76, 77).

12. Groupe de suspension selon la revendication 11, caractérisé par les éléments suivants :
a) la deuxième partie de piston (26,20) du premier piston (33, 26, 20) est réalisée sous forme subdivisée perpendiculairement à son axe longitudinal ;
b) la première portion (26) et la deuxième portion (20) de la deuxième partie de piston (26, 20) sont reliées l'une à l'autre à l'aide de moyens à encliquetage et/ou à enclenchement (21) ; et
c) le deuxième piston (74, 75) réalisé sous forme de membrane est serré par sa région de bordure extérieure entre la première portion (26) et la deuxième portion (20) de la deuxième partie de piston (26, 20).

13. Groupe de suspension selon l'une au moins des revendications précédentes, caractérisé en ce que l'opercule de valve (74) pour la première valve (59, 74) et pour la deuxième valve (56, 74) est formé par un renforcement de la membrane (75) disposé au centre sur la membrane (75).

14. Groupe de suspension selon l'une au moins des revendications précédentes, caractérisé en ce que la deuxième chambre à fluide sous pression (34, 28) est formée par la chambre intérieure, servant de première chambre partielle, du premier piston (33, 26, 20) réalisé sous forme de piston creux, et par une chambre annulaire servant de deuxième chambre partielle (28), laquelle est délimitée par la première partie de piston (33) du premier piston (33, 26, 20) et par le corps annulaire (24,89), et en ce que la première chambre partielle (34) et la deuxième chambre partielle (28) sont reliées l'une à l'autre par l'intermédiaire d'une ouverture de traversée (27, 54) analogue à un canal qui traverse l'enveloppe du premier piston (33, 26, 20).

15. Groupe de suspension selon l'une au moins des revendications précédentes, caractérisé en ce que le corps annulaire (24) est formé par une saillie du boîtier (19, 32) qui s'étend en direction radiale vers la deuxième partie de piston (26, 20) du premier piston (33, 26, 20).

16. Groupe de suspension selon l'une au moins des revendications précédentes, caractérisé en ce que le corps annulaire est formé par une bague (89) mise en place de façon détachable dans le boîtier (19, 32).

17. Groupe de suspension selon l'une au moins des revendications précédentes, caractérisé en ce que le corps annulaire (24, 89) est suivi par des saillies (85,87) en forme de nervures agencées sur la paroi du boîtier (19, 32), lesdites saillies s'étendant en direction de l'axe longitudinal du boîtier (19, 32) et s'étendant en direction radiale vers la deuxième partie de piston (26,20) du premier piston (33, 26, 20).

18. Groupe de suspension selon l'une au moins des revendications précédentes, caractérisé en ce que la première partie de piston (33) et la deuxième partie de piston (26, 20) du premier piston (33, 26, 20) sont réalisées sous forme d'une unité structurelle d'un seul tenant.

19. Groupe de suspension selon la revendication 1, caractérisé par les éléments suivants :
a) le dispositif de commande est formé par un premier piston (102) agencé dans l'agencement de soupape (6) et susceptible d'être déplacé à l'encontre d'une force de rappel par le fluide sous pression dans une première chambre à fluide sous pression servant de chambre de commande (105) ;
b) le premier dispositif est formé par un deuxième piston (117, 118) agencé dans l'agencement de soupape (6), lequel piston comprend une première surface active attaquée par un fluide sous pression dans une deuxième chambre à fluide sous pression (111), et une deuxième surface active à l'opposé de la première surface active et attaquée par un fluide sous pression dans une troisième chambre à fluide sous pression (119) ;
c) dans l'agencement de soupape (6) est agencée une valve (137, 131, 134) qui sert à la liaison de la deuxième chambre à fluide sous pression (111) avec la troisième chambre à fluide sous pression (119);
d) la valve (137, 131, 134) et le premier piston (102) sont en liaison d'action l'un avec l'autre de telle façon que la valve (137, 131) peut être amenée par le premier piston (102) jusque dans sa position d'ouverture à l'encontre de la force de rappel ;
e) la valve (137, 131, 134) est formée par une ouverture traversante (135) qui traverse le deuxième piston (117, 118) et qui délimite un premier corps de valve (137) de forme tubulaire agencé sur le deuxième piston (117, 118), et par un deuxième corps de valve (131, 134) qui sert d'opercule de valve et qui est agencé sur une tige de piston (109) du premier piston (102) qui traverse l'ouverture traversante (135) du deuxième piston (117, 118) ;
f) le deuxième dispositif est formé par un premier organe d'étranglement (126) et un deuxième organe d'étranglement (131), lesquels sont agencés sur la tige de piston (109), et par la paroi opposée à la tige de piston (109) du premier corps de valve tubulaire (137), le deuxième organe d'étranglement (131) étant une partie du deuxième corps de valve (131, 134) servant d'opercule de valve ;
g) le premier organe d'étranglement (126) et le deuxième organe d'étranglement (131) sont agencés l'un par rapport à l'autre et par rapport au premier corps de valve (137) de telle manière qu'un premier agencement à étranglement (126, 137) formé par le premier organe d'étranglement (126) et par le premier corps de valve (137) devient actif lorsque la pression dans la deuxième chambre à fluide sous pression (111) est supérieure à la pression dans la troisième chambre à fluide sous pression (119), et qu'un deuxième agencement à étranglement (131, 137) formé par le deuxième organe d'étranglement (131) et par le premier corps de valve (137) devient actif lorsque la pression dans la troisième chambre à fluide sous pression (119) est supérieure à la pression dans la deuxième chambre à fluide sous pression (111) ;
h) la troisième chambre à fluide sous pression (119) est reliée à la chambre principale (3), et la deuxième chambre à fluide sous pression (111) est reliée à la chambre additionnelle (8) ;
i) la chambre de commande (105) peut être au choix reliée à une source de fluide sous pression (44) ou à une bâche à fluide sous pression, ou bien isolée vis-à-vis des deux par l'intermédiaire d'une valve additionnelle (46) ;
k) il est prévu un premier ressort (120) qui s'appuie par une extrémité contre une première partie de boîtier (91, 130) de l'agencement de soupape (6), et qui sollicite par son autre extrémité le deuxième piston (117, 118) en direction de la deuxième chambre à fluide sous pression (111) ;
l) il est prévu un deuxième ressort (114) qui s'appuie par une extrémité contre une deuxième partie de boîtier (93) de l'agencement de soupape (6), et qui sollicite par son autre extrémité le deuxième piston (117, 118) en direction de la troisième chambre à fluide sous pression (119) ;
m) les ressorts (120, 114) qui agissent en directions mutuellement opposées sur le deuxième piston (117, 118) ont des dimensions telles que lorsqu'il règne dans la deuxième chambre à fluide sous pression (111) et dans la troisième chambre à fluide sous pression (119) des pressions égales ou approximativement égales, ils stabilisent le deuxième piston (117, 118) dans sa position médiane neutre ;
n) les ressorts (120, 114) ont des dimensions telles que le deuxième piston (117, 118) effectue à l'encontre de la force des ressorts (120, ou 114) une course en direction de la chambre à fluide sous pression (111, ou 119) qui présente la plus faible pression, lorsqu'on atteint ou qu'on dépasse une différence de pression prédéterminée entre la pression dans la deuxième chambre à fluide sous pression (111) et la pression dans la troisième chambre à fluide sous pression (119).

20. Groupe de suspension selon l'une au moins des revendications précédentes, caractérisé par les éléments suivants :
a) le premier piston (102) est agencé dans un boîtier (91, 130, 93) de l'agencement de soupape (6) avec faculté de translation dans la direction de l'axe longitudinal du boîtier (91, 130, 93) ;
b) le deuxième piston (117, 118) est agencé de manière coaxiale au premier piston (102) dans le boîtier (91, 130, 93), avec faculté de translation par rapport au premier piston (102) en direction de l'axe longitudinal du boîtier (91, 130, 93) ; et
c) le premier organe d'étranglement (120) est agencé à l'extrémité libre de la tige de piston (109).

21. Groupe de suspension selon la revendication 1, caractérisé par les éléments suivants :
a) le premier dispositif est formé par un piston (153, 176) agencé dans l'agencement de soupape (6), lequel piston présente une première surface active attaquée par un fluide sous pression dans une première chambre à fluide sous pression (142), et une deuxième surface active à l'opposé de la première surface active et attaquée par un fluide sous pression dans une deuxième chambre à fluide sous pression (165) ;
b) le deuxième dispositif est formé par une première valve (151, 153) pour relier la première chambre à fluide sous pression (142) avec la chambre principale (3) et par une deuxième valve (164, 153) pour relier la deuxième chambre à fluide sous pression (165) avec la chambre additionnelle (8), ainsi que par un premier étranglement (150, 173) associé à la première valve (151, 153) et par un deuxième étranglement (157, 163) associé à la deuxième valve (164, 153), la première chambre à fluide sous pression étant constamment reliée à la chambre principale (3) par l'intermédiaire du premier étranglement (150, 173), et la deuxième chambre à fluide sous pression (165) étant constamment reliée à la chambre additionnelle (8) par l'intermédiaire du deuxième étranglement (157, 163) ; et
c) il est prévu une troisième valve commandée (168), qui sert à relier la première chambre à fluide sous pression (142) avec la deuxième chambre à fluide sous pression (165).

22. Groupe de suspension selon un la revendication 1, caractérisé par les éléments suivants :
a) le premier dispositif est formé par un piston (153, 176), lequel est agencé dans un boîtier (171, 141) avec faculté de translation en direction de l'axe longitudinal du boîtier (171, 141) et sépare une première chambre à fluide sous pression (142) par rapport à une deuxième chambre à fluide sous pression (165) ;
b) dans la première chambre à fluide sous pression (142) est agencé un premier siège de valve (151), lequel forme avec une partie (153) du piston (153, 176) une première valve (151, 153) par l'intermédiaire de laquelle la première chambre à fluide sous pression (142) peut être reliée à la chambre principale (3) du groupe de suspension ;
c) dans la deuxième chambre à fluide sous pression (165) est agencé un deuxième siège de valve (164), lequel forme avec la partie (153) du piston (153, 176) une deuxième valve (164, 153) par l'intermédiaire de laquelle la deuxième chambre à fluide sous pression (165) peut être reliée à la chambre additionnelle (8) ;
d) à la première valve (151, 176) est associé un premier étranglement (150, 173) au moyen duquel la chambre principale (3) est constamment reliée à la première chambre à fluide sous pression (142), et à la deuxième valve (164, 153) est associé un deuxième étranglement (157, 163) au moyen duquel la chambre additionnelle (8) est constamment reliée à la deuxième chambre à fluide sous pression (165) ;
e) il est prévu un premier ressort (146) qui s'appuie par une extrémité contre le boîtier (171, 141), et qui sollicite par son autre extrémité un appui à ressort (152) en direction d'un côté du piston (153, 176) ;
f) il est prévu un deuxième ressort (158) qui s'appuie par une extrémité contre le boîtier (171, 141), et qui sollicite par son autre extrémité un appui à ressort (154) en direction de l'autre côté du piston (153, 176) ;
g) les ressorts (146 et 158) qui s'étendent en directions mutuellement opposées vers le piston (153, 176) ont des dimensions telles que lorsqu'il règne dans la première chambre à fluide sous pression (142) et dans la deuxième chambre à fluide sous pression (165) des pressions égales ou approximativement égales, ils stabilisent le piston (153, 176) dans sa position médiane neutre entre la première valve (151, 153) et la deuxième valve (164, 153) ;
h) les ressorts (146 et 158) ont des dimensions telles que le piston (153, 176) effectue à l'encontre de la force des ressorts (146, ou 158) une course en direction de la chambre à fluide sous pression (142, ou 165) qui présente la plus faible pression lorsqu'on atteint ou qu'on dépasse une différence de pression prédéterminée entre la pression dans la première chambre à fluide sous pression (142) et la pression dans la deuxième chambre à fluide sous pression (165).

23. Groupe de suspension selon l'une au moins des revendications précédentes, caractérisé par les éléments suivants :
a) l'agencement de soupape (6) comprend un boîtier (171, 141) dans lequel est agencé un piston (153, 176) avec faculté de translation en direction de l'axe longitudinal du boîtier, et avec étanchement ;
b) le piston (153, 176) présente une première surface active attaquée par le fluide sous pression dans une première chambre à fluide sous pression (142) et une deuxième surface active, à l'opposé de la première surface active, attaquée par le fluide sous pression dans une deuxième chambre à fluide sous pression (165) ;
c) le boîtier (171, 141) comprend un premier prolongement de forme tubulaire (148) et un deuxième prolongement de forme tubulaire (162) opposé au premier ;
d) le premier prolongement tubulaire (148) du boîtier s'étend jusque dans la première chambre à fluide sous pression (142) et le deuxième prolongement tubulaire (162) du boîtier s'étend jusque dans la deuxième chambre à fluide sous pression (165) ;
e) le piston (153, 176) est agencé entre les côtés tournés l'un vers l'autre des deux prolongements de forme tubulaire (148 et 162) du boîtier, et il sépare la première chambre à fluide sous pression (142) vis-à-vis de la deuxième chambre à fluide sous pression (165) ;
f) l'extrémité libre du premier prolongement (148) qui s'étend vers le piston (153, 176) est réalisée sous forme de siège de valve (151), qui forme une première valve (151, 153) conjointement avec le côté qui lui fait face d'une partie du piston (153, 176) qui fait office d'opercule de valve (153), et l'extrémité libre du deuxième prolongement (162) qui s'étend vers le piston (153, 176) est réalisée sous forme de siège de valve (164) qui forme une deuxième valve (164, 153) conjointement avec le côté qui lui fait face de la partie du piston (153, 176) qui fait office d'opercule de valve (153) ;
g) le piston (153, 176) sert à actionner la première valve (151, 153) et la deuxième valve (164, 153) ; et
h) dans la paroi de la région du premier prolongement (148) du boîtier, qui se trouve dans la première chambre à fluide sous pression (142), est ménagée au moins une ouverture traversante qui sert de premier étranglement (150, 173), et dans la paroi de la région du deuxième prolongement (162) du boîtier, qui se trouve devant la deuxième chambre à fluide sous pression (65), est ménagée au moins une ouverture traversante qui sert de deuxième étranglement (157, 163).

## Claims

1. A pressure medium-operated spring arrangement for a vehicle, having the following features:
a) the spring arrangement comprises a main chamber (3) which serves to support the bodywork of the vehicle on a vehicle axle, the main chamber (3) changing its volume with the stroke of the spring arrangement;
b) an auxiliary chamber (8) is provided, which by way of a valve arrangement (6, 15) can either be connected to the main chamber (3) or isolated therefrom;
c) the valve arrangement (6, 15) is constructed so that it can be changed over quickly from its open position into its closed position, but during the opening process, for the purpose of slowing pressure equalisation between the pressure in the main chamber (3) and the pressure in the auxiliary chamber (8), passes through a preliminary opening phase throttling the flow of pressure medium;
characterised by the following features:
d) a first arrangement (9,16,11, 74, 75, 117, 118, 176, 153) is provided for recognising a pressure difference between the pressure in the main chamber (3) and the pressure in the auxiliary chamber (8);
e) a second arrangement (14, 33, 26, 20, 24, 74, 75, 59, 56, 35, 53, 63, 72, 131, 134,137,126,153,150,151,173,157,163,164,168) is provided for changing the opening cross-section of the valve arrangement (6, 15);
f) a control device (11, 17, 46, 33, 102, 168) is provided, which serves for activating the valve arrangement (6,15);
g) the first arrangement (9, 16, 11 ,74, 75, 117, 118, 176, 153) and the second arrangement (14, 33, 26, 20, 24, 74, 75, 59, 56, 35, 53, 63, 72, 131, 134, 137, 126, 153, 150, 151, 173, 164, 157, 163, 168) are coupled with one another and with the control device (11, 17, 46, 33, 102, 168) is such a way that as the control device (11, 17, 46, 33, 102, 168) becomes active, and hence the valve arrangement (6,15) becomes active, and in the presence of a pressure difference between the pressure in the main chamber (3) and the pressure in the auxiliary chamber (8), the valve arrangement (6, 15) unblocks only a part of its opening cross-section and only on a reduction in the pressure difference to a predetermined value does it unblock its entire opening cross-section.

2. A pressure medium-operated spring arrangement according to claim 1, characterised by the following features:
a) the first arrangement comprises a piston (75, 74, 117, 118, 153, 176), one side of which is pressurized with the pressure of the main chamber (3) and the other side of which is pressurized with the pressure of the auxiliary chamber (8);
b) a valve (24, 26, 20, 137, 131, 134, 168) is provided, by means of which the main chamber (3) and the auxiliary chamber (8) can either be connected to one another or can be isolated from one another;
c) the second arrangement comprises a first throttling arrangement (63, 72, 59, 74, 137, 126, 151, 153, 150, 173) arranged between the main chamber (3) and the valve (24, 26, 20,137,131,134,168) and a second throttling arrangement (35, 53, 56, 74, 137, 131, 157, 163, 153, 164) arranged between the auxiliary chamber (8) and the valve (24, 26, 20,137,131,134,168), via which, with the valve (24, 26, 20, 137, 131, 168) opened, the main chamber (3) and the auxiliary chamber (8) are connected to one another;
d) the first throttling arrangement (63, 72, 59, 74, 137, 126, 151, 153, 150, 173) and the second throttling arrangement (35, 53, 56, 74, 137, 131, 157, 163, 164, 153) are constructed so that they can be brought from a throttling position - small opening cross-section - into a non-throttling position - large opening cross-section -;
e) the first throttling arrangement (63, 72, 59, 74, 137, 126, 151, 153, 150, 173) and the second throttling arrangement (35, 53, 56, 74, 137, 131, 157, 163, 164, 153) are in operative connection with the piston (75, 74, 117, 118, 153, 176) of the first arrangement in such a way that, with the valve (24, 26, 20, 137, 131, 134, 168) open and in the presence of a pressure difference between the pressure in the main chamber (3) and the pressure in the auxiliary chamber (8), one of the two throttling arrangements (63, 72, 59, 74, 137, 126, 151, 153, 150, 173 or 35, 53, 56, 74, 137, 131, 157, 163, 154, 153) is in its throttling position and is brought by the piston (75, 74, 117, 118, 153, 176) into its non-throttling position when the pressure in the main chamber (3) and the pressure in the auxiliary chamber (8) have equalised at least approximately via this throttling arrangement (63, 72, 59, 74, 137, 126, 151, 153, 150, 173 or 35, 53, 56, 74, 137,131,157,163,164,153);
f) the control arrangement comprises an operating element (102, 33, 26, 20) for operating the valve (24, 26, 20, 137, 131, 134, 168).

3. A pressure medium-operated spring arrangement according to at least one of the preceding claims, characterised by the following features:
a) the first throttling arrangement (63, 72, 59, 74, 151, 153, 150, 173) is formed by a first valve (59, 74, 151, 153) and a first throttle (63, 72, 150, 173), and the second throttling arrangement (56, 74, 35, 53, 164, 153, 157, 163) is formed by a second valve (56, 74, 164, 153) and a second throttle (35, 53, 157, 163), wherein the first valve (59, 74, 151, 153) and the first throttle (63, 72, 150, 173) are arranged between the main chamber (3) and a pressure medium chamber (76, 77, 142) associated therewith, and the second valve (56, 74, 164, 153) and the second throttle (35, 53, 157, 163) are arranged between the auxiliary chamber (8) and a further pressure medium chamber (34, 28, 165) associated therewith;
b) the first valve (59, 74, 151, 153) serves to change the opening cross-section of the first throttling arrangement (63, 72, 59, 74, 150, 173, 151, 153), wherein the opening cross-section of the first valve (59, 74, 151, 153) serves as the large opening cross-section of the first throttling arrangement (63, 72, 59, 74, 151, 153, 150, 173);
c) the second valve (56, 74, 164, 153) serves to change the opening cross-section of the second throttling arrangement (35, 53, 56, 74, 164, 153, 157, 163), wherein the opening cross-section of the second valve (56, 74, 164, 153) serves as the large opening cross-section of the second throttling arrangement (35, 53, 56, 74, 164, 153, 157, 163);
d) the valve (20, 24, 26, 168) operable by means of the operating element (33, 102) serves as valve for connecting the pressure medium chamber (77, 76, 142) associated with the main chamber (3) with the further pressure medium chamber (34, 28, 165) associated with the auxiliary chamber (8).

4. A pressure medium-operated spring arrangement according to at least one of the preceding claims, characterised by the following features:
a) the valve (137,131,134) for connecting the main chamber (3) with the auxiliary chamber (8) is formed by a first valve member (137) connected with the piston (117,118) of the first arrangement, and by a second valve member (131,134) connected to the operating element (102), wherein the piston (117,118) and the operating element (102) are movable relative to one another;
b) the first throttling arrangement (137,126) is formed by a first throttle element (126) connected to the operating element (102) for the valve (137,131,134) and by the first valve member (137), and the second throttling arrangement (137, 131) is formed by a second throttle element (131) connected likewise to the operating element (102) and by the first valve member (137);
c) the first throttle element (126) and the second throttle element (131) are so constructed and so arranged with respect to the first valve member (137) that in the presence of a pressure difference between the pressure in the main chamber (3) and the pressure in the auxiliary chamber (8), with the valve (131, 134,137) open and with the pressures in the main chamber (3) and in the auxiliary chamber (8) equalising via the throttling arrangement (126,137 and 131, 137 respectively) in its throttling position, and upon movement of the piston (117,118) caused by the pressure-equalising process, the particular throttling arrangement (126,137, and 131,137 respectively) that is associated with the chamber having the lower pressure - main chamber (3) or auxiliary chamber (8) - is brought from its throttling position into its non-throttling position.

5. A pressure medium-operated spring arrangement according to claim 4, characterised in that the second throttle element (131) is formed by a part of the second valve member (131,134) of the valve (137,131,134).

6. A pressure medium-operated spring arrangement according to claim 1, characterised by the following features:
a) the first arrangement comprises a pressure-measuring device (9) associated with the main chamber (3) and a second pressure-measuring device (16) associated with the auxiliary chamber (8), which generate electrical signals corresponding to the pressure in the main chamber (3) and the pressure in the auxiliary chamber (8);
b) the first arrangement comprises an evaluating and control device (11) for detecting a pressure difference between the pressure in the main chamber (3) and the pressure in the auxiliary chamber (8) and for generating an electrical signal corresponding to a pressure difference;
c) the second arrangement is formed by electrically or electromagnetically operable actuating means (14) that are in operative connection with a valve closure member of the valve arrangement (15).

7. A pressure medium-operated spring arrangement according to claim 6, characterised in that the electromagnetically operable actuating means (14) are formed by a proportional-action magnet.

8. A pressure medium-operated spring arrangement according to claim 1, characterised by the following features:
a) the control arrangement is formed by a first piston (33, 26, 20) arranged in the valve arrangement (6), which first piston comprises a first effective area pressurizable by pressure medium in a first pressure medium chamber serving as control chamber (31) and an effective area pressurizable by pressure medium of a third pressure medium chamber (76, 77) and acting in the opposite direction to the effective area pressurizable by pressure medium in the control chamber (31);
b) the first arrangement is formed by a second piston (74, 75) arranged in the valve arrangement (6), which second piston comprises a first effective area pressurizable by pressure medium in a second pressure medium chamber (34, 28) and an effective area pressurizable by pressure medium of the third pressure medium chamber (76, 77) and acting in the opposite direction to the first effective area;
c) the second arrangement is formed by a first valve (59, 74) for connecting the third pressure medium chamber (76, 77) with the main chamber (3) and by a second valve (56, 74) for connecting the second pressure medium chamber (34, 28) with the auxiliary chamber (8) and also by a first throttle (63, 72) associated with the first valve (59, 74) and by a second throttle (35, 53) associated with the second valve (56, 74), wherein the third pressure medium chamber (76, 77) is permanently connected via the first throttle (63, 72) to the main chamber (3) and the second pressure medium chamber (34, 28) is permanently connected via the second throttle (35, 53) to the auxiliary chamber (8);
d) the second piston (74, 75) serves to operate the first valve (59, 74) and the second valve (56, 74);
e) a third valve (24, 89, 26, 20) operable by the first piston (33, 26, 20) is provided, which serves to connect the second pressure medium chamber (34, 28) to the third pressure medium chamber (76, 77);
f) the control chamber (31) is connectable via a valve (46) either to a pressure medium source (44) or to a pressure medium sink, or can be isolated from both.

9. A pressure medium-operated spring arrangement according to claim 8, characterised in that the first piston (33, 26, 20) is in the form of a differential piston, which has a first effective area pressurizable by pressure medium in the control chamber (31), a second effective area (52) pressurized by pressure medium in the second pressure medium chamber (34, 28) and acting in the opposite direction to the first effective area, and a third effective area pressurized by pressure medium in the third pressure medium chamber (76, 77) and acting in the opposite direction to the first effective area.

10. A pressure medium-operated spring arrangement according to claims 1, 8 and 9, characterised by the following features:
a) the valve arrangement (6) comprises a housing (19, 32) in which the first piston (33, 26, 20) is arranged so as to slide, sealed, in the direction of the longitudinal axis of the housing (19, 32);
b) the first piston (33, 26, 20) is in the form of a hollow piston and is constituted by a first piston part (33) having a larger diameter and a second piston part (26, 20) having a smaller diameter;
c) the second piston (74, 75) is arranged concentrically on the second piston part (26, 20) of the first piston (33, 26, 20), sealed and movable relative to the first piston (33, 26, 20), such that, together with the side facing it of the first piston part (33) of the first piston (33, 26, 20), it bounds the interior of the first piston (33, 26, 20) serving as a first compartment (34) of the second pressure medium chamber (34, 28);
d) with its side remote from the second piston (74, 75) the first piston (33, 26, 20) bounds the first pressure medium chamber serving as control chamber (31), and with its side remote from the control chamber (31) and from the second pressure medium chamber (34, 28), and together with the side of the second piston (74, 75) remote from the second pressure medium chamber (34, 28), the first piston bounds the third pressure medium chamber (76, 77);
e) on the second piston part (26, 20) of the first piston (33, 26, 20) a first tubular extension (64) is concentrically arranged, which extension at one end extends into the third pressure medium chamber (76, 77) towards the second piston (74, 75) and at the other end extends right through the third pressure medium chamber (76, 77) towards a first pressure medium connection (68) of the housing (19, 32), wherein a seal (65) is arranged between the housing (19, 32) and the outer surface of the first tubular extension (64);
f) on the first piston part (33) of the first piston (33, 26, 20) a second tubular extension (38) is concentrically arranged, which extension at one end extends into the second pressure medium chamber (34, 28) towards the second piston (74, 75) and at the other end extends right through the control chamber (31) towards a second pressure medium connection (41) of the housing (19, 32), wherein a seal (37) is arranged between the housing (19, 32) and the outer surface of the second tubular extension (38);
g) the end of the first tubular extension (64) facing the second piston (74, 75) is in the form of a valve seat (59) and, together with a valve closure member (74) arranged on the second piston (74, 75), forms the first valve (59, 74);
h) the end of the second tubular extension (38) facing the second piston (74, 75) is in the form of a valve seat (56) and, together with a valve closure member (74) arranged on the second piston (74, 75), forms the second valve (56, 74);
i) in the wall of the region of the first tubular extension (64) that is located in the third pressure medium chamber (76, 77) there is arranged at least one through-opening serving as first throttle (63, 72) and in the wall of the region of the second tubular extension (38) that is located in the second pressure medium chamber (34, 28) there is arranged at least one through-opening serving as second throttle (35, 53);
k) on the wall of the housing (19, 32) there is arranged an annular body (24, 89) which extends radially towards the second piston part (26, 29) of the first piston (33, 26, 20) and together with the second piston part (26, 20) of the first piston (33, 26, 20) forms the third valve (24, 89, 26, 20);
I) the dimension of the annular body (24, 89) in the direction of the longitudinal axis of the housing (19, 32) is such that the third valve (24, 89, 26, 20) formed by it and the second piston part (26, 20) is located in its closed position when the first piston (33, 26, 20), with the control chamber (31) pressureless, is located in a first end position, and the third valve (24, 89, 26, 20) is located in its open position when the first piston (33, 26, 20) has reached a second end position on pressurisation of the control chamber (31) with pressure medium;
m) the second piston (74, 75) and the valve closure member (74) connected therewith are so arranged between the valve seat (59) of the first valve (59, 74) and the valve seat (56) of the second valve (59, 74) that the first valve (59, 74) is brought into its closed position when the pressure in the second pressure medium chamber (34, 28) is higher than the pressure in the third pressure medium chamber (76, 77), and the second valve (56, 74) is brought into its closed position when the pressure in the third pressure medium chamber (76, 77) is higher than the pressure in the second pressure medium chamber (34, 28), and that, when the pressures in the second pressure medium chamber (34, 28) and in the third pressure medium chamber (76, 77) are the same or approximately the same, the first valve (59, 74) an the second valve (56, 74) are held in their open position.

11. A pressure medium-operated spring arrangement according to claim 10, characterised by the following features:
a) the second piston (74, 75) is formed by a diaphragm that is secured and sealed with its outer edge region on the second piston part (26, 20) of the first piston (33, 26, 20);
b) a first spring (71) is provided, which with its one end is supported on the first tubular extension (64) of the first piston (33, 26, 20) and with its other end biases a cup spring (62) towards one side of the second piston (74, 75);
c) a second spring (42) is provided, which with its one end is supported on the second tubular extension (38) of the first piston (33, 26, 20) and with its other end biases a cup spring (58) towards the other side of the second piston (74, 75);
d) the springs (71 and 42) acting in opposite directions to one another and extending towards the second piston (74, 75) are so dimensioned that when the pressures in the second pressure medium chamber (34, 28) and in the third pressure medium chamber (76, 77) are the same or approximately the same, they stabilise the second piston (74, 75) in the neutral middle position between the first valve (59, 74) and the second valve (56, 74);
e) the springs (71 and 42) are so dimensioned that the second piston (74, 75) effects a stroke against the force of the spring (71, 42 respectively) towards the pressure medium chamber (34, 28 and 76, 77 respectively) having the lower pressure when a predetermined pressure difference between the pressure in the second pressure medium chamber (34, 28) and the pressure in the third pressure medium chamber (76, 77) is reached or exceeded.

12. A pressure medium-operated spring arrangement according to claim 11, characterised by the following features:
a) the second piston part (26, 20) of the first piston (33, 26, 20) is of divided construction transverse to its longitudinal axis;
b) the first part (26) and the second part (20) of the second piston part (26, 20) are connected to one another by means of snap-action or locking means;
c) the second piston (74, 75) in the form of a diaphragm is clamped with its outer edge region between the first part (26) and the second part (20) of the second piston part (26, 20).

13. A pressure medium-operated spring arrangement according to at least one of the preceding claims, characterised in that the valve closure member (74) for the first valve (59, 74) and the second valve (56, 74) is formed by a reinforcement of the diaphragm (75) arranged concentrically on the diaphragm (75).

14. A pressure medium-operated spring arrangement according to at least one of the preceding claims, characterised in that the second pressure medium chamber (34, 28) is formed by the interior of the first piston (33, 26, 20), in the form of a hollow piston, serving as a first compartment (34) and by an annular chamber serving as second compartment (28), which is bounded by the first piston part (33, 26, 20) of the first piston (33, 26, 20) and the annular body (24, 89), wherein the first compartment (34) and the second compartment (28) are connected with one another via at least one channel-like through-opening (27, 54) passing through the wall of the first piston (33, 26, 20).

15. A pressure medium-operated spring arrangement according to at least one of the preceding claims, characterised in that the annular body (24) is formed by a projection of the housing (19, 32) extending radially towards the second piston part (26, 20) of the first piston (33, 26, 20).

16. A pressure medium-operated spring arrangement according to at least one of the preceding claims, characterised in that the annular body is formed by a ring (89) inserted removably in the housing (19, 32).

17. A pressure medium-operated spring arrangement according to at least one of the preceding claims, characterised in that rib-like projections (85, 87) arranged on the wall of the housing (19, 32) adjoin the annular body (24, 29), which projections run in the direction of the longitudinal axis of the housing (19, 32) and extend radially towards the second piston part (26, 20) of the first piston (33, 26, 20).

18. A pressure medium-operated spring arrangement according to at least one of the preceding claims, characterised in that the first piston part (33) and the second piston part (26, 20) of the first piston (33, 26, 20) are in the form of a one-piece modular unit.

19. A pressure medium-operated spring arrangement according to at least one of the preceding claims, characterised by the following features:
a) the control device is formed by a first piston (102) arranged in the valve arrangement (6), which first piston is displaceable against a restoring force by pressure medium in a first pressure medium chamber serving as control chamber (105);
b) the first arrangement is formed by a second piston (17,118) arranged in the valve arrangement (6), which second piston comprises a first effective area pressurized by a pressure medium in a second pressure medium chamber (111) and a second effective area pressurized by a pressure medium in a third pressure medium chamber (119) and acting in the opposite direction to the first effective area;
c) a valve (137, 131, 134) is arranged in the valve arrangement (6), which valve serves to connect the second pressure medium chamber (111) with the third pressure medium chamber (119);
d) the valve (137, 131, 134) and the first piston (102) are in operative connection with one another such that the valve (137, 131) can be brought into its open position against the restoring force by the first piston (102);
e) the valve (137, 131, 134) is formed by a through-opening (135) passing through the second piston (117,118), which through-opening is bounded by a tubular first valve member (137) arranged on the second piston (117,118), and by a second valve member (131, 134) serving as valve closure member, which second valve member is arranged on a piston rod (109) of the first piston (102), which piston rod is guided right through the through-opening (135) of the second piston (117,118);
f) the second arrangement is formed by a first throttle element (126) and a second throttle element (131), which are arranged on the piston rod (109), and by the wall of the tubular first valve member (137) lying opposite the piston rod (109), wherein the second throttle element (131) is part of the second valve member (131, 134) serving as valve closure member;
g) the first throttle element (126) and the second throttle element (131) are so arranged with respect to one another and to the first valve member (137) that a first throttling arrangement (126,137) formed by the first throttle element (126) and the first valve member (137) becomes effective when the pressure in the second pressure medium chamber (111) is higher than the pressure in the third pressure medium chamber (119), and a second throttling arrangement (131, 137) formed by the second throttle element (131) and the first valve member (137) becomes effective when the pressure in the third pressure medium chamber (119) is higher than the pressure in the second pressure medium chamber (111);
h) the third pressure medium chamber (119) is connected to the main chamber (3) and the second pressure medium chamber (111) is connected to the auxiliary chamber (8);
i) the control chamber (105) is connectible via an additional valve (46) either to a pressure medium source (44) or to a pressure medium sink, or can be isolated from both;
k) a first spring (102) is provided, which with its one end is supported on a first housing part (91, 130) of the valve arrangement (6) and with its other end biases the second piston (117,118) towards the second pressure medium chamber (111);
I) a second spring (114) is provided, which with its one end is supported on a second housing part (93) of the valve arrangement (6) and with its other end biases the second piston (117,118) towards the third pressure medium chamber (119);
m) the springs (120,114) acting in opposite directions to one another and extending towards the second piston (117, 118) are so dimensioned that when the pressures in the second pressure medium chamber (111) and in the third pressure medium chamber (119) are the same or approximately the same, they stabilise the second piston (117,118) in its neutral middle position;
n) the springs (120,114) are so dimensioned that the second piston (117,118) effects a stroke against the force of the spring (102,114 respectively) towards the pressure medium chamber (111 and 119 respectively) having the lower pressure when a predetermined pressure difference between the pressure in the second pressure medium chamber (111) and the pressure in the third pressure medium chamber (119) is reached or exceeded.

20. A pressure medium-operated spring arrangement according to at least one of the preceding claims, characterised by the following features:
a) the first piston (109) is arranged in a housing (91, 130, 93) of the valve arrangement (6) so as to slide in the direction of the longitudinal axis of the housing (91, 130, 93);
b) the second piston (117,118) is arranged coaxial with the first piston (102) and is arranged in the housing (91,130, 93) so as to slide relative to the first piston (102) in the longitudinal direction of the housing (91, 130, 93);
c) the first throttle element (126) is arranged at the free end of the piston rod (109).

21. A pressure medium-operated spring arrangement according to claim 1, characterised by the following features:
a) the first arrangement is formed by a piston (153, 176) arranged in the valve arrangement (6), which piston comprises a first effective area pressurized by a pressure medium in a first pressure medium chamber (142) and a second effective area pressurised by a pressure medium in a second pressure medium chamber (165) and acting in the opposite direction to the first effective area;
b) the second arrangement is formed by a first valve (151,153) for connecting the first pressure medium chamber (142) with the main chamber (3) and by a second valve (164, 153) for connecting the second pressure medium chamber (165) with the auxiliary chamber (8) and also by a first throttle (150,173) associated with the first valve (151,153) and a second throttle (157,163) associated with the second valve (164,153), wherein the first pressure medium chamber (142) is permanently connected via the first throttle (150,173) to the main chamber (3) and the second pressure medium chamber (165) is permanently connected via the second throttle (157,163) to the auxiliary chamber (8);
c) a controllable third valve (168) is provided, which serves to connect the first pressure medium chamber (142) with the second pressure medium chamber (165).

22. A pressure medium-operated spring arrangement according to claim 1, characterised by the following features:
a) the first arrangement is formed by a piston (153,176) which is arranged in a housing (171,141) so as slide in the direction of the longitudinal axis of the housing (171,141) and separates a first pressure medium chamber (142) from a second pressure medium chamber (165);
b) in the first pressure medium chamber (142) there is arranged a first valve seat (151), which together with a part (153) of the piston (153,176) forms a first valve (151,153) via which the first pressure medium chamber (142) can be connected with the main chamber (3) of the spring arrangement;
c) in the second pressure medium chamber (165) there is arranged a second valve seat (164), which together with the part (153) of the piston (153, 176) forms a second valve (164,153) via which the second pressure medium chamber (165) can be connected with the auxiliary chamber (8);
d) the first valve (151,176) has associated with it a first throttle (150, 173), via which the main chamber (3) is permanently connected to the first pressure medium chamber (142), and the second valve (164, 153) has associated with it a second throttle (157,163), via which the auxiliary chamber (8) is permanently connected to the second pressure medium chamber (165);
e) a first spring (146) is provided, which is supported at one end on the housing (171,141) and with its other end biases a cup spring (152) towards one side of the piston (153,176);
f) a second spring (158) is provided, which is supported at one end on the housing (171, 141) and with its other end biases a cup spring (154) towards the other side of the piston (153,176);
g) the springs (146 and 158) acting in opposite directions to one another and extending towards the piston (153,176) are so dimensioned that when the pressures in the first pressure medium chamber (142) and in the second pressure medium chamber (165) are the same or approximately the same, they stabilise the second piston (153,176) in its neutral middle position between the first valve (151,153) and the second valve (164, 153);
h) the springs (146 and 158) are so dimensioned that the piston (153,176) effects a stroke against the force of the spring (146, 158 respectively) towards the pressure medium chamber (142,165 respectively) having the lower pressure when a predetermined pressure difference between the pressure in the first pressure medium chamber (142) and the pressure in the second pressure medium chamber (165) is reached or exceeded.

23. A pressure medium-operated spring arrangement according to at least one of the preceding claims, characterised by the following features:
a) the valve arrangement (6) has a housing (171, 141) in which a piston (153, 176) is arranged, sealed, so as to slide in the direction of the longitudinal axis of the housing;
b) the piston (153,176) has a first effective area pressurized by pressure medium in a first pressure medium chamber (142) and a second effective area pressurized by pressure medium in a second pressure medium chamber (165) and acting in the opposite direction to the first effective area;
c) the housing (171,141) has first tubular housing extension (148) and lying opposite this a second tubular housing extension (162);
d) the first tubular housing extension (148) extends into the first pressure medium chamber (142) and the second tubular housing extension (162) extends into the second pressure medium chamber (165);
e) the piston (153,176) is arranged between the facing sides of the two tubular housing extensions (148 and 162) and separates the first pressure medium chamber (142) from the second pressure medium chamber (165);
f) the free end of the first housing extension (148) extending towards the piston (153,176) is in the form of a valve seat (151), which with the side facing it of a part of the piston (153,176) serving as valve closure member (153) forms a first valve (151, 153), and the free end of the second housing extension (162) extending towards the piston (153,176) is in the form of a valve seat (164), which with the side facing it of a part of the piston (153,176) serving as valve closure member (153) forms a second valve (164,153);
g) the piston (153,176) serves to operate the first valve (151,153) and the second valve (164,153);
h) in the wall of the region of the first housing extension (148) that is located in the first pressure medium chamber (142) there is arranged at least one through-opening serving as first throttle (150, 173), and in the wall of the region of the second housing extension (162) that is located in the second pressure medium chamber (165) there is arranged at least one through-opening serving as second throttle (157,163).
